Europäisches Patentamt

European Patent Office

Office européen des brevets

(19)

(11) **EP 1 109 411 A1**

(12) **EUROPEAN PATENT APPLICATION**
published in accordance with Art. 158(3) EPC

(43) Date of publication:
**20.06.2001 Bulletin 2001/25**

(51) Int Cl.⁷: **H04N 9/07**

(21) Application number: **99922597.2**

(22) Date of filing: **31.05.1999**

(86) International application number:
**PCT/JP99/02887**

(87) International publication number:
**WO 99/63761 (09.12.1999 Gazette 1999/49)**

(84) Designated Contracting States:
**DE FR GB NL**

(30) Priority: **01.06.1998 JP 15127898**
**30.09.1998 JP 27716698**
**25.05.1999 JP 14547399**

(71) Applicant: **Nikon Corporation**
**Tokyo 100-8831 (JP)**

(72) Inventors:
• **ISHIGA, Kenichi, Nikon Corporation**
**Tokyo 100-8331 (JP)**
• **UTAGAWA, Ken, Nikon Corporation**
**Tokyo 100-8331 (JP)**

(74) Representative: **Walaski, Jan Filip et al**
**Venner, Shipley & Co,**
**20 Little Britain**
**London EC1A 7DH (GB)**

(54) **INTERPOLATION PROCESSOR AND RECORDING MEDIUM RECORDING INTERPOLATION PROCESSING PROGRAM**

(57) An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of the vacancies, includes: a means for similarity degree calculation that calculates similarity degrees along a plurality of directions for each interpolation target vacancy to undergo the interpolation processing by using color information corresponding to three colors, which are the first color component through the third color component; a means for similarity judgment that makes a judgment with respect to a direction manifesting pronounced similarity for the interpolation target vacancy based upon the similarity degrees along the plurality of directions calculated by the means for similarity degree calculation; and a means for interpolation quantity calculation that calculates the interpolation quantity for the interpolation target vacancy in conformance to results of the judgment made by the means for similarity judgment.

FIG.1

**Description**

INCORPORATION BY REFERENCE

The disclosures of the following priority applications are herein incorporated by reference: Japanese Patent Application No. 10-151278 filed June 1, 1998, Japanese Patent Application No. 10-227166 filed September 30, 1998, and Japanese Patent Application No. 11-145473 filed May 25, 1999.

TECHNICAL FIELD

The present invention relates to an interpolation processing apparatus that implements interpolation processing for obtaining an interpolation quantity which is equivalent to color information corresponding to a first color component for each vacancy in an image generated by an image-capturing sensor having a plurality of lattice points and a plurality of vacancies in a two-dimensional array with the lattice points each outputting color information corresponding to the first color component having a highest spatial frequency and the vacancies each outputting color information corresponding to a second color component or a third color component with a spatial frequency lower than that of the first color component without outputting color information corresponding to the first color component, and it also relates to a recording medium for recording an interpolation processing program utilized to execute the interpolation processing on a computer.

BACKGROUND ART

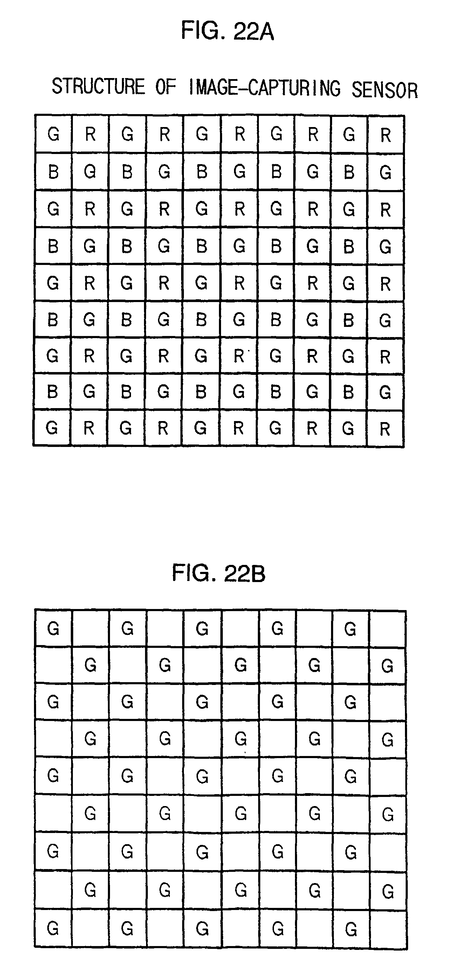

Some electronic still cameras utilize a single image-capturing sensor to generate image signals of a color image. Such an image-capturing sensor may be constituted by arranging color filters in three colors, i.e., R, G and B (red, green and blue) in a Bayer array, as illustrated in FIG. 22A. With regard to the green color (G), the image-capturing sensor can be regarded as being composed of lattice points each constituted of a pixel that outputs green color and vacancies each constituted of a pixel which does not output green color, as shown in FIG. 22B.
In this type of electronic still camera, it is necessary to implement interpolation processing in order to obtain green color information at each vacancy. For this application, an interpolation processing method in which an interpolation quantity is calculated by judging the direction along which a vacancy undergoing the interpolation processing (hereafter referred to as an interpolation target vacancy) manifests a high degree of spatial similarity and using the color information at lattice points adjacent to the interpolation target vacancy along the direction has been proposed in the prior art.
USP 5,629,734 and USP 5,652,621 each disclose a technology for calculating similarity degrees along a plurality of directions to be used when judging the direction manifesting a pronounced similarity.
For instance, if color information is provided around the interpolation target vacancy expressed as "A1, G2, A3, G4, A5" (with A1, A3 and A5 each representing color information corresponding to the same-color component as that at the interpolation target vacancy and G2 and G4 each representing color information at a lattice point), a similarity degree C of the interpolation target vacancy along the direction in which the lattice point outputting G2 and the lattice point outputting G4 is set is calculated through the following expression C-1 in the technology disclosed in USP 5,629,734, whereas the similarity degree C is calculated through expression C-2 in the technology disclosed in USP 5,652,621.

$$C=|-A1+2A3-A5|+|G2-G4| \qquad \text{expression C-1}$$

$$C=|-A1+2A3-A5|+|G2-G4|$$
$$+|-G2+2(A3+bias)-G4| \qquad \text{expression C-2}$$

with "bias" in expression C-2 representing a value satisfying

$$bias=(bias'+A1-G1)/2 \qquad \text{expression C-3,}$$

in which "bias' " represents the bias used to calculate the similarity degree of A 1 and G1 indicates the interpolation quantity ascertained through the interpolation processing implemented on A1.

## DISCLOSURE OF THE INVENTION

In the technology disclosed in USP 5,629,734, the results obtained by comparing color information corresponding to a single color component at every other pixel (hereafter referred to as same-color similarity components : correspond to |-A1 + 2A3 - A5| and |G2 - G4| in expression C -1) are added and the sum is used as the similarity degree of the interpolation target vacancy. Thus, since similarity degree in an image which changes in smaller increments than the intervals (equivalent to twice the intervals between individual pixels) over which the same-color information is provided (an image with a high spatial frequency) cannot be accurately calculated through the technology disclosed in USP 5,629,734, the judgment with regard to the direction manifesting a pronounced similarity cannot be made with a high degree of accuracy, thereby presenting a high likelihood of color artifacts (or false color).

Through the technology disclosed in USP 5,652,621, on the other hand, in which the similarity degree is calculated through expression C-2 which incorporates the results of a comparison of color information at adjacent pixels (hereafter referred to as a "different-color similarity component" : correspond to |-G2+2(A3+bias)-G4| in expression C-2) with the same-color similarity components (correspond to |-A1+2A3-A5| and |G2-G4| in expression C-2), the occurrence of color artifacts can be reduced in an image with a high spatial frequency.

However, since the results of a comparison of color information corresponding to only two colors set on a single straight line (color information corresponding to the same-color component as that at the interpolation target vacancy and color information at a lattice point) are used as a different-color similarity component in the technology disclosed in USP 5,652,621, the similarity degree cannot be calculated with accuracy in an area where the color tone changes (an image in which the ratio of the color information corresponding to the three colors changes) as in a border area in a natural image and the influence of the different-color similarity components manifests to a greater degree than the influence of the same-color similarity components even when the same-color similarity components are calculated accurately, which presents difficulty in judging the direction along which a pronounced similarity manifests with accuracy, resulting in a high likelihood of occurrence of color artifacts.

In other words, when interpolating an image which includes an image area with a high spatial frequency and an image area where the color tone changes through either of the technologies disclosed in the U.S. patent specifications mentioned above, the similarity degrees in the two image areas in the image cannot be calculated accurately, resulting in the color artifacts occurring in either image area becoming conspicuous to disrupt the harmony of the entire image.

In addition, since the different-color similarity component is calculated by using G1 (interpolation quantity at A1) and bias' (bias at A1) in the technology disclosed in USP 5,652,621, once a similarity component is calculated erroneously, the error affects similarity components to be calculated subsequently, which presents a concern that the range over which color artifacts occur may expand.

In other words, in the worst scenario, by implementing interpolation processing through the technology disclosed in USP 5,652,621, the quality of the image may even become worse.

Accordingly, an object of the present invention is to provide an interpolation processing apparatus capable of calculating an interpolation quantity with a high degree of accuracy by accurately judging the direction along which the interpolation target vacancy manifests a pronounced similarity. Another object of the present invention is to provide a recording medium in which an interpolation processing program for calculating an interpolation quantity with a high degree of accuracy by accurately judging the direction along which the interpolation target vacancy manifests a pronounced similarity is recorded.

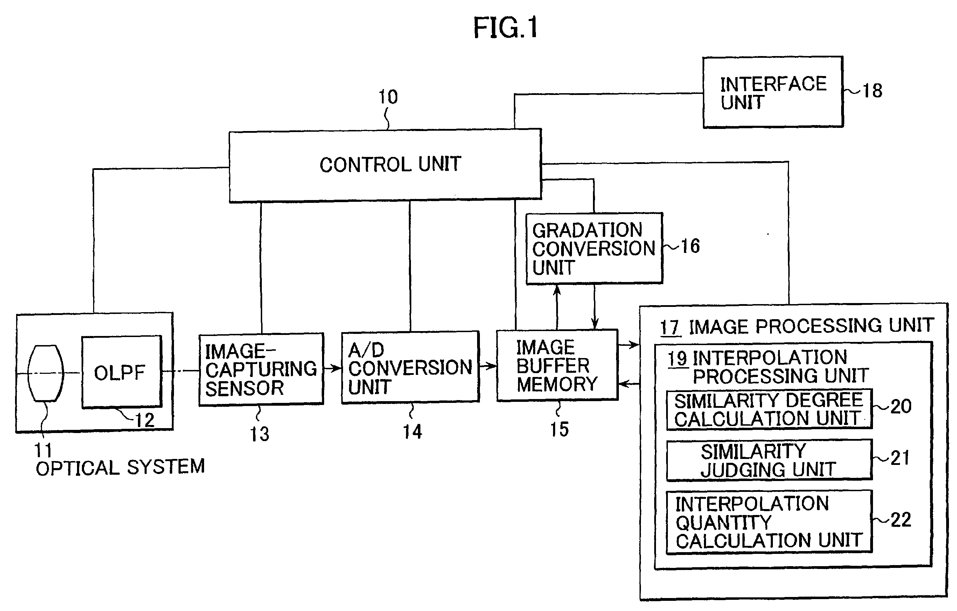

An interpolation processing apparatus according to claim 1 is characterized by comprising: a means for similarity degree calculation (corresponding to the similarity degree calculation unit 20 in FIG. 1) that calculates similarity degrees along a plurality of directions for each interpolation target vacancy to undergo the interpolation processing by using color information corresponding to three colors, which are the first color component through the third color component; a means for similarity judgment (corresponding to the similarity judging unit 21 in FIG. 1) that makes a judgment with respect to a direction manifesting pronounced similarity for the interpolation target vacancy based upon the similarity degrees along the plurality of directions calculated by the means for similarity degree calculation; and a means for interpolation quantity calculation (corresponding to an interpolation quantity calculation unit 22 in FIG. 1) that calculates the interpolation quantity for the interpolation target vacancy in conformance to results of the judgment made by the means for similarity judgment.

An interpolation processing apparatus according to claim 2 is characterized in that in the interpolation processing apparatus according to claim 1, the means for similarity degree calculation calculates two types of similarity components along each of the plurality of directions, which are a "similarity component obtained by using color information corresponding to the first color component and color information corresponding to the second color component" and a "similarity component obtained by using color information corresponding to the first color component and color information corresponding to the third color component", based upon color information corresponding to the first through third color components output from the interpolation target vacancy and lattice points and vacancies near the interpolation target vacancy, and then calculates the similarity degrees based upon the two types of similarity components.

An interpolation processing apparatus according to claim 3 is characterized in that in the interpolation processing apparatus according to claim 1, the means for similarity degree calculation calculates at least three types of similarity components along each of the plurality of directions, including (a) two types of similarity components, which are a "similarity component obtained by using color information corresponding to the first color component and color information corresponding to the second color component" and a "similarity component obtained by using color information corresponding to the first color component and color information corresponding to the third color component" and (b) at least one type of similarity component among a "similarity component obtained by using color information corresponding to the first color component alone", a "similarity component obtained by using color information corresponding to the second color component alone" and "a "similarity component obtained by using color information corresponding to the third color component alone", based upon color information corresponding to the first through third color components output from the interpolation target vacancy and lattice points and vacancies near the interpolation target vacancy, and then calculates the similarity degrees based upon the at least three types of similarity components.

An interpolation processing apparatus according to claim 4 is characterized by comprising: a means for similarity degree calculation (corresponding to the similarity degree calculation unit 20 in FIG. 1) that calculates similarity degrees along a plurality of directions for each interpolation target vacancy to undergo the interpolation processing; a means for similarity judgment (corresponding to the similarity judging unit 21 in FIG. 1) that makes a judgment with respect to a direction manifesting pronounced similarity for the interpolation target vacancy based upon the similarity degrees along the plurality of directions calculated by the means for similarity degree calculation; and a means for interpolation quantity calculation (corresponding to an interpolation quantity calculation unit 22 in FIG. 1) that calculates an interpolation quantity for the interpolation target vacancy in conformance to results of the judgment made by the means for similarity judgment, and the means for similarity degree calculation calculates at least two types of similarity components along each of the plurality of directions including (a) a "similarity component obtained by using color information at a vacancy that outputs color information corresponding to a color component different from a color component of the interpolation target vacancy and color information corresponding to the first color component" and (b) at least one type of similarity component among a "similarity component obtained by using color information corresponding to the first color component alone", a "similarity component obtained by using color information corresponding to the second color component alone" and a "similarity component obtained by using color information corresponding to the third color component alone", based upon color information corresponding to the first through third color components output from the interpolation target vacancy and lattice points and vacancies near the interpolation target vacancy, and then calculates similarity degrees based upon the at least two types of similarity components.

An interpolation processing apparatus according to claim 5 is characterized by comprising: a means for similarity degree calculation (corresponding to the similarity degree calculation unit 20 in FIG. 1) that calculates similarity degrees along a plurality of directions for each interpolation target vacancy to undergo the interpolation processing; a means for similarity judgment (corresponding to the similarity judging unit 21 in FIG. 1) that makes a judgment with respect to a direction manifesting pronounced similarity for the interpolation target vacancy based upon the similarity degrees along the plurality of directions calculated by the means for similarity degree calculation; and a means for interpolation quantity calculation (corresponding to an interpolation quantity calculation unit 22 in FIG. 1) that calculates an interpolation quantity for the interpolation target vacancy in conformance to results of the judgment made by the means for similarity judgment, and: the means for similarity degree calculation calculates at least two types of similarity components along each of the plurality of directions including (a) a "similarity component obtained by using color information output from the interpolation target vacancy and color information corresponding to the first color component" (b) at least one type of similarity component among a "similarity component obtained by using color information corresponding to the first color component alone", a "similarity component obtained by using color information corresponding to the second color component alone" and a "similarity component obtained by using color information corresponding to the third color component alone", based upon color information corresponding to the first through third color components output from the interpolation target vacancy and lattice points and vacancies near the interpolation target vacancy, and then calculates similarity degrees based upon the at least two types of similarity components; and the "similarity component obtained by using color information from the interpolation target vacancy and color information corresponding to the first color component" is calculated through "a1|G1 - A2| + a2|G3 - A2|" in which G1 and G3 represent color information at two lattice points set on a single straight line with the interpolation target vacancy located in between, A2 represents the color information at the interpolation target vacancy and al and a2 each represent a constant with at least either al or a2 not equal to 0.

An interpolation processing apparatus according to claim 6 is characterized in that in the interpolation processing apparatus according to any one of claims 2 through 5, the means for similarity degree calculation calculates the similarity degrees for the interpolation target vacancy along the plurality of directions by combining a plurality of types of similarity components obtained along each of the plurality of directions through weighted addition of similarity components performed along each direction.

An interpolation processing apparatus according to claim 7 is characterized by comprising: a means for similarity degree calculation (corresponding to the similarity degree calculation unit 20 in FIG. 1) that calculates at least two types of similarity degrees among a "similarity degree obtained by using color information corresponding to the first color component and color information corresponding to the second color component", a "similarity degree obtained by using color information corresponding to the first color component and color information corresponding to the third color component", a "similarity degree obtained by using color information corresponding to the first color component alone", a "similarity degree obtained by using color information corresponding to the second color component alone" and a "similarity degree obtained by using color information corresponding to the third color component alone" as similarity degrees along a plurality of directions manifesting at each interpolation target vacancy, based upon color information corresponding to the first through third color components output from the interpolation to undergo the interpolation processing and lattice points and vacancies near the interpolation target vacancy; a means for similarity judgment (corresponding to the similarity judging unit 21 in FIG. 1) that makes a judgment with respect to a direction manifesting pronounced similarity relative to the interpolation target vacancy by comparing, along each direction, similarity degrees of a single type among a plurality of types of similarity degrees along the plurality of directions calculated for the interpolation target vacancy by the means for similarity degree calculation, determining a direction manifesting pronounced similarity for each type of similarity degree and ascertaining a direction being in a majority of directions manifesting pronounced similarity; and a means for interpolation calculation that calculates an interpolation quantity for the interpolation target vacancy in conformance to results of the judgment made by the means for similarity judgment.

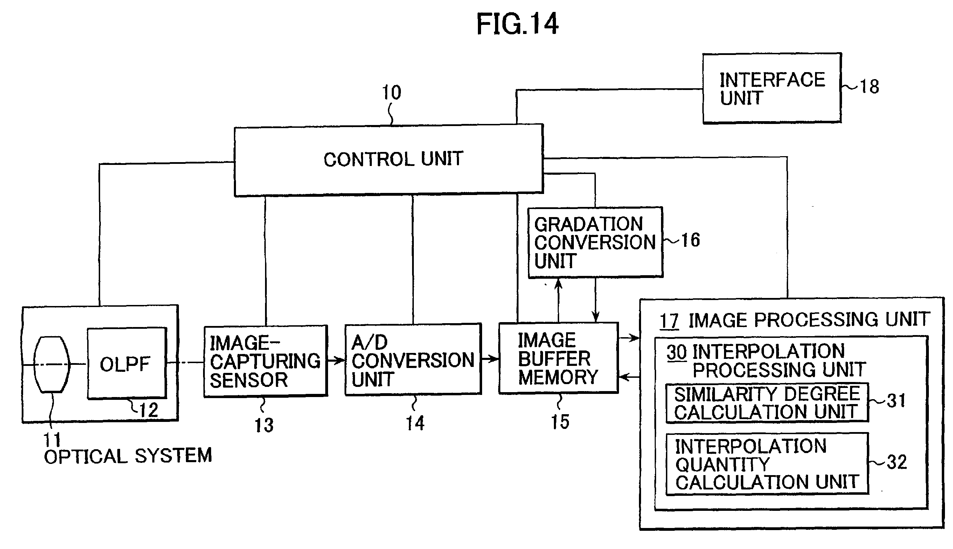

An interpolation processing apparatus according to claim 8 is characterized by comprising: a means for similarity degree calculation (corresponding to the similarity degree calculation unit 31 in FIG. 14) that calculates at least one type of similarity component among two types of similarity components, which are a "similarity component obtained by using color information from the interpolation target vacancy and color information corresponding to the first color component" and a "similarity component obtained by using color information corresponding to the first color component alone" as similarity components along a plurality of directions for the interpolation target vacancy based upon color information output from the interpolation target vacancy undergoing the interpolation processing and lattice points and vacancies near the interpolation target vacancy, and calculates similarity degrees along a plurality of directions for the interpolation target vacancy based upon the at least one type of similarity component; a means for similarity judgment (corresponding to the interpolation quantity calculation unit 32 in FIG. 14) that makes a judgment with respect to a direction manifesting pronounced similarity for the interpolation target vacancy based upon the similarity degrees along the plurality of directions calculated by the means for similarity degree calculation; and a means for interpolation quantity calculation (corresponding to an interpolation quantity calculation unit 32 in FIG. 14) that calculates an interpolation quantity for the interpolation target vacancy in conformance to results of the judgment made by the means for similarity judgment, and the means for similarity degree calculation extracts characteristics of an image over an area surrounding the interpolation target vacancy and calculates one type of similarity component selected in conformance to the characteristics among the two types of similarity components as the similarity degree, or calculates the similarity degree by calculating the two types of similarity components and performing weighted addition of the calculated two types of similarity components while adjusting a weighting ratio in correspondence to the characteristics.

An interpolation processing apparatus according to claim 9 is characterized by comprising: a means for similarity degree calculation (corresponding to the similarity degree calculation unit 31 in FIG. 14) that calculates at least one type of similarity component among two types of similarity components, which are a "similarity component obtained by using color information from the interpolation target vacancy and color information corresponding to the first color component" and a "similarity component obtained by using color information corresponding to the first color component alone" as similarity components along a plurality of directions for the interpolation target vacancy based upon color information output from the interpolation target vacancy undergoing the interpolation processing and lattice points and vacancies near the interpolation target vacancy, and calculates similarity degrees along a plurality of directions for the interpolation target vacancy based upon the at least one type of similarity component; a means for similarity judgment (corresponding to the interpolation quantity calculation unit 32 in FIG. 14) that makes a judgment with respect to a direction manifesting pronounced similarity for the interpolation target vacancy based upon the similarity degrees along the plurality of directions calculated by the means for similarity degree calculation; a means for interpolation quantity calculation (corresponding to an interpolation quantity calculation unit 32 in FIG. 14) that calculates an interpolation quantity for the interpolation target vacancy in conformance to results of the judgment made by the means for similarity judgment; and a means for interface (corresponding to the interface unit 18 in FIG. 14) that receives a first instruction indicating which of the two types of similarity components is to be calculated or a second instruction indicating a weighting rate to be used when performing weighted addition of the two types of similarity components, and the means for similarity degree calculation calculates one type of similarity component as indicated by the first instruction as the similarity degree when the first instruction has been received at the means for interface, and calculates the similarity degrees through weighted addition of the two types of similarity components implemented in response to the second instruction when the second instruction has been received at the means for interface.

An interpolation processing apparatus according to claim 10 is characterized in that in the interpolation processing apparatus according to claim 8, the means for similarity degree calculation calculates the "similarity degrees obtained by using color information from the interpolation target vacancy and color information corresponding to the first color component" when the characteristics of the image in the area around the interpolation target vacancy indicate that sets of color information from a plurality of lattice points set along a first direction among two directions intersecting at a right angle at the interpolation target vacancy are highly similar, that sets of color information from a plurality of lattice points set along a second direction among the two directions are highly similar and that the color information from lattice points set along the first direction is greatly different from the color information from lattice points set along the second direction.

An interpolation processing apparatus according to claim 11 is characterized in that in the interpolation processing apparatus according to any one of claims 1 through 10, the means for similarity degree calculation calculates values each containing a similarity component manifested at vacancies located near the interpolation target vacancy, as the similarity degrees of the interpolation target vacancy.

An interpolation processing apparatus according to claim 12 is characterized in that in the interpolation processing apparatus according to any one of claims 1 through 6 and claims 8 through 11, the means for similarity judgment makes a decision as to whether or not a difference between similarity degrees along individual directions exceeds a specific threshold value and judges that roughly equal similarity degrees manifest along the directions if the difference does not exceed the threshold value.

An interpolation processing apparatus according to claim 13 is characterized in that in the interpolation processing apparatus according to any one of claims 1 through 12, when the means for similarity judgment judges that one of the plurality of directions manifests pronounced similarity, the means for interpolation quantity calculation calculates an average of values indicated by color information from two lattice points set along the direction manifesting pronounced similarity as the interpolation quantity, whereas when the means for similarity judgment judges that similarity degrees manifested along the plurality of directions are close to each other, the means for interpolation quantity calculation ascertains an interpolation quantity through another method without calculating an average of values indicated by color information from two lattice points set along one of the plurality of directions.

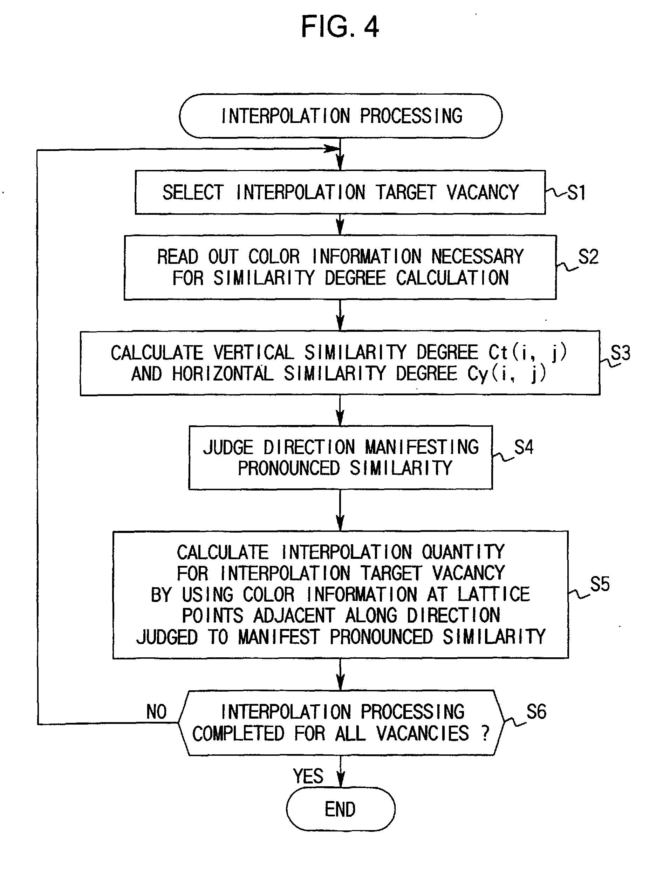

A recording medium according to claim 14 is characterized by having recorded therein an interpolation processing program that comprises: a similarity degree calculation step (corresponding to steps S2-S3 in FIG. 4) in which similarity degrees along a plurality of directions are calculated for each interpolation target vacancy to undergo the interpolation processing by using color information corresponding to three colors, which are the first color component through the third color component; a similarity judgment step (corresponding to step S4 in FIG. 4) in which a judgment is made with respect to a direction manifesting pronounced similarity for the interpolation target vacancy based upon the similarity degrees along the plurality of directions calculated in the similarity degree calculation step; and an interpolation quantity calculation step (corresponding to step S5 in FIG. 4) in which an interpolation quantity for the interpolation target vacancy is calculated in conformance to results of the judgment made in the similarity judgment step.

A recording medium according to claim 15 is characterized by having recorded therein an interpolation processing program that comprises: a similarity degree calculation step (corresponding to steps S2-S3 in FIG. 4) in which similarity degrees along a plurality of directions are calculated for each interpolation target vacancy to undergo the interpolation processing; a similarity judgment step (corresponding to step S4 in FIG. 4) in which a judgment is made with respect to a direction manifesting pronounced similarity for the interpolation target vacancy based upon the similarity degrees along the plurality of directions calculated by the similarity degree calculation step; and an interpolation quantity calculation step (corresponding to step S5 in FIG. 4) in which an interpolation quantity for the interpolation target vacancy is calculated in conformance to results of the judgment made in the similarity judgment step, and in the similarity degree calculation step, at least two types of similarity components are calculated along the plurality of directions including (a) a "similarity component obtained by using color information at a vacancy that outputs color information corresponding to a color component different from the color component of the interpolation target vacancy and color information corresponding to the first color component" and (b) at least one type of similarity component among a "similarity component obtained by using color information corresponding to the first color component alone", a "similarity component obtained by using color information corresponding to the second color component alone" and a "similarity component obtained by using color information corresponding to the third color component alone", based upon color information corresponding to the first through third color components output from the interpolation target vacancy and lattice points and vacancies near the interpolation target vacancy, and then the similarity degrees are calculated based upon the at least two types of similarity components.

A recording medium according to claim 16 is characterized by having recorded therein an interpolation processing program that comprises: a similarity degree calculation step (corresponding to steps S2-S3 in FIG. 4) in which similarity degrees along a plurality of directions are calculated for each interpolation target vacancy to undergo the interpolation processing; a similarity judgment step (corresponding to step S4 in FIG. 4) in which a judgment is made with respect to a direction manifesting pronounced similarity for the interpolation target vacancy based upon the similarity degrees along the plurality of directions calculated by the similarity degree calculation step; and an interpolation quantity calculation step (corresponding to step S5 in FIG. 4) in which an interpolation quantity for the interpolation target vacancy is calculated in conformance to results of the judgment made in the similarity judgment step, and: in the similarity degree calculation step at least two types of similarity components are calculated along the plurality of directions including (a) a "similarity component obtained by using color information output from the interpolation target vacancy and color information corresponding to the first color component" and (b) at least one type of similarity component among a "similarity component obtained by using color information corresponding to the first color component alone", a "similarity component obtained by using color information corresponding to the second color component alone" and a "similarity component obtained by using color information corresponding to the third color component alone", based upon color information corresponding to the first through third color components output from the interpolation target vacancy and lattice points and vacancies near the interpolation target vacancy, and then the similarity degrees are calculated based upon the at least two types of similarity components; and the "similarity component obtained by using color information from the interpolation target vacancy and color information corresponding to the first color component" calculated through "a1|G1 - A2| + a2|G3 - A2|" in which G1 and G3 represent color information at two lattice points set on a single straight line with the interpolation target vacancy located in between, A2 represents color information at the interpolation target vacancy and a1 and a2 each represent a constant with at least either al or a2 not equal to 0.

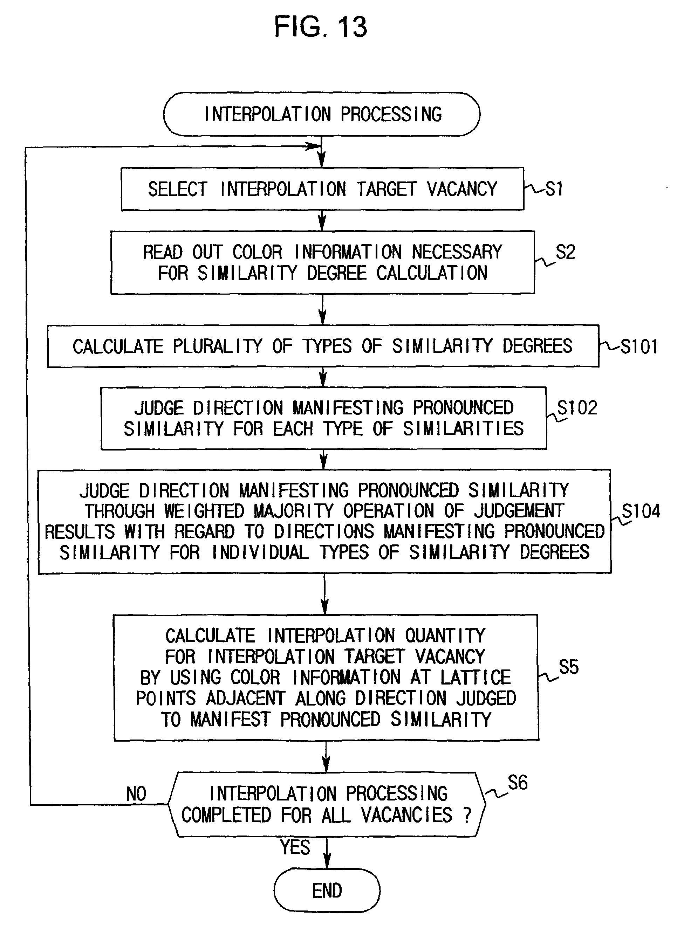

A recording medium according to claim 17 is characterized by having recorded therein an interpolation processing program that comprises: a similarity degree calculation step (corresponding to steps S2-S101 in FIG. 13) in which at least two types of similarity degrees among a "similarity degree obtained by using color information corresponding to the first color component and color information corresponding to the second color component", a "similarity degree obtained by using color information corresponding to the first color component and color information corresponding to the third color component", a "similarity degree obtained by using color information corresponding to the first color component alone", a "similarity degree obtained by using color information corresponding to the second color component alone" and a "similarity degree obtained by using color information corresponding to the third color component alone" are calculated as similarity degrees along a plurality of directions manifesting at each interpolation target vacancy based upon color information corresponding to the first through third color components output from the interpolation target vacancy to undergo the interpolation processing and lattice points and vacancies near the interpolation target vacancy; a similarity judgment step (corresponding to steps S102-S103 in FIG. 13) in which a judgment is made with respect to a direction manifesting pronounced similarity relative to the interpolation target vacancy by comparing, along each direction, similarity degrees of a single type among a plurality of types of similarity degrees calculated along the plurality of directions for the interpolation target vacancy in the similarity degree calculation step, determining a direction manifesting pronounced similarity for each type of similarity degree and ascertaining a direction being in a majority of directions manifesting pronounced similarity; and an interpolation quantity calculation step (corresponding to step S5 in FIG. 13) in which an interpolation quantity for the interpolation target vacancy is calculated in conformance to results of judgment made in the similarity judgment step.

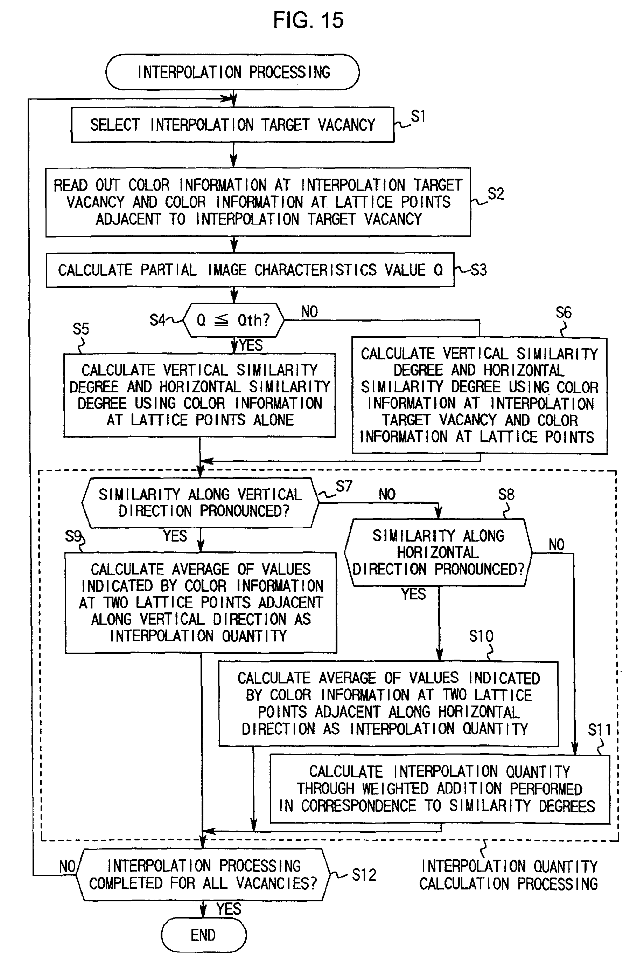

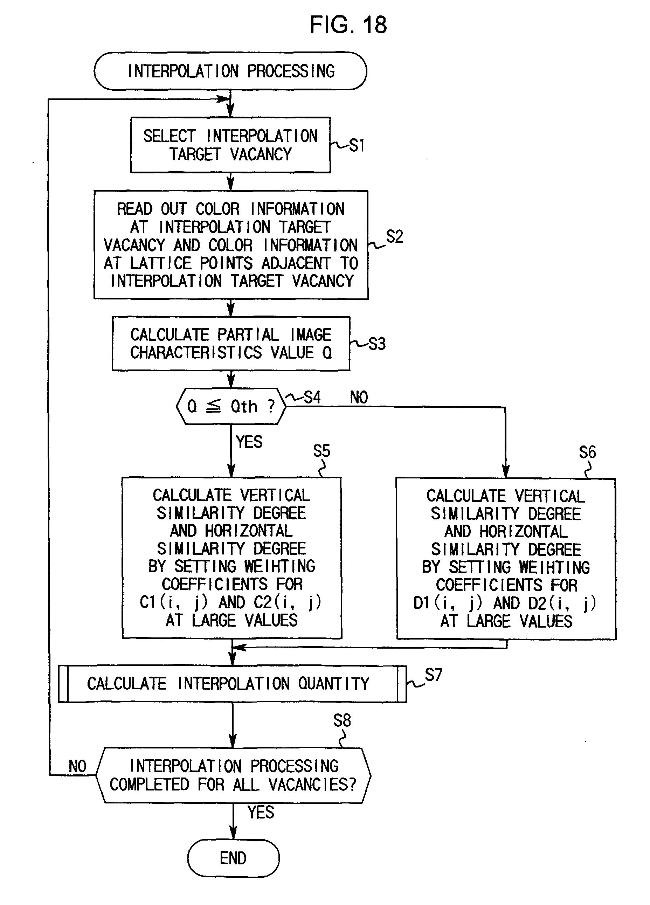

A recording medium according to claim 18 is characterized by having recorded therein an interpolation processing program that comprises: a similarity degree calculation step (corresponding to step S5 or S6 in FIG. 15 or steps S5-S6 in FIG. 18) in which at least one type of similarity components among two types of similarity components, which are a "similarity component obtained by using color information from an interpolation target vacancy and color information corresponding to the first color component" and a "similarity component obtained by using color information corresponding to the first color component alone" is calculated as similarity components along a plurality of directions for the interpolation target vacancy based upon color information output from the interpolation target vacancy undergoing the interpolation processing and lattice points and vacancies set near the interpolation target vacancy, and similarity degrees along a plurality of directions for the interpolation target vacancy are calculated based upon the at least one type of similarity components; a similarity judgment step (corresponding to steps S7-S8 in FIG. 15 or step S7 in FIG. 18) in which a judgment is made with respect to a direction manifesting pronounced similarity for the interpolation target vacancy is judged based upon the similarity degrees along the plurality of directions calculated in the similarity degree calculation step; and an interpolation quantity calculation step (corresponding to steps S9-S11 in FIG. 15 or step S7 in FIG. 18) in which an interpolation quantity for the interpolation target vacancy is calculated in conformance to results of the judgment made in the similarity judgment step, and in the similarity degree calculation step, characteristics of an image over an area surrounding the interpolation target vacancy is extracted, and one type of similarity component selected in conformance to the characteristics among the two types of similarity components is calculated as the similarity degrees, or the similarity degrees are calculated by calculating two types of similarity degrees and performing weighted addition of the two types of similarity components while adjusting a weighting ratio in correspondence to the characteristics.

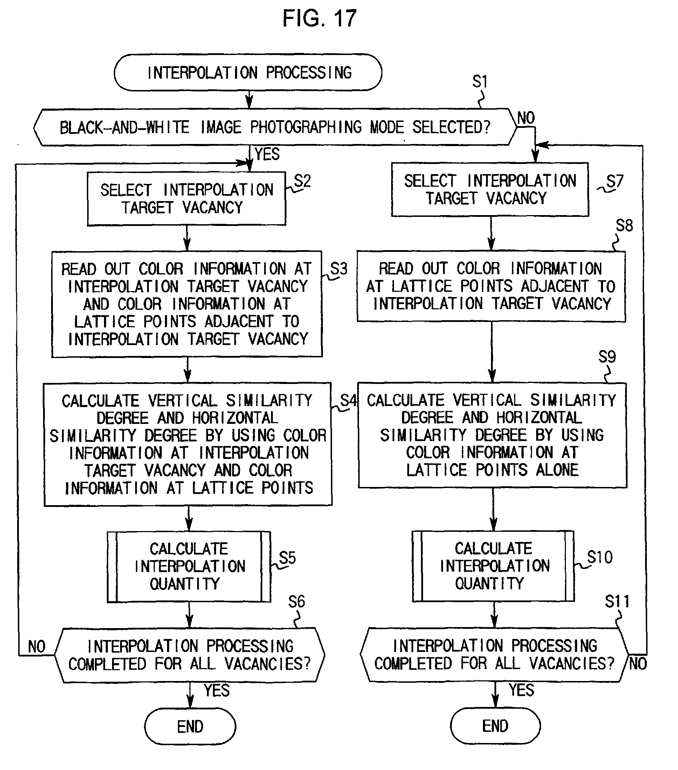

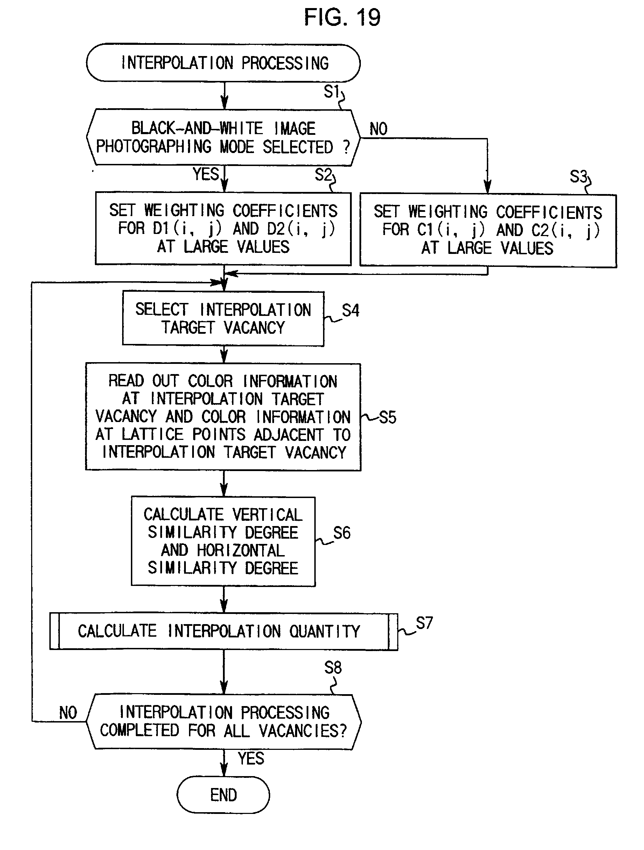

A recording medium according to claim 19 is characterized by having recorded therein an interpolation processing program that comprises: a similarity degree calculation step (corresponding to steps S3-S4 or S8-S9 in FIG. 17 or steps S5-S6 in FIG. 19) in which at least one type of similarity components among two types of similarity components, which are a "similarity component obtained by using color information from the interpolation target vacancy and color information corresponding to the first color component" and a "similarity component obtained by using color information corresponding to the first color component alone" is calculated as similarity components along a plurality of directions for the interpolation target vacancy based upon color information output from the interpolation target vacancy undergoing the interpolation processing and lattice points and vacancies set near the interpolation target vacancy, and similarity degrees along a plurality of directions for the interpolation target vacancy are calculated based upon the at least one type of similarity components; a similarity judgment step (corresponding to step S5 or S10 in FIG. 17 or step S 7 FIG. 19) in which a judgment is made with respect to a direction manifesting pronounced similarity for the interpolation target vacancy is judged based upon the similarity degrees along the plurality of directions calculated in the similarity degree calculation step; and an interpolation quantity calculation step (corresponding to step S5 or S10 in FIG. 17 or step S7 in FIG. 19) in which an interpolation quantity for the interpolation target vacancy is calculated in conformance to results of the judgment made in the similarity judgment step; and an interface step (corresponding to step S1 in FIG. 17 or S1 in FIG. 19) in which a first instruction indicating which of the two types of similarity components is to be calculated is received or a second instruction indicating a weighting rate to be used when performing weighted addition of the two types of similarity components is received, and in the similarity degree calculation step, one type of similarity component is calculated as indicated by the first instruction as the similarity degrees when the first instruction has been received in the interface step, and the similarity degrees are calculated through weighted addition of the two types of similarity components implemented in response to the second instruction when the second instruction has been received in the interface step.

It is to be noted that when color information corresponding to the second color component is output from the interpolation target vacancy, the "similarity components calculated by using color information corresponding to the first color component and color information corresponding to the second color component" as referred to in claims 2 and 3 and the "similarity degrees calculated by using color information corresponding to the first color component and color information corresponding to the second color component" as referred to in claims 7 and 17 both correspond to first similarity components ($Ct^{(1)}(i,j)$, $Cy^{(1)}(i,j)$) to be detailed later, and that the "similarity component obtained by using color information at the interpolation target vacancy and color information corresponding to the first color component" as referred to in claims 5 and 16 corresponds to $Ct^{(1)}(i,j)$ containing at least the value of $Ct^{(1-1)}(i,j)$ or $Cy^{(1)}(i,j)$ containing at least the value of $Cy^{(1-1)}(i,j)$ among the first similarity component ($Ct^{(1)}(i,j)$, $Cy^{(1)}(i,j)$) to be detailed later.

In addition, when color information corresponding to the second color component is output from the interpolation target vacancy, the "similarity components calculated by using color information corresponding to the first color component and color information corresponding to the third color component" as referred to in claims 2 and 3, the "similarity components calculated by using color information from a vacancy which outputs information corresponding to a color component other than the color component of the interpolation target vacancy and color information corresponding to the first color component" as referred to in claims 4 and 15 and the "similarity degrees calculated by using color information corresponding to the first color component and color information corresponding to the third color component" as referred to in claims 7 and 17 all correspond to second similarity components ($Ct^{(2)}(i,j)$, $Cy^{(2)}(i,j)$) to be detailed later.

When color information corresponding to the second color component is output from the interpolation target vacancy, the "similarity components calculated by using color information corresponding to the first color component alone" as referred to in claims 3, 4, 5, 15 and 16 and the "similarity degrees calculated by using color information corresponding to the first color component alone" as referred to in claims 7 and 17 both correspond to third similarity components" ($Ct^{(3)}(i,j)$, $Cy^{(3)}(i,j)$) to be detailed later.

Furthermore, when color information corresponding to the second color component is output from the interpolation target vacancy, the "similarity components calculated by using color information corresponding to the third color component alone" as referred to in claims 3, 4, 5, 15 and 16 and the "similarity degrees calculated by using color information corresponding to the third color component alone" as referred to in claims 7 and 17 both correspond to fourth similarity components" ($Ct^{(4)}(i,j)$, $Cy^{(4)}(i,j)$) to be detailed later.

Furthermore, when color information corresponding to the second color component is output from the interpolation target vacancy, the "similarity components calculated by using color information corresponding to the second color component alone" as referred to in claims 3, 4, 5, 15 and 16 and the "similarity degrees calculated by using color information corresponding to the second color component alone" as referred to in claims 7 and 17 both correspond to fifth similarity components" ($Ct^{(5)}(i,j)$, $Cy^{(5)}(i,j)$) to be detailed later.

The "similarity components calculated by using color information corresponding to the first color component alone" as referred to in claims 8, 9, 18 and 19 correspond to C1(i,j) and C2(i,j) to be detailed later.

In addition, the "similarity components calculated by using color information at the interpolation target vacancy and color information corresponding to the first color component" as referred to in claims 8 through 10, 18 and 19 correspond to D1(i,j) and D2(i,j) to be detailed later.

Moreover, the similarity degrees obtained according to the invention disclosed in claim 11 correspond to similarity degrees constituted of the individual similarity components obtained through expression t1-3 , expression t2-2, expression t3-2, expression t4-2 and expression t5-2 to be detailed later or similarity degrees constituted of the values calculated through expressions 15, 16, 23 and 24.

As described above, accurate interpolation processing is achieved according to the invention as disclosed in claims 1 through 19.

In particular, according to the invention as disclosed in claims 1 through 3 and claim 14, similarity degrees along a plurality of directions are calculated by using color information corresponding to the three colors and, as a result, similarity can be judged with a high degree of accuracy even when the color tone changes in the image (the ratio of color information corresponding to the three colors in the image changes). In addition, since similarity degrees can be calculated by using color information at the interpolation target vacancy and color information at lattice points or vacancies adjacent to the interpolation target vacancy as the color information corresponding to the three colors in the invention as disclosed in claims 1 through 3 and claim 14, similarity can be judged with a high degree of accuracy even when the spatial frequency in the image is high. Thus, according to the invention as disclosed in claims 1 through 3 and claim 14, even when the image undergoing the interpolation processing contains both "a portion over which the color tone changes" and "a portion with a high spatial frequency", highly accurate interpolation processing is achieved while sustaining harmony for the entire image.

Since a similarity degree is calculated by using color information at a vacancy which outputs information corresponding to a color component other than the color component at the interpolation target vacancy in the invention as disclosed in claims 4 and 15, similarity manifesting in an image in which color artifacts occur through the interpolation processing in the prior art can be judged with a high degree of accuracy to achieve an improvement in the accuracy of the interpolation processing.

Furthermore, since the interpolation quantities at other vacancies are not used to calculate similarity degrees in the invention as disclosed in claims 5 and 16, the range over which color artifacts occur does not expand even if color artifacts should occur through the interpolation processing, thereby achieving an improvement in the accuracy of the interpolation processing over that achieved in the prior art.

According to the invention as disclosed in claims 8 and 18, a method of similarity degree calculation is selected in correspondence to the characteristics of the image in the vicinity of the interpolation target vacancy so that highly accurate interpolation processing is achieved while sustaining the harmony of the overall image. Moreover, according to the invention as disclosed in claims 8 and 18, since the weighting coefficient used for the weighted addition of two types of similarity components can be determined in correspondence to the characteristics of the image in the vicinity of the interpolation target vacancy, interpolation processing can be implemented with a high degree of accuracy while sustaining the harmony of the overall image.

In addition, according to the invention as disclosed in claims 9 and 19, in which a decision is made as to which of two types of similarity components is to be used as a similarity degree or a decision is made with regard to the weighting coefficient to be used for the weighted addition of the two types of similarity components, in conformance to an external instruction, the degree of accuracy of the interpolation processing is improved.

Furthermore, according to the invention as disclosed in claim 11, the similarity degree for the interpolation target vacancy can be calculated by taking into consideration the continuity along the direction manifesting a pronounced similarity between the interpolation target vacancy and its peripheral area, to achieve an improvement in the accuracy of the interpolation processing.

Moreover, since the occurrence of erroneous judgment made with regard to similarity, attributable to noise and the like can be reduced according to the invention as disclosed in claim 12, an improvement in the accuracy of the interpolation processing is achieved.

BRIEF DESCRIPTION OF THE DRAWINGS

FIG. 1 is a functional block diagram of the electronic still camera corresponding to first through sixth embodiments;
FIG. 2 shows color information at lattice points and interpolation quantities at vacancies;
FIG. 3 is a flowchart of the operation performed in the electronic still camera;
FIG. 4 is a flowchart of the interpolation processing operation performed in the first through fifth embodiments;
FIGS. 5A ~ 5F present color information used to calculate first through fifth similarity components;
FIGS. 6A and 6B present examples of images;
FIG. 7 is a conceptual diagram of the color artifact reduction effect achieved by using the first ~ fifth similarity components;

FIGS. 8A and 8B present an example (part 1) in which color information in the surrounding area is used to calculate similarity components along the vertical direction;

FIGS. 9A and 9B present the example (part 2) in which color information in the surrounding area is used to calculate similarity components along the vertical direction;

FIG. 10 present the example (part 3) in which color information in the surrounding area is used to calculate similarity components along the vertical direction;

FIGS. 11A ~ 11C illustrate the calculation of similarity components in black-and-white Nyquist stripes;

FIGS. 12A ~ 12C illustrate the calculation of similarity components in cyan vertical stripes;

FIG. 13 is a flowchart of the interpolation processing operation achieved in the sixth embodiment;

FIG. 14 is a functional block diagram of the electronic still camera corresponding to seventh through tenth embodiments;

FIG. 15 is a flowchart of the interpolation processing operation achieved in the seventh embodiment;

FIG. 16 presents an f(x) graph;

FIG. 17 is a flowchart of the interpolation processing operation achieved in the eighth embodiment;

FIG. 18 is a flowchart of the interpolation processing operation achieved in the ninth embodiment;

FIG. 19 is a flowchart of the interpolation processing operation achieved in the tenth embodiment;

FIG. 20 is a functional block diagram of an eleventh embodiment;

FIG. 21 is a flowchart of the operation achieved in the eleventh embodiment; and

FIGS. 22A and 22B illustrate the structure of the image-capturing sensor.

## THE BEST MODE FOR CARRYING OUT THE INVENTION

The following is a detailed explanation of the preferred embodiments of the present invention, given in reference to the drawings.

It is to be noted that an explanation is given on the embodiments on an example in which the interpolation processing apparatus according to the present invention is adopted in an electronic still camera. In addition, in the individual embodiments to be detailed later, pixels outputting green color information are referred to as lattice points and pixels each outputting either red color information or blue color information are referred to as green color vacancies. In other words, in the interpolation processing in the embodiments to be detailed later, interpolation quantities corresponding to the green color information at these vacancies are calculated. Furthermore, in the individual embodiments, similarity degrees along the vertical direction and the horizontal direction are calculated as the similarity degrees along a plurality of directions to be used in the interpolation processing.

FIG. 1 is a functional block diagram of the electronic still camera corresponding to the first through sixth embodiments.

In FIG. 1, a control unit 10 is connected with an optical system 11, an OLPF (optical low pass filter) 12, an image-capturing sensor 13, an A/D conversion unit 14, an image buffer memory 15, a gradation conversion unit 16, an image processing unit 17 and an interface unit 18.

The image processing unit 17 is provided with an interpolation processing unit 19 which comprises a similarity degree calculation unit 20, a similarity judging unit 21 and an interpolation quantity calculation unit 22.

An optical image obtained at the optical system 11 is filtered at the 0LPF 12 and is provided to the image-capturing sensor 13.

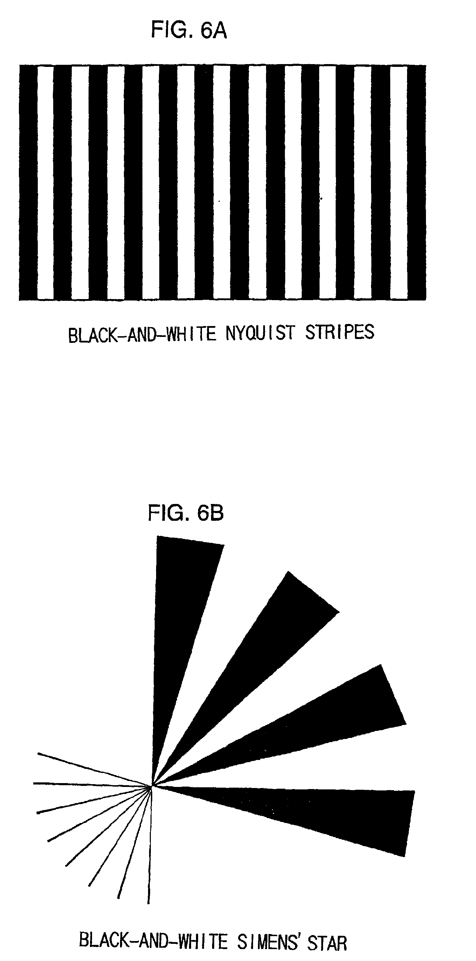

It is to be noted that since the present invention is implemented on the premise that optical low pass filtering is implemented to a degree at which images such as black-and-white Nyquist stripes (see FIG. 6A) and the like do not dissipate, the OLPF 12 may be omitted and the optical image obtained at the optical system 11 may be directly provided to the image-capturing sensor 13.

The output of the image-capturing sensor 13 is connected to the A/D conversion unit 14, and the output of the A/D conversion unit 14 is connected to the image buffer memory 15. In addition, the output of the image buffer memory 15 is connected to the gradation conversion unit 16 and the image processing unit 17, with the output of the gradation conversion unit 16 and the output of the image processing unit 17 connected to the image buffer memory 15.

It is to be noted that in the individual embodiments to be detailed later, the image-capturing sensor 13 is constituted by providing color filters in three colors, i.e., R, G and B arranged in a Bayer array, as illustrated in FIG. 22A, with the image buffer memory 15 constituted of three areas corresponding to the three colors.

In addition, the area corresponding to green color in the image buffer memory 15 is constituted of an area in which green color image data generated at the A/D conversion unit 14 or green color image data resulting from gradation conversion (logarithm conversion, $\gamma$ conversion and the like) performed at the gradation conversion unit 16 are stored as color information at lattice points and an area in which green color image data obtained through the interpolation processing to be explained later are stored as interpolation quantities for vacancies.

In order to facilitate the subsequent explanation, the position of each pixel at the image-capturing sensor 13 is expressed as a coordinate position in a coordinate system constituted of a "horizontal axis X with the rightward direction representing the positive direction" and a "vertical axis Y with the downward direction representing the positive direction". The color information at a lattice point is indicated as G(x,y) and the interpolation quantity at a vacancy is indicated as G'(x,y).

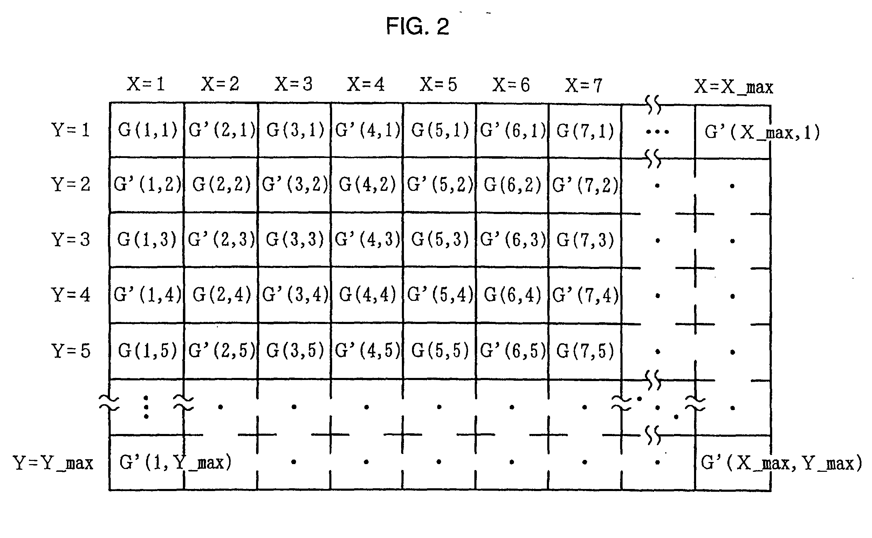

FIG. 2 shows the color information at the lattice points and the interpolation quantities at the vacancies in such a structure

In the figure, X_max represents the X component maximum value and Y_max represents the Y component maximum value.

In addition, the coordinates of an interpolation target vacancy is indicated as (i,j) in the embodiments.

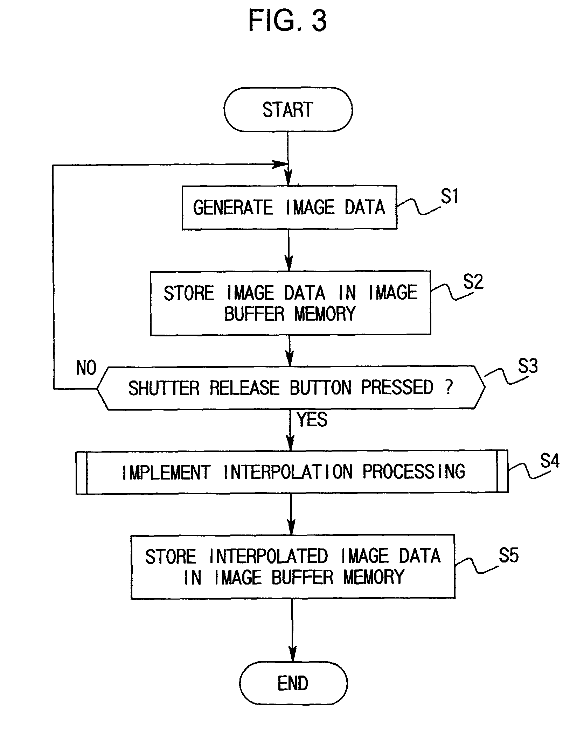

FIG. 3 is a flowchart of the operation performed in the electronic still camera.

FIG. 4 is a flowchart of the interpolation processing operation achieved in the first through fifth embodiments.

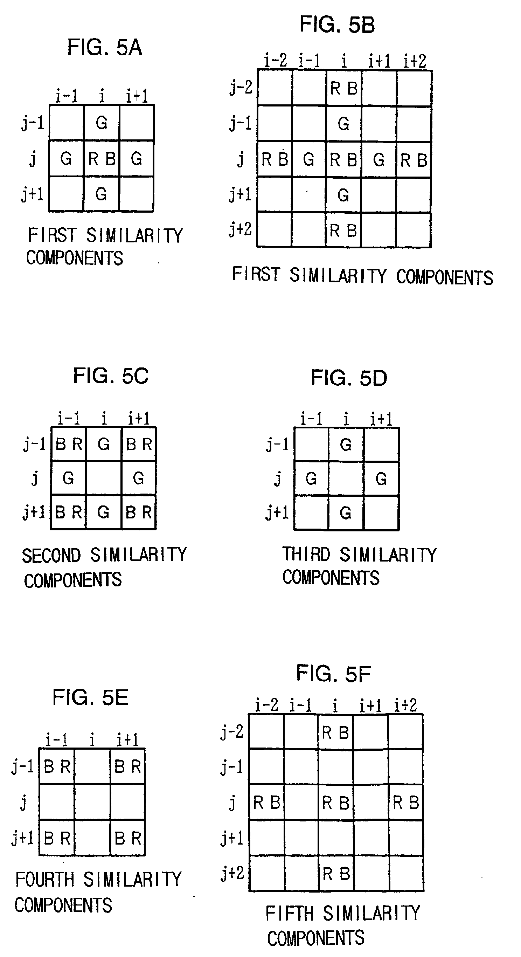

FIGS. 5A ~ 5F shows the color information used to calculate first ~ fifth similarity components (a plurality of types of similarity components) in the first through fifth embodiments.

It is to be noted that in FIGS. 5A ~ 5F RB indicates "R or B" and that BR indicates "B or R. " In other words, when RB represents R, BR represents B, whereas when RB represents B, BR represents R.

Now, in order to facilitate the explanation of the first through fifth embodiments, the method through which the similarity degree calculation unit 20 calculates the first through fifth similarity components (a plurality of types of similarity components) is explained. It is to be noted that in the following explanation, the color information at vacancies and lattice points is indicated as RB(i,j) and G(i,j-1) and so forth in correspondence to the individual coordinate positions.

First, a first similarity component $Ct^{(1)}(i,j)$ along the vertical direction and a first similarity component $Cy^{(1)}(i, j)$ along the horizontal direction of the interpolation target vacancy are calculated by using the following expressions t1 and y1, based upon the color information presented in FIG. 5A.

$$Ct^{(1)}(i,j)=a_1^{(1)}Ct^{(1-1)}(i,j)+a_2^{(1)}Ct^{(1-2)}(i,j) \qquad \text{expression t1}$$

$$Cy^{(1)}(i,j)=b_1^{(1)}Cy^{(1-1)}(i,j)+b_2^{(1)}Cy^{(1-2)}(i,j) \qquad \text{expression y1}$$

In expressions t1 and y1 , $a_1^{(1)}$, $a_2^{(1)}$, $b_1^{(1)}$ and $b_2^{(1)}$ are all constants within a range of 0 ~ 1 satisfying $a_1^{(1)} + a_2^{(1)} = b_1^{(1)} + b_2^{(1)} = 1$, and under normal circumstances, they are values that satisfy $a_1^{(1)} = b_1^{(1)}$ and $a_2^{(1)} = b_2^{(1)}$. It is recommended that they be set to satisfy $a_1^{(1)} = b_1^{(1)} = 1$ and $a_2^{(1)} = b_2^{(1)} = 0$ in the embodiments to be detailed later. It is to be noted that they may be values satisfying $a_1^{(1)} = b_1^{(1)} = 0$ and $a_2^{(1)} = b_2^{(1)} = 1$ or values satisfying $a_1^{(1)} = b_1^{(1)} = a_2^{(1)} = b_2^{(1)} = 1/2$, instead.

In addition, in expressions t1 and y1, $Ct^{(1-1)}(i,j)$ and $Cy^{(1-1)}(i,j)$ are values respectively satisfying

$$Ct^{(1-1)}(i,j) = t^{(1-1)}|G(i,j-1)-RB(i,j)|$$
$$+(1-t^{(1-1)})|(G(i,j+1)-RB(i,j)|$$

$$Cy^{(1-1)}(i,j) = y^{(1-1)}|G(i-1,j)-RB(i,j)|$$
$$+(1-y^{(1-1)})|G(i+1,j)-RB(i,j)|,$$

with $t^{(1-1)}$ and $y^{(1-1)}$ each representing a constant within a range of 0 ~ 1.

For instance, when $t^{(1-1)} = y^{(1-1)} = 1/2$,

$$Ct^{(1-1)}(i,j) = (|G(i,j-1)-RB(i,j)|+|G(i,j+1)-RB(i,j)|)/2$$

$$Cy^{(1-1)}(i,j)=(|G(i-1,j)-RB(i,j)|+|G(i+1,j)-RB(i,j)|)/2.$$

Also, in expressions t1 and y1, $Ct^{(1-2)}(i,j)$ and $Cy^{(1-2)}(i,j)$ are values respectively satisfying

$$Ct^{(1-2)}(i,j)=|(u^{(1-2)}G(i,j-1)+(1-u^{(1-2)})G(i,j+1))$$

$$-RB(i,j)|$$

$$Cy^{(1-2)}(i,j)=|(v^{(1-2)}G(i-1,j)+(1-v^{(1-2)})G(i+1,j))$$

$$-RB(i,j)|,$$

with $u^{(1-2)}$ and $v^{(1-2)}$ each representing a constant within a range of 0 ~ 1.

For instance, when $u^{(1-2)} = v^{(1-2)} = 1/2$,

$$Ct^{(1-2)}(i,j)=|(G(i,j-1)+G(i,j+1))/2-RB(i,j)|$$

$$Cy^{(1-2)}(i,j)=|(G(i-1,j)+G(i+1,j))/2-RB(i,j)|$$

It is to be noted that the first similarity component $Ct^{(1)}(i,j)$ along the vertical direction and the first similarity component $Cy^{(1)}(i,j)$ along the horizontal direction may be calculated through the following expressions t1-2 and y1-2 based upon the color information presented in FIG. 5B instead of the color information in FIG. 5A.

$$Ct^{(1)}(i,j)= a_1^{(1)}Ct^{(1-1)}(i,j)+a_2^{(1)}Ct^{(1-2)}(i,j)+$$

$$a_3^{(1)}Ct^{(1-3)}(i,j) \qquad\qquad \text{expression t1-2}$$

$$Cy^{(1)}(i,j) = b_1^{(1)}Cy^{(1-1)}(i,j)+b_2^{(1)}Cy^{(1-2)}(i,j)+$$

$$b_3^{(1)}Cy^{(1-3)}(i,j) \qquad\qquad \text{expression y1-2}$$

In expressions t1-2 and y1-2, $a_1^{(1)}$, $a_2^{(1)}$, $a_3^{(1)}$, $b_1^{(1)}$, $b_2^{(1)}$ and $b_3^{(1)}$ all constants within a range of 0 ~ 1 that satisfy $a_1^{(1)} + a_2^{(1)} + a_3^{(1)} = b_1^{(1)} + b_2^{(1)} + b_3^{(1)} = 1$, and under normal circumstances, they are values that satisfy $a_1^{(1)} = b_1^{(1)}$, $a_2^{(1)} = b_2^{(1)}$ and $a_3^{(1)} = b_3^{(1)}$.

In addition, in expressions t1-2 and y1-2, $Ct^{(1-1)}(i,j)$, $Cy^{(1-1)}(i,j)$, $Ct^{(1-2)}(i,j)$ and $Cy^{(1-2)}(i,j)$ are calculated in a manner similar to that in which the values are calculated through expressions tl and yl as explained earlier.

Furthermore, in expressions t1-2 and y1-2, $Ct^{(1-3)}(i,j)$ and $Cy^{(1-3)}(i,j)$ are values respectively satisfying

$$Ct^{(1-3)}(i,j)= t^{(1-3)}|G(i,j-1)-RB(i,j-2)|$$

$$+(1-t^{(1-3)})|G(i,j+1)-RB(i,j+2)|$$

$$Cy^{(1-3)}(i,j)= y^{(1-3)}|G(i-1,j)-RB(i-2,j)|$$

$$+(1-y^{(1-3)})|G(i+1,j)-RB(i+2,j)|,$$

with $t^{(1-3)}$ and $y^{(1-3)}$ each representing a constant within a range of 0 - 1.

Next, a second similarity component $Ct^{(2)}(i,j)$ along the vertical direction and a second similarity component $Cy^{(2)}(i,j)$ along the horizontal direction of the interpolation target vacancy are calculated by using the following expressions t2 and y2, based upon the color information presented in FIG. 5C.

$$Ct^{(2)}(i,j)=a_1^{(2)}Ct^{(2-1)}(i,j)+a_2^{(2)}Ct^{(2-2)}(i,j) \qquad\qquad \text{expression t2}$$

$$Cy^{(2)}(i,j)=b_1^{(2)}Cy^{(2-1)}(i,j)+b_2^{(2)}Cy^{(2-2)}(i,j) \qquad \text{expression y2}$$

In expressions t2 and y2, $a_1^{(2)}$, $a_2^{(2)}$, $b_1^{(2)}$ and $b_2^{(2)}$ are each a constant within a range of 0 ~ 1 which satisfies $a_1^{(2)} + a_2^{(2)} = b_1^{(2)} + b_2^{(2)} = 1$, and under normal circumstances, they are values that satisfy $a_1^{(2)} = b_1^{(2)}$ and $a_2^{(2)} = b_2^{(2)}$. It is recommended that they be set to satisfy $a_1^{(2)} = b_1^{(2)} = 1$ and $a_2^{(2)} = b_2^{(2)} = 0$ in the embodiments to be detailed later. It is to be noted that they may be values satisfying $a_1^{(2)} = b_1^{(2)} = 0$ and $a_2^{(2)} = b_2^{(2)} = 1$ or values satisfying $a_1^{(2)} = b_1^{(2)} = a_2^{(2)} = b_2^{(2)} = 1/2$, instead.

In addition, in expressions t2 and y2, $Ct^{(2-1)}(i,j)$ $Cy^{(2-1)}(i,j)$ are values respectively satisfying

$$Ct^{(2-1)}(i,j) = t_1^{(2-1)}|BR(i-1,j-1)-G(i-1,j)|$$

$$+t_2^{(2-1)}|BR(i-1,j+1)-G(i-1,j)|$$

$$+t_3^{(2-1)}|BR(i+1,j-1)-G(i+1,j)|$$

$$+t_4^{(2-1)}|BR(i+1,j+1)-G(i+1,j)|$$

$$Cy^{(2-1)}(i,j) = y_1^{(2-1)}|BR(i-1,j-1)-G(i,j-1)|$$

$$+y_2^{(2-1)}|BR(i+1,j-1)-G(i,j-1)|$$

$$+y_3^{(2-1)}|BR(i-1,j+1)-G(i,j+1)|$$

$$+y_4^{(2-1)}|BR(i+1,j+1)-G(i,j+1)|,$$

with $t_1^{(2-1)}$, $t_2^{(2-1)}$, $t_3^{(2-1)}$, $t_4^{(2-1)}$, $y_1^{(2-1)}$, $y_2^{(2-1)}$, $y_3^{(2-1)}$ and $y_4^{(2-1)}$ all representing constants within a range of 0 ~ 1, satisfying $t_1^{(2-1)} + t_2^{(2-1)} + t_3^{(2-1)} + t_4^{(2-1)} = y_1^{(2-1)} + y_2^{(2-1)} + y_3^{(2-1)} + y_4^{(2-1)} = 1$.

For instance, when $t_1^{(2-1)} = t_2^{(2-1)} = t_3^{(2-1)} = t_4^{(2-1)} = y_1^{(2-1)} = y_2^{(2-1)} = y_3^{(2-1)} = y_4^{(2-1)} = 1/4$,

$$Ct^{(2-1)}(i,j) = (|BR(i-1,j-1)-G(i-1,j)|$$

$$+|BR(i-1,j+1)-G(i-1,j)|$$

$$+|BR(i+1,j-1)-G(i+1,j)|$$

$$+|BR(i+1,j+1)-G(i+1,j)|)/4$$

$$Cy^{(2-1)}(i,j)= (|BR(i-1,j-1)-G(i,j-1)|$$

$$+|BR(i+1,j-1)-G(i,j-1)|$$

$$+|BR(i-1,j+1)-G(i,j+1)|$$

$$+|BR(i+1,j+1)-G(i,j+1)|)/4.$$

Furthermore, in expressions t2 and y2, $Ct^{(2-2)}(i,j)$ $Cy^{(2-2)}(i,j)$ are values respectively satisfying

$$Ct^{(2-2)}(i,j) = t^{(2-2)}|(u_1^{(2-2)}RB(i-1,j-1)$$

$$+(1-u_1^{(2-2)})BR(i-1,j+1)-G(i-1,j)|$$

$$+(1-t^{(2-2)})|(u_2^{(2-2)}RB(i+1,j-1)$$

$$+(1-u_2^{(2-2)})BR(i+1,j+1)-G(i+1,j)|$$

$$Cy^{(2-2)}(i,j) = y^{(2-2)}|(v_1^{(2-2)}RB(i-1,j-1)$$

$$+(1-v_1^{(2-2)})BR(i+1,j-1)-G(i,j-1)|$$

$$+(1-y^{(2-2)})|(v_2^{(2-2)}RB(i-1,j+1)$$

$$+(1-v_2^{(2-2)})BR(i+1,j+1)-G(i,j+1)|,$$

with $t^{(2-2)}$, $y^{(2-2)}$, $u_1^{(2-2)}$, $u_2^{(2-2)}$, $v_1^{(2-2)}$ and $v_2^{(2-2)}$ each representing a constant within a range of 0 ~ 1.

For instance, when $t^{(2-2)} = y^{(2-2)} = u_1^{(2-2)} = u_2^{(2-2)} = v_1^{(2-2)} = v_2^{(2-2)} = 1/2$,

$$Ct^{(2-2)}(i,j)=(|(BR(i-1,j-1)+BR(i-1,j+1))/2-G(i-1,j)|$$

$$+|BR(i+1,j-1)+BR(i+1,j+1))/2-G(i+1,j)|)/2$$

$$Cy^{(2-2)}(i,j)=(|(BR(i-1,j-1)+BR(i+1,j-1))/2-G(i,j-1)|$$

$$+|RB(i-1,j+1)+BR(i+1,j+1))/2-G(i,j+1)|)/2.$$

Next, a third similarity component $Ct^{(3)}(i,j)$ along the vertical direction and a third similarity component $Cy^{(3)}(i,j)$ along the horizontal direction of the interpolation target vacancy are calculated through the following expressions t3 and y3 based upon the color information presented in FIG. 5D.

$$Ct^{(3)}(i,j)=|G(i,j-1)-G(i,j+1)| \qquad \text{expression t3}$$

$$Cy^{(3)}(i,j)=|G(i-1,j)-G(i+1,j)| \qquad \text{expression y3}$$

A fourth similarity component $Ct^{(4)}(i,j)$ along the vertical direction and a fourth similarity component $Cy^{(4)}(i,j)$ along the horizontal direction of the interpolation target vacancy are calculated through the following expressions t4 and y4 based upon the color information presented in FIG. 5E.

$$Ct^{(4)}(i,j)=t^{(4)}|BR(i-1,j-1)-BR(i-1,j+1)|$$

$$+(1-t^{(4)})|BR(i+1,j-1)-BR(i+1,j+1)| \qquad \text{expression t4}$$

$$Cy^{(4)}(i,j)=y^{(4)}|BR(i-1,j-1)-BR(i+1,j-1)|$$

$$+(1-y^{(4)})|BR(i-1,j+1)-BR(i+1,j+1)| \qquad \text{expression y4}$$

In expressions t4 and y4, $t^{(4)}$ and $y^{(4)}$ each represent a constant within a range of 0 ~ 1.

For instance, when $t^{(4)} = y^{(4)} = 1/2$,

$$Ct^{(4)}(i,j)=(|BR(i-1,j-1)-BR(i-1,j+1)|$$

$$+|BR(i+1,j-1)-BR(i+1,j+1)|)/2$$

$$Cy^{(4)}(i,j)=(|BR(i-1,j-1)-BR(i+1,j-1)|$$

$$+|BR(i-1,j+1)-BR(i+1,j+1)|)/2.$$

A fifth similarity component $Ct^{(5)}(i,j)$ along the vertical direction and a fifth similarity component $Cy^{(5)}(i,j)$ along the horizontal direction of the interpolation target vacancy are calculated by using the following expressions t5 and y5, based upon the color information presented in FIG. 5F.

$$Ct^{(5)}(i,j)=a_1^{(5)}Ct^{(5-1)}(i,j)+a_2^{(5)}Ct^{(5-2)}(i,j) \qquad \text{expression t5}$$

$$Cy^{(5)}(i,j)=b_1^{(5)}Cy^{(5-1)}(i,j)+b_2^{(5)}Cy^{(5-2)}(i,j) \qquad \text{expression y5}$$

In expressions t5 and y5 , $a_1^{(5)}$, $a_2^{(5)}$, $b_1^{(5)}$ and $b_2^{(5)}$ are each a constant within a range of 0 ~ 1 which satisfies $a_1^{(5)}+ a_2^{(5)} = b_1^{(5)} + b_2^{(5)} = 1$, and under normal circumstances, they are values that satisfy $a_1^{(5)} = b_1^{(5)}$ and $a_2^{(5)} = b_2^{(5)}$. It is recommended that $a_1^{(5)} = b_1^{(5)} = 1$ and $a^{(2)} = b_2^{(5)} = 0$ be satisfied in the embodiments to be detailed later. It is to be noted that they may be values satisfying $a_1^{(5)} = b_1^{(5)} = 0$ and $a_2^{(5)} = b_2^{(5)} = 1$ or values satisfying $a_1^{(5)} = b_1^{(5)} = a_2^{(5)} = b_2^{(5)} = 1/2$, instead.
In addition, in expressions t5 and y5, $Ct^{(5-1)}(i,j)$ and $Cy^{(5-1)}(i,j)$ are values respectively satisfying

$$Ct^{(5-1)}(i,j)=t^{(5-1)}|RB(i,j-2)-RB(i,j)|$$

$$+(1-t^{(5-1)})|RB(i,j+2)-RB(i,j)|$$

$$Cy^{(5-1)}(i,j)=y^{(5-1)}|RB(i-2,j)-RB(i,j)|$$

$$+(1-y^{(5-1)})|RB(i+2,j)-RB(i,j)|,$$

with $t^{(5-1)}$ and $y^{(5-1)}$ each representing a constant within a range of 0 ~ 1.
For instance, when $t^{(5-1)} = y^{(5-1)} = 1/2$,

$$Ct^{(5-1)}(i,j)=(|RB(i,j-2)-RB(i,j)|$$

$$+|RB(i,j+2)-RB(i,j)|)/2$$

$$Cy^{(5-1)}(i,j)=(|RB(i-2,j)-RB(i,j)|$$

$$+|RB(i+2,j)-RB(i,j)|)/2$$

Also, in expressions t5 and y5, $Ct^{(5-2)}(i,j)$ $Cy^{(5-2)}(i,j)$ are values respectively satisfying

$$Ct^{(5-2)}(i,j) = |(u^{(5-2)}RB(i,j-2)+(1-u^{(5-2)})RB(i,j+2))$$

$$-RB(i,j)|$$

$$Cy^{(5-2)}(i,j)=|(v^{(5-2)}RB(i-2,j)+(1-v^{(5-2)})RB(i-2,j))$$

$$-RB(i,j)|,$$

with $u^{(5-2)}$ and $v^{(5-2)}$ each representing a constant within a range of 0 ~ 1.

For instance, when $u^{(5-2)} = v^{(5-2)} = 1/2$,

$$Ct^{(5-2)}(i,j)=|(RB(i,j-2)+RB(i,j+2))/2-RB(i,j)|$$

$$Cy^{(5-2)}(i,j)=|(RB(i-2,j)+RB(i-2,j))/2-RB(i,j)|$$

It has been learned through testing that the first similarity components are suited for judging similarity degrees in the black-and-white Nyquist stripes (an image of black-and-white vertical stripes of 1-pixel width) shown in FIG. 6A, the black-and-white stripe image with the stripes extending radially from the center (hereafter referred to as a "black-and-white Siemens' star") shown in FIG. 6B and characters.

In addition, through testing, the second similarity components have been determined to be effective in judging similarity degrees in black-and-white Nyquist stripes, a black-and-white Siemens' star and characters although they are less ideal than the first similarity components, and they have also been determined to be fairly effective in judging similarity degrees in a border area in a natural image such as a person or a leaf.

The third similarity components through the fifth similarity components, which are each calculated by using same-color information, have been confirmed to be effective in judging similarity in a border area in a natural image such as a person or leaf and also effective in judging similarity manifesting in a border area of different types of image areas within an image.

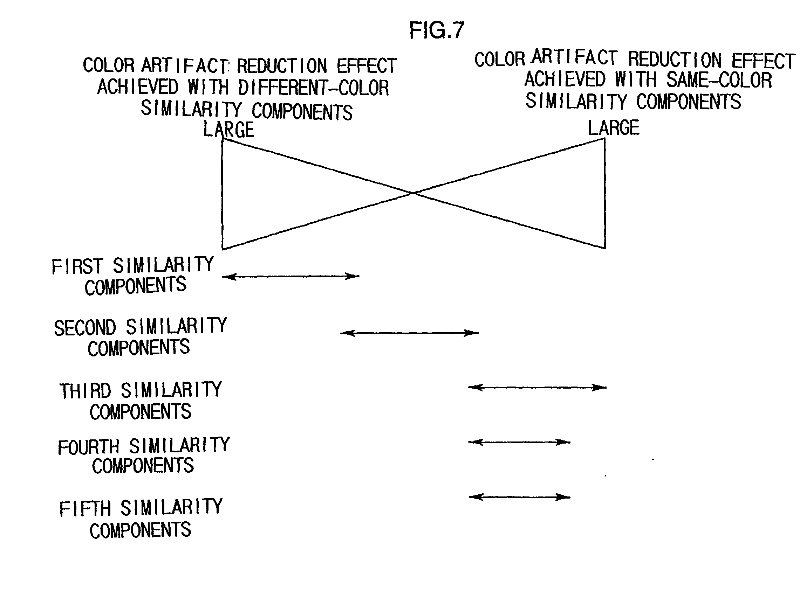

Thus, it has been learned that the relationships as conceptualized in FIG. 7 exist with regard to varying degrees of the color artifact reduction effect achieved through interpolation processing operations each performed by using one type of similarity components among the various types of similarity components (first through fifth similarity components).

It is to be noted that in FIG. 7, the "color artifact reduction effect achieved by using different-color similarity components" refers to the color artifact reduction effect achieved by using similarity components obtained using color information corresponding to different color components and that the "color artifact reduction effect achieved by using same-color similarity components" refers to the color artifact reduction effect achieved by using similarity components obtained using color information corresponding to the same-color component.

In addition, the "distance between the interpolation target vacancy and lattice points near the interpolation target vacancy (hereafter referred to as "nearby lattice points")" is shorter than the "distance between the interpolation target vacancy and vacancies outputting color information corresponding to the same-color component as the color information output from the interpolation target vacancy" or the "distance between the interpolation target vacancy and vacancies outputting color information corresponding to a color component other than the color component at the interpolation target vacancy" in FIGS. 5D, 5E and 5F.

In other words, the nearby lattice points are located at positions which are closest to the interpolation target vacancy, and the third similarity components calculated by using the nearby lattice points achieve a higher degree of "color artifact reduction effect based upon same-color similarity components" compared to the fourth similarity components or the fifth similarity components.

As a result, the difference shown in FIG. 7 manifests in the degrees of the "color artifact reduction effect achieved with the same-color similarity components" realized by using the third similarity components through the fifth similarity components.

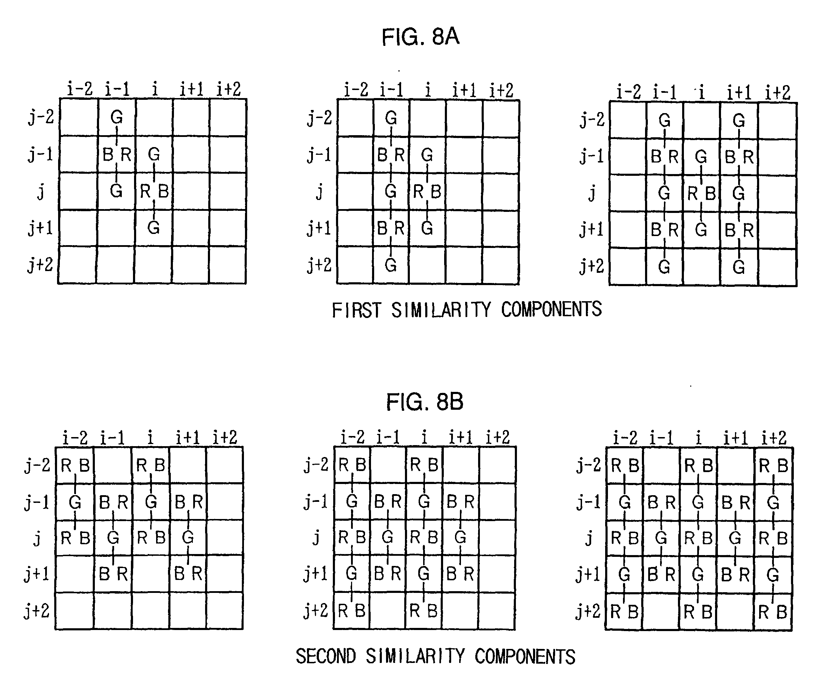

It is to be noted that while the individual types of similarity components (the first through fifth similarity components) are calculated using the color information presented in FIG. 5 in the embodiments to be detailed later, the following substitution maybe made for the various types of similarity components by using the color information at the vacancies and the lattice points in the surrounding areas shown in FIGS. 8 through 10 (the following explanation does not include a description of the method for calculating the various types of similarity components along the horizontal direction).

For instance, the first similarity component $Ct^{(1)}(i,j)$ in the vertical direction may be calculated by using the color information presented in FIG. 8A, through the following expression instead of expression tl mentioned earlier.

$$Ct^{(1)}(i,j)=a_1^{(1)}(m_1^{(1)\cdot}Ct^{(1-1)}(i,j)$$

$$+m_2^{(1)\cdot}Ct^{(1-1)}(i-1,j-1)$$

$$+m_3^{(1)\cdot}Ct^{(1-1)}(i+1,j-1)$$

$$+m_4^{(1)\cdot}Ct^{(1-1)}(i-1,j+1)$$

$$+m_5^{(1)\cdot}Ct^{(1-1)}(i+1,j+1))$$

$$+a_2^{(1)}(n_1^{(1)\cdot}Ct^{(1-2)}(i,j)$$

$$+n_2^{(1)}\cdot Ct^{(1-2)}(i-1,j-1)$$

$$+n_3^{(1)\cdot}Ct^{(1-2)}(i+1,j-1)$$

$$+n_4^{(1)}\cdot Ct^{(1-2)}(i-1,j+1)$$

$$+n_5^{(1)\cdot}Ct^{(1-2)}(i+1,j+1)) \hspace{3cm} \text{expression t1-3}$$

In expression t1-3, at least either $a_1^{(1)}$ or $a_2^{(1)}$ is a value other than 0, $m_1^{(1)}$ is a constant satisfying $0 < m_1^{(1)} \leqq 1$, $m_2^{(1)}$, $m_3^{(1)}$, $m_4^{(1)}$ and $m_5^{(1)}$ are constants within a range of $0 \sim 1$ satisfying $m_1^{(1)} + m_2^{(1)} + m_3^{(1)} + m_4^{(1)} + m_5^{(1)} =1$, $n_1^{(1)}$ is a constant satisfying $0 < n_1^{(1)} \leqq 1$, and $n_2^{(1)}$, $n_3^{(1)}$, $n_4^{(1)}$ and $n_5^{(1)}$ are constants within a range of $0 \sim 1$ satisfying $n_1^{(1)} + n_2^{(1)} + n_3^{(1)} + n_4^{(1)} + n_5^{(1)} =1$. When calculating $Ct^{(1-1)}(i,j)$, $Ct^{(1-1)}(i-1,j-1)$, $Ct^{(1-1)}(i+1,j-1)$, $Ct^{(1-1)}(i-1,j+1)$ and $Ct^{(1-1)}(i+1,j+1)$, different values may be used for the coefficient $u^{(1-1)}$ in the individual terms, and when calculating $Ct^{(1-2)}(i,j)$, $Ct^{(1-2)}(i-1,j-1)$, $Ct^{(1-2)}(i+1,j-1)$, $Ct^{(1-2)}(i-1,j+1)$ and $Ct^{(1-2)}(i+1,j+1)$, different values may be used for the coefficient $t^{(1-2)}$ in the individual terms.

In addition, the second similarity component $Ct^{(2)}(i,j)$ in the vertical direction may be calculated by using the color information presented in FIG. 8B, through the following expression instead of expression t2 mentioned earlier.

$$Ct^{(2)}(i,j)=a_1^{(2)}(m_1^{(2)\cdot}Ct^{(2-1)}(i,j)$$

$$+m_2^{(2)\cdot}Ct^{(2-1)}(i-1,j-1)$$

$$+m_3^{(2)\cdot}Ct^{(2-1)}(i+1,j-1)$$

$$+m_4^{(2)\cdot}Ct^{(2-1)}(i-1,j+1)$$

$$+m_5^{(2)\cdot}Ct^{(2-1)}(i+1,j+1))$$

$$+a_2^{(2)}(n_1^{(2)\cdot}Ct^{(2-2)}(i,j)$$

$$+n_2^{(2)\cdot}Ct^{(2-2)}(i-1,j-1)$$

$$+n_3^{(2)\cdot}Ct^{(2-2)}(i+1,j-1)$$

$$+n_4^{(2)\cdot}Ct^{(2-2)}(i-1,j+1)$$

$$+n_5^{(2)\cdot}Ct^{(2-2)}(i+1,j+1)) \hspace{3cm} \text{expression t2-2}$$

In expression t2-2, $m_1^{(2)}$ is a constant satisfying $0 < m_1^{(2)} \leqq 1$, $m_2^{(2)}$, $m_3^{(2)}$, $m_4^{(2)}$ and $m_5^{(2)}$ are constants within a range of $0 \sim 1$ satisfying $m_1^{(2)} + m_2^{(2)} + m_3^{(2)} + m_4^{(2)} + m_5^{(2)} =1$, $n_1^{(2)}$ is a constant satisfying $0 < n_1^{(2)} \leqq 1$, and $n_2^{(2)}$, $n_3^{(2)}$, $n_4^{(2)}$ and $n_5^{(2)}$ are constants within a range of $0 \sim 1$ satisfying $n_1^{(2)} + n_2^{(2)} + n_3^{(2)} + n_4^{(2)} + n_5^{(2)} =1$. When calculating $Ct^{(2-1)}(i,j)$, $Ct^{(2-1)}(i-1,j-1)$, $Ct^{(2-1)}(i+1,j-1)$, $Ct^{(2-1)}(i-1,j+1)$ and $Ct^{(2-1)}(i+1,j+1)$, different values may be used for the coefficient $u^{(2-1)}$ in the individual terms, and when calculating $Ct^{(2-2)}(i,j)$, $Ct^{(2-2)}(i-1,j-1)$, $Ct^{(2-2)}(i+1,j-1)$, $Ct^{(2-2)}(i-1,j+1)$ and $Ct^{(2-2)}(i+1,j+1)$, different values may be used for the coefficient $t^{(2-2)}$ in the individual terms.

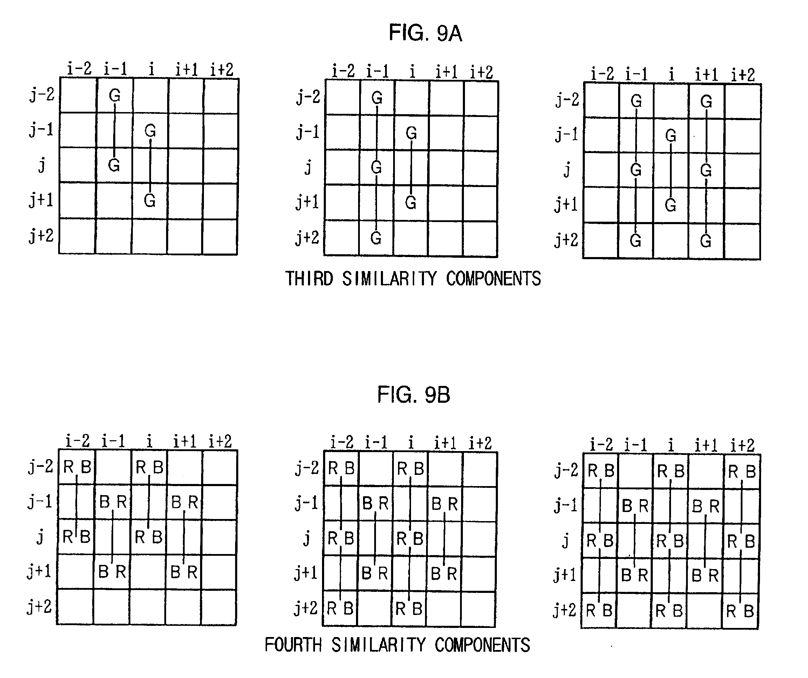

The third similarity component $Ct^{(3)}(i,j)$ along the vertical direction may be calculated by using the color information presented in FIG. 9A and using the values ($Ct^{(3)}(i,j) \sim Ct^{(3)}(i+1,j+1)$) calculated through expression t3 mentioned before for substitution in the right side of the following expression

$$Ct^{(3)}(i,j) = m_1^{(3)}Ct^{(3)}(i,j)$$

$$+m_2^{(3)}Ct^{(3)}(i\text{-}1,j\text{-}1)$$

$$+m_3^{(3)}Ct^{(3)}(i\text{+}1,j\text{-}1)$$

$$+m_4^{(3)}Ct^{(3)}(i\text{-}1,j\text{+}1)$$

$$+m_5^{(3)}Ct^{(3)}(i\text{+}1,j\text{+}1) \qquad\qquad \text{expression t3-2}$$

In expression t3-2, $m_1^{(3)}$ is a constant satisfying $0 < m_1^{(3)} \leqq 1$ and $m_2^{(3)}$, $m_3^{(3)}$, $m_4^{(3)}$ and $m_5^{(3)}$ are constants within a range of 0 ~ 1 satisfying $m_1^{(3)} + m_2^{(3)} + m_3^{(3)} + m_4^{(3)} + m_5^{(3)} = 1$.

The fourth similarity component $Ct^{(4)}(i,j)$ along the vertical direction may be calculated by using the color information presented in FIG. 9B and using the values ($Ct^{(4)}(i,j) \sim Ct^{(4)}(i\text{+}1,j\text{+}1)$) calculated through expression t4 mentioned before for substitution in the right side of the following expression

$$Ct^{(4)}(i,j) = m_1^{(4)}Ct^{(4)}(i,j)$$

$$+m_2^{(4)}Ct^{(4)}(i\text{-}1,j\text{-}1)$$

$$+m_3^{(4)}Ct^{(4)}(i\text{+}1,j\text{-}1)$$

$$+m_4^{(4)}Ct^{(4)}(i\text{-}1,j\text{+}1)$$

$$+m_5^{(4)}Ct^{(4)}(i\text{+}1,j\text{+}1) \qquad\qquad \text{expression t4-2}$$

In expression t4-2, $m_1^{(4)}$ is a constant satisfying $0 < m_1^{(4)} \leqq 1$ and $m_2^{(4)}$, $m_3^{(4)}$, $m_4^{(4)}$ and $m_5^{(4)}$ are constants within a range of 0 ~ 1 satisfying $m_1^{(4)} + m_2^{(4)} + m_3^{(4)} + m_4^{(4)} + m_5^{(4)} = 1$. When calculating $Ct^{(4\text{-}1)}(i,j)$, $Ct^{(4\text{-}1)}(i\text{-}1,j\text{-}1)$, $Ct^{(4\text{-}1)}(i\text{+}1,j\text{-}1)$, $Ct^{(4\text{-}1)}(i\text{-}1,j\text{+}1)$ and $Ct^{(4\text{-}1)}(i\text{+}1,j\text{+}1)$, different values may be used for the coefficient $t^{(4)}$ in the individual terms.

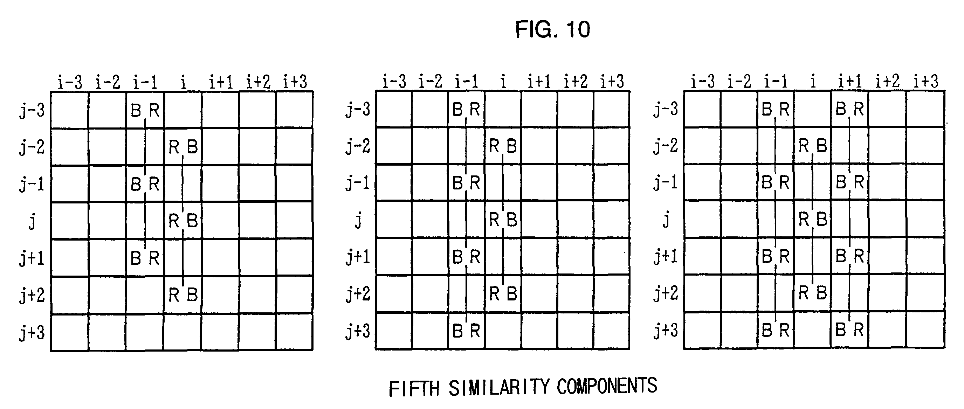

In addition, the fifth similarity component $Ct^{(5)}(i,j)$ in the horizontal direction may be calculated by using the color information presented in FIG. 10, through the following expression instead of expression t5 mentioned earlier.

$$Ct^{(5)}(i,j)=a_1^{(5)}(m_1^{(5)\cdot}Ct^{(5\text{-}1)}(i,j)$$

$$+m_2^{(5)\cdot}Ct^{(5\text{-}1)}(i\text{-}1,j\text{-}1)$$

$$+m_3^{(5)\cdot}Ct^{(5\text{-}1)}(i\text{+}1,j\text{-}1)$$

$$+m_4^{(5)\cdot}Ct^{(5\text{-}1)}(i\text{-}1,j\text{+}1)$$

$$+m_5^{(5)\cdot}Ct^{(5\text{-}1)}(i\text{+}1,j\text{+}1))$$

$$+a_2^{(5)}(n_1^{(5)\cdot}Ct^{(5\text{-}2)}(i,j)$$

$$+n_2^{(5)\cdot}Ct^{(5\text{-}2)}(i\text{-}1,j\text{-}1)$$

$$+n_3^{(5)\cdot}Ct^{(5\text{-}2)}(i\text{+}1,j\text{-}1)$$

$$+n_4^{(5)\cdot}Ct^{(5\text{-}2)}(i\text{-}1,j\text{+}1)$$

$$+n_5^{(5)\cdot}Ct^{(5\text{-}2)}(i\text{+}1,j\text{+}1)) \qquad\qquad \text{expression t5-2}$$

In expression t5-2, $m_1^{(5)}$ is a constant satisfying $0 < m_1^{(5)} \leqq 1$, $m_2^{(5)}$, $m_3^{(5)}$, $m_4^{(5)}$ and $m_5^{(5)}$ are constants within a range of 0 ~ 1 satisfying $m_1^{(5)} + m_2^{(5)} + m_3^{(5)} + m_4^{(5)} + m_5^{(5)} =1$, $n_1^{(5)}$ is a constant satisfying $0 < n_1^{(5)} \leqq 1$, and $n_2^{(5)}$, $n_3^{(5)}$, $n_4^{(5)}$ and $n_5^{(5)}$ are constants within a range of 0 ~ 1 satisfying $n_1^{(5)} + n_2^{(5)} + n_3^{(5)} + n_4^{(5)} + n_5^{(5)} =1$. When calculating $Ct^{(5\text{-}1)}(i,j)$, $Ct^{(5\text{-}1)}(i\text{-}1,j\text{-}1)$, $Ct^{(5\text{-}1)}(i\text{+}1,j\text{-}1)$, $Ct^{(5\text{-}1)}(i\text{-}1,j\text{+}1)$ and $Ct^{(5\text{-}1)}(i\text{+}1,j\text{+}1)$, different values may be used for the coefficient $u^{(5-1)}$ in the individual terms, and when calculating $Ct^{(5-2)}(i,j)$, $Ct^{(5-2)}(i-1,j-1)$, $Ct^{(5-2)}(i+1,j-1)$, $Ct^{(5-2)}(i-1,j+1)$ and $Ct^{(5-2)}(i+1,j+1)$, different values may be used for the coefficient $t^{(5-2)}$ in the individual terms.

In addition, while the various types of similarity components (the first through fifth similarity components) are each calculated by using one or more of the absolute values of the differences, these similarity degrees may be calculated by using the value of the individual elements to the nth power, e.g., by squaring the absolute value of each of elements.

For purposes of simplification, the first through fifth embodiments are explained in reference to an example in which the results of calculation of the various types of similarity components (the first through fifth similarity components) for black-and-white Nyquist stripes are used and an example in which the results of calculation of various types of similarity components (the first through fifth similarity components) for cyan vertical stripes are used.

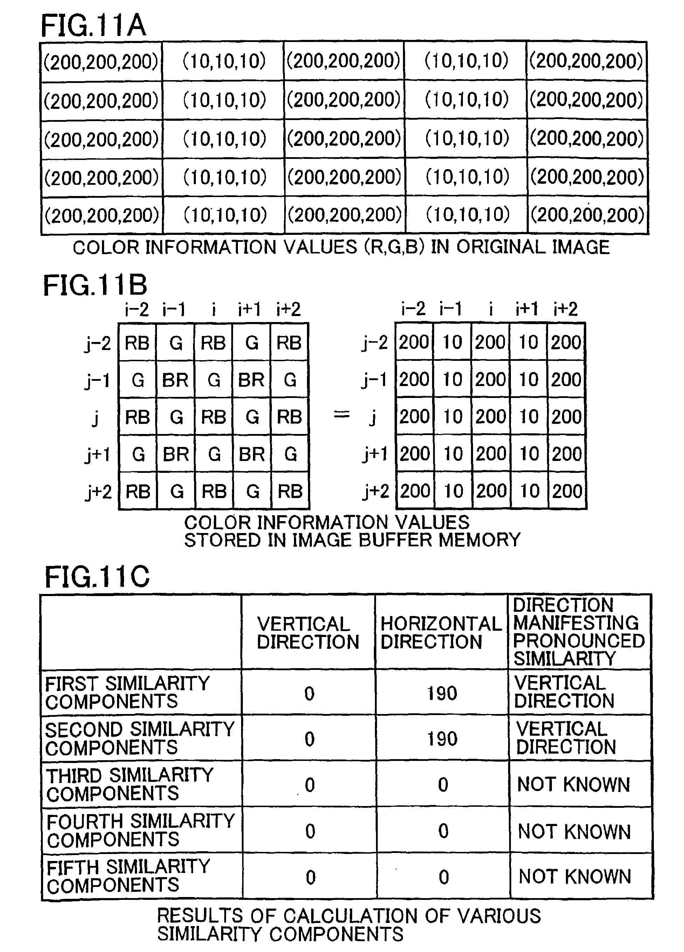

When the color information values (R, G, B) shown in FIG. 11A represent an original image of black-and-white Nyquist stripes with each set of color information values corresponding to a pixel and the color information values shown in FIG. 11B are stored in the image buffer memory 15, the results of the calculation of various types of similarity components (the first through fifth similarity components) for the black-and-white Nyquist stripes are as shown in FIG. 11C.

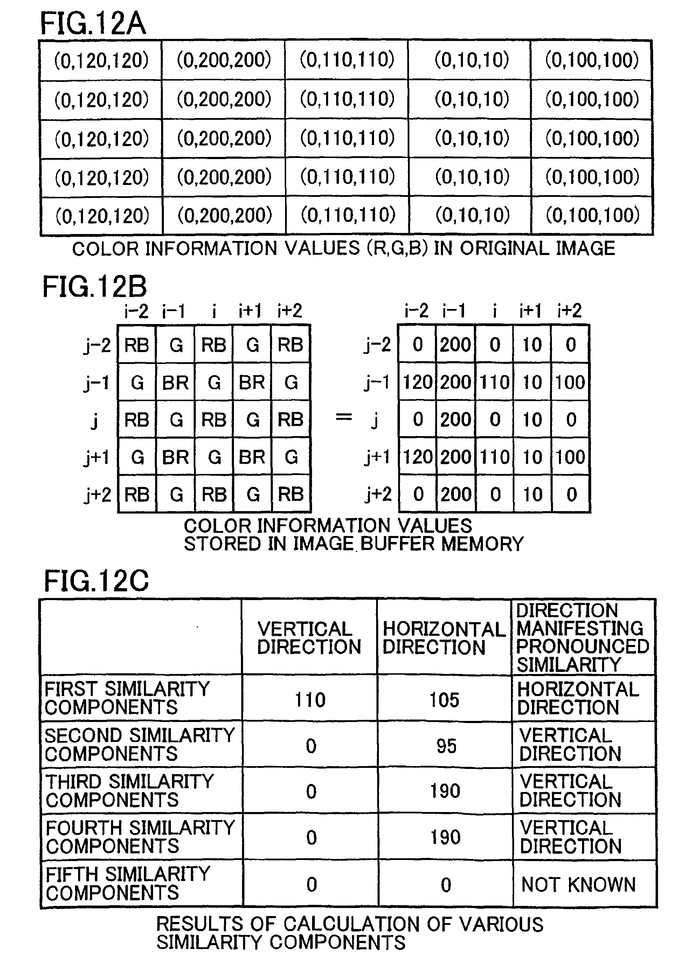

In addition, when the color information values (R, G, B) shown in FIG. 12A represent an original image of cyan vertical stripes with each set of color information values corresponding to a pixel and the color information values shown in FIG. 12B are stored in the image buffer memory 15, the results of the calculation of various types of similarity components (the first through fifth similarity components) for the cyan vertical stripes are as shown in FIG. 12C.

In both FIGS. 11C and 12C, the first similarity component $Ct^{(1)}(i,j)$ along the vertical direction and the first similarity component $Cy^{(1)}(i,j)$ along the horizontal direction represents the results of calculation performed with $a_1^{(1)} = b_1^{(1)} = 1$ and $a_2^{(1)} = b_2^{(1)} = 0$ in expressions t1 and y1, the second similarity component $Ct^{(2)}(i,j)$ along the vertical direction and the second similarity component $Cy^{(2)}(i,j)$ along the horizontal direction represent the results of calculation performed with $a_1^{(2)} = b_1^{(2)} = 1$ and $a_2^{(2)} = b_2^{(2)} = 0$ in expressions t2 and y2, the third similarity component $Ct^{(3)}(i,j)$ along the vertical direction and the third similarity component $Cy^{(3)}(i,j)$ along the horizontal direction represent the results of calculation performed using expressions t3 and y3, the fourth similarity component $Ct^{(4)}(i,j)$ along the vertical direction and the fourth similarity component $Cy^{(4)}(i,j)$ along the horizontal direction represent the results of calculation performed by ensuring that $t^{(4)}$ and $y^{(4)}$ in expressions t4 and y4 satisfy $t^{(4)} = y^{(4)} = 1/2$ and the fifth similarity component $Ct^{(5)}(i,j)$ along the vertical direction and the fifth similarity component $Cy^{(5)}(i,j)$ along the horizontal direction represents the results of calculation performed by ensuring that $a_1^{(5)}$, $a_2^{(5)}$, $b_1^{(5)}$ and $b_2^{(5)}$ in expressions t5 and y5 satisfy $a_1^{(5)} = b_1^{(5)} = 1$ and $a_2^{(5)} = b_2^{(5)} = 0$.

It is to be noted that when the difference between the calculated values along the two directions (the vertical direction and the horizontal direction) is large in the results of calculation of the various similarity components presented in FIGS. 11C and 12C, a higher similarity degree manifests along the direction with the value closer to "0".

Thus, the results presented in FIG. 11C indicate that the first similarity components and the second similarity components are effective for judging the similarity degree manifesting in the black-and-white Nyquist stripes.

The results presented in FIG. 12C indicate that the second similarity components through the fourth similarity components are effective for judging the similarity degree manifesting in the cyan vertical stripes.

(First Embodiment)

The following is an explanation of the operation achieved in the first embodiment, given in reference to FIGS. 1 through 5.

With the main power turned on, the optical image provided via the optical system 11 and the OLPF 12 is formed at the photoelectric conversion surface (not shown) of the image-capturing sensor 13, and a signal charge is generated through photoelectric conversion. In addition, the image-capturing sensor 13 scans the signal charge thus generated to create an image signal which is then provided to the A/D conversion unit 14.

The A/D conversion unit 14 implements A/D conversion on the image signal that has been provided and generates image data (FIG. 3, S1). It is to be noted that the image data in the first embodiment and the subsequent embodiments to be explained later are equivalent to the color information, each set of which corresponds to one of the pixels at the image-capturing sensor 13.

The image data thus generated are separated into three colors, i.e., R, G and B, and are stored in the areas inside the image buffer memory 15, each corresponding to one of the three colors (FIG. 3, S2). It is to be noted that as shown in FIG. 2, the green color image data (the color information at the lattice points) are stored in correspondence to the coordinates positions in the coordinate system mentioned earlier.

The processing described above (generation and storage of image data) is performed repeatedly in conformance to the timing control implemented by the control unit 10.

In addition, the control unit 10 makes a decision via the interface unit 18 as to whether or not a shutter release button (not shown) provided at the casing of the electronic still camera has been pressed (FIG. 3, S3).

If it is decided through this decision-making that the shutter release button has not been pressed, the control unit 10 instructs the processing for image data generation (FIG. 3, S1) and image data storage (FIG. 3, S2) to be performed repeatedly through the timing control mentioned above.

If, on the other hand, it is decided that the shutter release button has been pressed, the control unit 10 issues an instruction to the interpolation processing unit 19 inside the image processing unit 17 to execute the interpolation processing which is to be explained below (FIG. 3, S4).

Namely, in the first embodiment and the subsequent embodiments to be explained later, the image data stored in the image buffer memory 15 at the point in time at which the shutter release button is pressed become the interpolation processing target.

It is to be noted that the interpolation processing may be implemented on image data which have been read out from by the gradation conversion unit 16 to undergo gradation conversion (logarithm conversion, $\gamma$ conversion and the like) and then have been restored in the image buffer memory 15 after the gradation conversion, instead.

For interpolated image display, images that are being captured continually as well as an image captured at the point in time at which the shutter release button is pressed may undergo the interpolation processing and be displayed. Furthermore, the processing for image data generation (FIG. 3, S1) and image data storage (FIG. 3, S2) may be performed after the shutter release button is pressed, as long as the processing is timed to be executed prior to the interpolation processing .

The image data (interpolation quantities at vacancies) resulting from the interpolation processing thus performed are stored in a specific area inside the image buffer memory 15 (FIG. 3, S5).

Next, in reference to FIG. 4, the interpolation processing operation achieved in the first embodiment is explained.

In response to an instruction for the execution of the interpolation processing issued by the control unit 10, the interpolation processing unit 19 selects an interpolation target vacancy to undergo the interpolation processing (FIG. 4, S1).

For instance, if "x + y = odd number" is true for a given set of coordinates (x,y) in FIG. 2, the coordinate point corresponds to a vacancy. Accordingly, in the first embodiment and the subsequent embodiments, the coordinates corresponding to the individual pixels are sequentially searched, from (1, 1) to (X_max, Y_max) and the coordinate points each having the sum of the X component and the Y component indicating an odd number are assigned as vacancies.

It is to be noted that if "x + y = odd number" is true for a given set of coordinates (x,y) in FIG. 2, the color output from the pixel at the coordinate point can be identified by ascertaining whether x is an even number or an odd number. For instance, if a pixel at which "x + y = odd number and x = even number" are true outputs red color information, a pixel at which "x + y = odd number and x = odd number" are true outputs blue color information.

Upon selecting an interpolation target vacancy as described above, the interpolation processing unit 19 reads out the color information shown in FIGS. 5A (or 5B), 5C and 5D from the image buffer memory 15. In other words, the interpolation processing unit 19 reads out the color information needed for the calculation of the similarity degrees manifesting at the interpolation target vacancy from the image buffer memory 15 (FIG. 4, S2). It is to be noted that color information thus read out is provided to the similarity degree calculation unit 20.

The similarity degree calculation unit 20 calculates a similarity degree Ct(i,j) along the vertical direction and a similarity degree Cy(i,j) along the horizontal direction by using the color information provided by the interpolation processing unit 19 (FIG. 4, S3).

Namely, the similarity degree calculation unit 20 calculates the first similarity component $Ct^{(1)}(i,j)$ along the vertical direction, the first similarity component $Cy^{(1)}(i,j)$ along the horizontal direction, the second similarity component $Ct^{(2)}(i,j)$ along the vertical direction, the second similarity component $Cy^{(2)}(i,j)$ along the horizontal direction, the third similarity component $Ct^{(3)}(i,j)$ along the vertical direction, and the third similarity component $Cy^{(3)}(i,j)$ along the horizontal direction respectively through expression t1(or expression t1-2), expression y1 (or expression y1-2), expression t2, expression y2, expression t3 and expression y3 by using the color information provided by the interpolation processing unit 19, and calculates the vertical similarity degree Ct(i,j) and the horizontal similarity degree Cy(i,j) through expressions 1 and 2 below.

$$Ct(i,j)=\alpha_1 Ct^{(1)}(i,j)+\beta_1 Ct^{(2)}(i,j)+\gamma_1 Ct^{(3)}(i,j) \qquad \text{expression 1}$$

$$Cy(i,j)=\alpha_2 Cy^{(1)}(i,j)+\beta_2 Cy^{(2)}(i,j)+\gamma_2 Cy^{(3)}(i,j) \qquad \text{expression 2}$$

In the expressions above, $\alpha_1$, $\alpha_2$, $\beta_1$, $\beta_2$, $\gamma_1$ and $\gamma_2$ each represent a positive value used as a weighting coefficient in the corresponding term. It is to be noted that in this example, conditions under which $\alpha_1=\alpha_2=\alpha$, $\beta_1=\beta_2=\beta$, $\gamma_1=\gamma_2=\gamma$ and $\alpha:\beta:\gamma=1:1:1$ are imposed. In addition, if the similarity degree Ct(i,j) along the vertical direction and the similarity degree Cy(i,j) along the horizontal direction are to be standardized based upon the color information, a condition under which $\alpha+\beta+\gamma=1$ may be imposed.

Next, the similarity judging unit 21 judges the direction manifesting a pronounced similarity based upon the vertical similarity degree Ct(i,j) and the horizontal similarity degree Cy(i,j) calculated as described above (FIG. 4, S4).

For instance, relative to an arbitrary value T ("0" is used in this example), if | Ct(i,j) - Cy(i,j) | > T and Ct(i,j) < Cy(i,j) are true, the similarity judging unit 21 judges that a pronounced similarity manifests along the vertical direction. If | Ct(i,j) - Cy(i,j) | > T and Ct(i,j) > Cy(i,j) are true, the similarity judging unit 21 judges that a pronounced similarity manifests along the horizontal direction and if | Ct(i,j) - Cy(i,j) | $\leqq$ T is true, the similarity judging unit 21 judges that equal similarity degrees manifest along the two directions.

Alternatively, the similarity judging unit 21 may judge that a pronounced similarity manifests along the vertical direction when "x > 1" is true for x in expression 28 in the seventh embodiment to be detailed later, that a pronounced similarity manifests along the horizontal direction if "x < -1" is true and that equal similarity degrees manifest along the two directions if "-1 $\leqq$ x $\leqq$ 1" is true.

When the direction manifesting a pronounced similarity is ascertained in this manner, the interpolation quantity calculation unit 22 calculates the interpolation quantity for the interpolation target vacancy by using the color information output from adjacent lattice points located along the direction judged to manifest a pronounced similarity (FIG. 4, S5).

The interpolation quantity calculation unit 22 calculates the interpolation quantity G'(i,j) for the interpolation target vacancy through G'(i,j) = (G(i,j-1) + G(i,j+1)) /2 if the vertical direction is judged to manifest a pronounced similarity, calculates the interpolation quantity G'(i,j) for the interpolation target vacancy through G'(i,j) = (G(i-1,j) + G(i+1,j)) /2 if the horizontal direction is judged to manifest pronounced similarity, and calculates G'(i,j) through

$$G'(i,j)=\{G(i,j-1) + G(i,j+1) + G(i-1,j)+G(i+1,j)\} \text{ /4 or}$$

$$G'(i,j) = \text{median } \{G(i,j-1), G(i,j+1), G(i-1,j), G(i+1,j)\}$$

if the two directions are judged to manifest equal similarity degrees.

"median {}" indicates a function for calculating the median of a plurality of elements, and if there are an even number of elements, the average of the two elements at the center is taken.

Alternatively, if the direction manifesting a pronounced similarity is ascertained based upon "x" in expression 28 in the seventh embodiment to be detailed later, the interpolation quantity calculation unit 22 may calculate the interpolation quantity for the interpolation target vacancy as in the seventh embodiment (see FIG. 15, S7 ~ S11).

When the interpolation quantity for the interpolation target vacancy is calculated in this manner, the interpolation processing unit 19 makes a decision as to whether or not the interpolation processing for all the vacancies has been completed (FIG. 4, S6).

For instance, such decision-making may be achieved by making a decision as to whether or not "i > X_max - 3" and "j > Y_max - 3" are true for a given coordinate point (i,j) during the process of searching the coordinates corresponding to the individual pixels as described earlier.

It is to be noted that for an area of an image such as an edge over which the interpolation processing according to the present invention cannot be directly adopted, a virtual image may be generated by folding back the portion beyond the edge of the image (prior art technology) to implement interpolation processing on the image thus generated.

The interpolation processing unit 19 repeatedly implements the processing described above (the processing in FIG. 4, S1 and subsequent steps) until it is determined through the decision-making that the interpolation processing for all the vacancies has been completed.

As described above, in the first embodiment, the first similarity components, the second similarity components and the third similarity components along the vertical direction and the horizontal direction are calculated, and the similarity degrees for the interpolation target vacancy are calculated by performing weighted addition of the three types of similarity components.

As a result, even when the direction manifesting a pronounced similarity cannot be ascertained based upon the results of the calculation of the third similarity components alone, as in FIG. 11C for instance, the similarity degrees manifesting at the interpolation target vacancy can be calculated with a high degree of accuracy through effective use of the results of the calculation of the first similarity components and the second similarity components. In addition, even when an erroneous judgment may be made with regard to the direction manifesting a pronounced similarity based upon the results of the calculation of the first similarity components alone, as in FIG. 12C, the similarity degrees manifesting at the interpolation target vacancy can be calculated with a high degree of accuracy through the use of the results of the calculation of the second similarity components and the third similarity components.

Furthermore, the "color artifact reduction effect achieved by using different-color similarity components" and the "color artifact reduction effect achieved by using same-color similarity components" in FIG. 7 are realized in a well-balanced manner in the first embodiment.

Thus, the occurrence of color artifacts in various types of images including natural images as well as images with a high spatial frequency such as black-and-white Nyquist stripes can be reduced through the first embodiment. In other words, the first embodiment improves the interpolation processing accuracy with a high degree of reliability.

It is to be noted that while the conditions under which $\alpha_1=\alpha_2=\alpha$, $\beta_1=\beta_2=\beta$, $\gamma_1=\gamma_2=\gamma$ and $\alpha:\beta:\gamma=1:1:1$ are imposed with respect to expressions 1 and 2 in the first embodiment, $\alpha_1$, $\alpha_2$, $\beta_1$, $\beta_2$, $\gamma_1$ and $\gamma_2$ may be any values as long as the weighted addition of the first through third similarity components is achieved at a rate that can be regarded as equal.

In addition, while the vertical similarity degree Ct(i,j) and the horizontal similarity degree Cy(i,j) are calculated by performing weighted addition of the three types of similarity components obtained using the color information in FIGS. 5A (or 5B), 5C and 5D in the first embodiment, the vertical similarity degree Ct(i,j) and the horizontal similarity degree Cy(i,j) may be calculated through weighted addition of three types of similarity components obtained using the color information in FIGS. 5A (or 5B) and 5C and the color information in any one of FIGS. 5D ~ 5F, instead.

(Second Embodiment)

The following is an explanation of the operation achieved in the second embodiment.

Since the second embodiment is characterized in the method through which the vertical similarity degree Ct(i,j) and the horizontal similarity degree Cy(i,j) are calculated (corresponds to FIG. 4, S2 and S3) and the other aspects of the operation achieved therein are similar to those in the first embodiment, their explanation is omitted. In other words, the operation corresponding to FIG. 4, S2 and S3 is explained below.

The interpolation processing unit 19 reads out the color information in FIGS. 5A (or 5B) and 5C (corresponds to FIG. 4, S2) and provides the color information to the similarity degree calculation unit 20.

The similarity degree calculation unit 20 calculates the first similarity component $Ct^{(1)}(i,j)$ along the vertical direction, the first similarity component $Cy^{(1)}(i,j)$ along the horizontal direction, the second similarity component $Ct^{(2)}(i,j)$ along the vertical direction and the second similarity component $Cy^{(2)}(i,j)$ along the horizontal direction respectively through expression t1 (or expression t1-2), expression y1 (or expression y1-2), expression t2 and expression y2 by using the color information thus provided, and calculates the vertical similarity degree Ct(i,j) and the horizontal similarity degree Cy(i,j) through expressions 3 and 4 below (corresponds to FIG. 4, S3).

$$Ct(i,j)=\alpha_1 Ct^{(1)}(i,j)+\beta_1 Ct^{(2)}(i,j) \qquad \text{expression 3}$$

$$Cy(i,j)=\alpha_2 Cy^{(1)}(i,j)+\beta_2 Cy^{(2)}(i,j) \qquad \text{expression 4}$$

In the expressions above, $\alpha_1$, $\alpha_2$, $\beta_1$ and $\beta_2$, each represent a positive value used as a weighting coefficient in each corresponding term. It is to be noted that in this example, conditions under which $\alpha_1=\alpha_2=\alpha$, $\beta_1=\beta_2=\beta$ and $\alpha:\beta=1:1$ are imposed. In addition, if the similarity degree Ct(i,j) along the vertical direction and the similarity degree Cy(i,j) along the horizontal direction are to be standardized based upon the color information, a condition under which $\alpha+\beta=1$ may be imposed.

In other words, in the second embodiment, the similarity degrees manifesting at the interpolation target vacancy are calculated through weighted addition of the two types of similarity components, i.e., the first similarity components and the second similarity components along the vertical direction and the horizontal direction which have been calculated.

Thus, similarity degrees manifesting at the interpolation target vacancy in, for instance, black-and-white Nyquist stripes can be calculated with a high degree of accuracy through effective use of the results of the calculation of the first similarity components and the second similarity components, as shown in FIG. 11C.

In addition, the "color artifact reduction effect achieved by using different-color similarity components" in FIG. 7 is realized through the second embodiment.

Consequently, the occurrence of color artifacts in images with a high spatial frequency such as black-and-white Nyquist stripes can be reduced in the second embodiment. At the same time, although not as effective as the first embodiment, the "color artifact reduction effect achieved by using same-color similarity components" in FIG. 7 is achieved through the use of the second similarity components, so that the occurrence of the color artifacts in various types of images including natural images is reduced. Thus, the interpolation processing accuracy is improved with a high degree of reliability in the second embodiment.

It is to be noted that while the conditions under which $\alpha_1=\alpha_2=\alpha$, $\beta_1=\beta_2=\beta$, $\alpha:\beta=1:1$ are imposed in expressions 3 and 4 in the second embodiment, $\alpha_1$, $\alpha_2$, $\beta_1$ and $\beta_2$ may be any values as long as the weighted addition of the first and second similarity components is achieved at a rate that can be regarded as equal.

(Third Embodiment)

The following is an explanation of the operation achieved in the third embodiment.

Since the third embodiment is characterized in the method through which the vertical similarity degree Ct(i,j) and the horizontal similarity degree Cy(i,j) are calculated (corresponds to FIG. 4, S2 and S3) and the other aspects of the operation achieved therein are similar to those in the first embodiment, their explanation is omitted. In other words, the operation corresponding to FIG. 4, S2 and S3 is explained below.

The interpolation processing unit 19 reads out the color information in FIGS. 5C and 5D (corresponds to FIG. 4, S2) and provides the color information to the similarity degree calculation unit 20.

The similarity degree calculation unit 20 calculates the second similarity component $Ct^{(2)}(i,j)$ along the vertical direction with, the second similarity component $Cy^{(2)}(i,j)$ along the horizontal direction, the third similarity component $Ct^{(3)}(i,j)$ along the vertical direction and the third similarity component $Cy^{(3)}(i,j)$ along the horizontal direction through expression t2, expression y2, expression t3 and expression y3 by using the color information thus provided, and calculates the vertical similarity degree Ct(i,j) and the horizontal similarity degree Cy(i,j) through expressions 5 and 6 below (corresponds to FIG. 4, S3).

$$Ct(i,j) = \beta_1 Ct^{(2)}(i,j) + \gamma_1 Ct^{(3)}(i,j) \qquad \text{expression 5}$$

$$Cy(i,j) = \beta_2 Cy^{(2)}(i,j) + \gamma_2 Cy^{(3)}(i,j) \qquad \text{expression 6}$$

In the expressions above $\beta_1$, $\beta_2$, $\gamma_1$ and $\gamma_2$ each represent a positive value used as a weighting coefficient in the corresponding term. It is to be noted that in this example, conditions under which $\beta_1=\beta_2=\beta$, $\gamma_1=\gamma_2=\gamma$ and $\beta:\gamma=1:1$ are imposed. In addition, if the similarity degree Ct(i,j) along the vertical direction and the similarity degree Cy(i,j) along the horizontal direction are to be standardized based upon the color information, a condition under which $\beta+\alpha=1$ may be imposed.

In other words, in the third embodiment, the similarity degrees manifesting at the interpolation target vacancy are calculated through weighted addition of the two types of similarity components, i.e., the second similarity components and the third similarity components along the vertical direction and the horizontal direction that have been calculated.

Thus, similarity degrees manifesting at the interpolation target vacancy in, for instance, cyan vertical stripes can be calculated with a high degree of accuracy through the use of the results of the calculation of the second similarity components and the third similarity components, as shown in FIG. 12C.

In addition, the "color artifact reduction effect achieved by using same-color similarity components" in FIG. 7 is realized through the third embodiment.

Consequently, the occurrence of color artifacts in various types of images including natural images can be reduced through the third embodiment. At the same time, although not as effective as the first embodiment, it achieves a reduction in the occurrence of color artifacts in images with a high spatial frequency such as black-and-white Nyquist stripes through the "color artifact reduction effect achieved by using different-color similarity components" in FIG. 7 realized by using the second similarity components. In short, the third embodiment improves the interpolation processing accuracy with a high degree of reliability.

It is to be noted that while the conditions under which $\beta_1=\beta_2=\beta$, $\gamma_1=\gamma_2=\gamma$ and $\beta:\gamma=1:1$ are imposed with respect to expressions 5 and 6 in the third embodiment, $\beta_1$, $\beta_2$, $\gamma_1$ and $\gamma_2$ may be any values as long as the weighted addition of the second and third similarity components is achieved at a rate that can be regarded as equal to each other.

In addition, while the vertical similarity degree Ct(i,j) and the horizontal similarity degree Cy(i,j) are calculated by performing weighted addition of the two similarity components obtained using the color information in FIGS. 5C and 5D in the third embodiment, the vertical similarity degree Ct(i,j) and the horizontal similarity degree Cy(i,j) may be calculated through weighted addition of at least two types of similarity components obtained using the color information in FIG. 5C and the color information in at least one of FIGS. 5D ~ 5F, instead.

(Fourth Embodiment)

The following is an explanation of the operation achieved in the fourth embodiment.

Since the fourth embodiment is characterized in the method through which the vertical similarity degree Ct(i,j) and the horizontal similarity degree Cy(i,j) are calculated (corresponds to FIG. 4, S2 and S3) and the other aspects of the operation achieved therein are similar to those in the first embodiment, their explanation is omitted. In other words, the operation corresponding to FIG. 4, S2 and S3 is explained below.

The interpolation processing unit 19 reads out the color information in FIGS. 5a (or 5B) and 5D (corresponds to FIG. 4, S2) and provides the color information to the similarity degree calculation unit 20.

The similarity degree calculation unit 20 calculates the first similarity component $Ct^{(1)}(i,j)$ along the vertical direction with, the first similarity component $Cy^{(1)}(i,j)$ along the horizontal direction, the third similarity component $Ct^{(3)}(i,j)$ along the vertical direction and the third similarity component $Cy^{(3)}(i,j)$ along the horizontal direction respectively through expression t1 (or expression t1-2) in which $a^{(1)} \neq 0$ is true, expression y1 (or expression y1-2) in which $b^{(1)} \neq 0$ is true, expression t3 and expression y3 by using the color information thus provided, and calculates the vertical similarity degree Ct(i,j) and the horizontal similarity degree Cy(i,j) through expressions 7 and 8 below (corresponds to FIG. 4, S3).

$$Ct(i,j) = \alpha_1 Ct^{(1)}(i,j) + \gamma_1 Ct^{(3)}(i,j) \qquad \text{expression 7}$$

$$Cy(i,j) = \alpha_2 Cy^{(1)}(i,j) + \gamma_2 Cy^{(3)}(i,j) \qquad \text{expression 8}$$

In the expressions above $\alpha_1$, $\alpha_2$, $\gamma_1$ and $\gamma_2$ each represent a positive value used as a weighting coefficient in the corresponding term. It is to be noted that in this example, conditions under which $\alpha_1 = \alpha_2 = \alpha$, $\gamma_1 = \gamma_2 = \gamma$ and $\alpha : \gamma = 1:1$ are imposed. In addition, if the similarity degree Ct(i,j) along the vertical direction and the similarity degree Cy(i,j) along the horizontal direction are to be standardized based upon the color information, a condition under which $\alpha + \gamma = 1$ may be imposed.

Namely, in the fourth embodiment, since the first similarity components $Ct^{(1)}(i,j)$ along the vertical direction is calculated through a expression t1 (or expression t1-2) with respect to which $a_1^{(1)} \neq 0$ is true,

$$Ct^{(1-1)}(i,j) = t^{(1-1)}|G(i,j-1) - RB(i,j)|$$

$$+ (1-t^{(1-1)})|G(i,j+1) - RB(i,j)|$$

is incorporated in the vertical similarity degree Ct(i,j), and since the first similarity component $Cy^{(1)}(i,j)$ along the horizontal direction is calculated through expression y1 (or expression y1-2) with respect to which $b_1^{(1)} \neq 0$ is true,

$$Cy^{(1-1)}(i,j) = y^{(1-1)}|G(i-1,j) - RB(i,j)|$$

$$+ (1-y^{(1-1)})|G(i+1,j) - RB(i,j)|$$

is incorporated in the horizontal similarity degree Cy(i,j). It is to be noted that $t^{(1-1)}$ and $y^{(1-1)}$ are constants within a range of 0 ~ 1.

As a result, the fourth embodiment eliminates the "problem of expansion in the range over which color artifacts occur" which is not addressed in USP 5,652,621, and, at the same time, similarity degrees manifesting at the interpolation target vacancy can be calculated with accuracy.

In addition, the "color artifact reduction effect achieved by using a different-color similarity components" and the "color artifact reduction effect achieved by using same-color similarity components" in FIG. 7 are both realized through the fourth embodiment.

Consequently, although not as effective as the first embodiment, the occurrence of color artifacts in various types of images including images with a high spatial frequency such as black-and-white Nyquist stripes and natural images can be reduced through the fourth embodiment. In short, the fourth embodiment achieves an improvement in the interpolation processing accuracy with a high degree of reliability.

It is to be noted that while the conditions under which $\alpha_1 = \alpha_2 = \alpha$, $\gamma_1 = \gamma_2 = \gamma$ and $\alpha : \gamma = 1:1$ are imposed with respect to expressions 7 and 8 in the fourth embodiment, $\alpha_1$, $\alpha_2$, $\gamma_1$ and $\gamma_2$ may be any values as long as the weighted addition of the first and third similarity components is achieved at a rate that can be regarded as equal to each other.

In addition, while the vertical similarity degree Ct(i,j) and the horizontal similarity degree Cy(i,j) are calculated by performing weighted addition of the two similarity components obtained using the color information in FIGS. 5A (or 5B) and 5D in the fourth embodiment, the vertical similarity degree Ct(i,j) and the horizontal similarity degree Cy(i,j) may be calculated through weighted addition of at least two types of similarity components obtained using the color information in FIGS. 5A (or 5B) and the color information in at least one of FIGS. 5D ~ 5F, instead.

(Fifth Embodiment)

The following is an explanation of the operation achieved in the fifth embodiment.

Since the fifth embodiment is characterized in the method through which the vertical similarity degree Ct(i,j) and the horizontal similarity degree Cy(i,j) are calculated (corresponds to FIG. 4, S2 and S3) and the other aspects of the operation achieved therein are similar to those in the first embodiment, their explanation is omitted. In other words, the operation corresponding to FIG. 4, S2 and S3 is explained below.

The interpolation processing unit 19 reads out the color information in FIGS. 5A (or 5B), 5C, 5D, 5E and 5F (corresponds to FIG. 4, S2) and provides the color information to the similarity degree calculation unit 20.

The similarity degree calculation unit 20 calculates the first similarity component $Ct^{(1)}(i,j)$ along the vertical direction, the first similarity component $Cy^{(1)}(i,j)$ along the horizontal direction, the second similarity component $Ct^{(2)}(i,j)$ along the vertical direction, the second similarity component $Cy^{(2)}(i,j)$ along the horizontal direction, the third similarity component $Ct^{(3)}(i,j)$ along the vertical direction, the third similarity component $Cy^{(3)}(i,j)$ along the horizontal direction, the fourth similarity component $Ct^{(4)}(i,j)$ along the vertical direction, the fourth similarity component $Cy^{(4)}(i,j)$ along the horizontal direction, the fifth similarity component $Ct^{(5)}(i,j)$ along the vertical direction and the fifth similarity component $Cy^{(5)}(i,j)$ along the horizontal direction respectively through expression t1 (or expression t1-2), expression y1 (or expression y1-2), expression t2, expression y2, expression t3, expression y3, expression t4, expression y4, expression t5 and expression y5, by using the color information thus provided, and calculates the vertical similarity degree Ct(i,j) and the horizontal similarity degree Cy(i,j) through expressions 9 and 10 below (corresponds to FIG. 4, S3).

$$Ct(i,j)=\alpha_1 Ct^{(1)}(i,j)+\beta_1 Ct^{(2)}(i,j)+\gamma_1 Ct^{(3)}(i,j)$$

$$+\delta_1 Ct^{(4)}(i,j)+\varepsilon_1 Ct^{(5)}(i,j) \qquad \text{expression 9}$$

$$Cy(i,j)=\alpha_2 Cy^{(1)}(i,j)+\beta_2 Cy^{(2)}(i,j)+\gamma_2 Cy^{(3)}(i,j)$$

$$+\delta_2 Cy^{(4)}(i,j)+\varepsilon_2 Cy^{(5)}(i,j) \qquad \text{expression 10}$$

In the expressions above, $\alpha_1$, $\alpha_2$, $\beta_1$, $\beta_2$, $\gamma_1$, $\gamma_2$, $\delta_1$, $\delta_2$, $\varepsilon_1$ and $\varepsilon_2$ each represent a positive value used as a weighting coefficient in the corresponding term. It is to be noted that in this example, conditions under which $\alpha_1=\alpha_2=\alpha$, $\beta_1=\beta_2=\beta$, $\gamma_1=\gamma_2=\gamma$, $\delta_1=\delta_2=\delta$, $\varepsilon_1=\varepsilon_2=\varepsilon$ and $\alpha: \beta:\gamma:\delta:\varepsilon=4:4:2:1:1$ are imposed. In addition, if the similarity degree Ct(i,j) along the vertical direction and the similarity degree Cy(i,j) along the horizontal direction are to be standardized based upon the color information, a condition under which $\alpha+\beta+\gamma+\delta+\varepsilon=1$ may be imposed.

As described above, in the fifth embodiment, the first through fifth similarity components along the vertical direction and the horizontal direction are calculated, and the similarity degrees for the interpolation target vacancy are calculated by performing weighted addition of the five types of similarity components.

As a result, even when the direction manifesting a pronounced similarity cannot be ascertained based upon the results of the calculation of the third through fifth similarity components alone, as in FIG. 11C, for instance, the similarity degrees manifesting at the interpolation target vacancy can be calculated with a high degree of accuracy through effective use of the results of the calculation of the first similarity components and the second similarity components in the fifth embodiment. In addition, even when an erroneous judgment may be made with regard to the direction manifesting a pronounced similarity based upon the results of the calculation of the first similarity components alone, as in FIG. 12C, the similarity degrees manifesting at the interpolation target vacancy can be calculated with a high degree of accuracy through the use of the results of the calculation of the second through fourth similarity components.

Furthermore, as shown in FIG. 12C, since the red color component is not contained in cyan, the directionality cannot be ascertained by using the fifth similarity components among the same-color similarity components. However, similarity degrees manifesting at the interpolation target vacancy can be calculated with accuracy through effective use of the results of the calculation of the third similarity components and the fourth similarity components.

It is to be noted that the conditions imposed with respect to expressions 9 and 10 ($\alpha_1=\alpha_2=\alpha$, $\beta_1=\beta_2=\beta$, $\gamma_1=\gamma_2=\gamma$, $\delta_1=\delta_2=\delta$, $\varepsilon_1=\varepsilon_2=\varepsilon$ and $\alpha:\beta:\gamma:\delta:\varepsilon=4:4:2:1:1$) are conditions under which "$\alpha:\beta:(\gamma:\delta:\varepsilon)=1:1:1$" and "$\gamma:\delta:\varepsilon=2:1:1$" are satisfied at the same time.

By satisfying "$\alpha:\beta:(\gamma:\delta:\varepsilon)=1:1:1$" both the "color artifact reduction effect achieved by using different-color similarity components" and the "color artifact reduction effect achieved by using same-color similarity components" in FIG. 7 are achieved in a well-balanced manner at the same rate as in the first embodiment.

Furthermore, satisfying "$\gamma:\delta:\varepsilon=2:1:1$" means that the third similarity components having a greater "color artifact reduction effect achieved by same-color similarity components" compared to the fourth similarity components and the fifth similarity components are utilized effectively.

Consequently, through the fifth embodiment, the occurrence of color artifacts in various types of images including natural images as well as images with a higher spatial frequency such as black-and-white Nyquist stripes can be reduced. In other words, the fifth embodiment improves the interpolation processing accuracy with a high degree of reliability.

Moreover, since the fourth similarity component and the fifth similarity components which are not calculated in the first embodiment are calculated in the fifth embodiment, the same-color similarity components are calculated with the third through fifth similarity components complementing each other even in the case of an image in which a given color component is not present, an improvement over the first embodiment is achieved with regard to the accuracy with which the interpolation quantity for the interpolation target vacancy is calculated.

As in the first embodiment, the direction manifesting a pronounced similarity can be ascertained in the fifth embodiment when

$$|Ct(i,j) - Cy(i,j)| > T$$

is true with regard to an arbitrary value T.

When $\alpha_1=\alpha_2=\alpha$, $\beta_1=\beta_2=\beta$, $\gamma_1=\gamma_2=\gamma$, $\delta_1=\delta_2=\delta$ and $\varepsilon_1=\varepsilon_2=\varepsilon$ in expressions 9 and 10,

$$|Ct(i,j)-Cy(i,j)|=\alpha|Ct^{(1)}(i,j)-Cy^{(1)}(i,j)|+$$

$$\beta|Ct^{(2)}(i,j)-Cy^{(2)}(i,j)|+$$

$$\gamma|Ct^{(3)}(i,j)-Cy^{(3)}(i,j)|+$$

$$\delta|Ct^{(4)}(i,j)-Cy^{(4)}(i,j)|+$$

$$\varepsilon|Ct^{(5)}(i,j)-Cy^{(5)}(i,j)|$$

is achieved.

As a result, when the values calculated for the similarity components along the vertical direction and the horizontal direction are both "0" as in the case of the third through fifth similarity components in FIG. 11C, or when the values calculated for the similarity components along the vertical direction and the horizontal direction are close to each other as in the case of the first similarity components in FIG. 12C, for instance, using large values for the weighting coefficients does not greatly affect the value of $|Ct(i,j) - Cy(i,j)|$.

In other words, in the fifth embodiment, even when similarity components (e.g., the third through fifth similarity components in FIG. 11C) that are not suited for use in the interpolation processing of the interpolation target vacancy are calculated and they are included in the weighted addition along with the similarity components (e.g., the first similarity components and the second similarity component in FIG. 11C) suited for the interpolation processing for the interpolation target vacancy, the similarity components suited for the interpolation processing of the interpolation target vacancy alone are utilized effectively to achieve highly accurate interpolation processing.

In addition, while the vertical similarity degree Ct(i,j) and the horizontal similarity degree Cy(i,j) are calculated in the fifth embodiment through the weighted addition of the five types of similarity components obtained using the color information in FIGS. 5A (or 5B), 5C, 5D, 5E and 5F, the vertical similarity degree Ct(i,j) and the horizontal similarity degree Cy(i,j) may instead be calculated through weighted addition of four types of similarity components obtained using the color information in FIGS. 5A (or 5B), 5C and 5D and the color information in either FIG. 5E or 5F.

(Sixth Embodiment)

FIG. 13 is a flowchart of the interpolation processing operation achieved in the sixth embodiment.

In FIG.3, the same step numbers as those in FIG. 4 are assigned to steps in which similar to that in the operation flowchart in FIG. 4 is implemented, and their explanation is omitted.

It is to be noted that the difference between the operation flowchart in FIG. 4 and the operation flowchart in FIG. 13 is that S3 and S4 in FIG. 4 are replaced by S101 ~ S103 in FIG. 13.

The following explanation of the interpolation processing operation achieved in the sixth embodiment mainly focuses on the processing implemented in S101 ~ S103 in FIG. 13.

The interpolation processing unit 19 reads out the color information in FIGS. 5A (or 5B), 5C, 5D, 5E and 5F (FIG. 13, S2) and provides the color information to the similarity degree calculation unit 20.

The similarity degree calculation unit 20 calculates a plurality of types of similarity degrees (FIG. 13, S101) by using the color information thus read out and provides the calculation results to the similarity judging unit 21.

It is to be noted that in the sixth embodiment, the first through fifth similarity components mentioned earlier are calculated as the plurality of types of similarity degrees. Namely, the similarity degree calculation unit 20 calculates the first through fifth similarity degrees corresponding to the individual similarity components through expression t1 (or expression t1-2), expression y1 (or expression y1-2) , expression t2, expression y2, expression t3, expression y3, expression t4, expression y4, expression t5 and expression y5 mentioned before.

The similarity judging unit 21, which has been provided with the plurality of types of similarity degrees, judges the direction manifesting a pronounced similarity for each type of similarity degree (FIG. 13, S102).

In order to simplify the subsequent explanation, the first through fifth similarity degrees are generically expressed as a kth similarity degree, (k : 1, ..., 5), with $Ct^{(k)}(i,j)$ representing the kth similarity degree along the vertical direction, $Cy^{(k)}(i,j)$ representing the kth similarity degree along the horizontal direction and $D^{(k)}(k : 1, ...,5)$ representing the value indicating the direction manifesting a pronounced similarity of a given type. It is assumed that "-1" is set for $D^{(k)}$ if the vertical similarity is pronounced, "1" is set for $D^{(k)}$ if the horizontal similarity is pronounced and "0" is set for $D^{(k)}$ if the two directions manifest roughly equal degrees of similarity.

For instance, if $Ct^{(k)}(i,j) < Cy^{(k)}(i,j)$ is true, the similarity judging unit 21 sets "- 1" for $D^{(k)}$ based upon the judgment that the vertical direction manifests a pronounced similarity, if $Ct^{(k)}(i,j) = Cy^{(k)}(i,j)$ is true, the similarity judging unit 21 sets "0" for $D^{(k)}$ and if $Ct^{(k)}(i,j) > Cy^{(k)}(i,j)$ is true, it sets "1" for $D^{(k)}$ based upon the judgment that the horizontal direction manifests a pronounced similarity.

Next, when the direction manifesting a pronounced similarity is judged for each type of similarity degree in this manner, the similarity judging unit 21 performs a majority operation by weighting the results of the judgment (hereafter referred to as a "weighted majority operation") to ascertain the direction along which the interpolation target vacancy manifests a pronounced similarity (FIG. 13, S103).

Namely, if the "number of types of similarity degrees for which the vertical similarity is judged to be more pronounced" is larger than the "number of types of similarity degrees for which the horizontal similarity is judged to be more pronounced", the similarity judging unit 21 judges that the vertical similarity is pronounced, whereas if the "number of types of similarity degrees for which the horizontal similarity is judged to be more pronounced" is larger than the "number of types of similarity degrees for which the vertical similarity is judged to be more pronounced" , the similarity judging unit 21 judges that the horizontal similarity is pronounced.

The similarity judging unit 21 may calculate an evaluation value D(i,j) to be used for such a judgment through the following expression 11;

$$D(i,j) = \alpha D^{(1)}(i,j) + \beta D^{(2)}(i,j) + \gamma D^{(3)}(i,j) +$$

$$\delta D^{(4)}(i,j) + \varepsilon D^{(5)}(i,j) \qquad \text{expression 11}$$

In the expression above, $\alpha, \beta, \gamma, \delta$ and $\varepsilon$ each represent a positive value used as the weighting coefficient in the corresponding term. In this example, they are the values satisfying $\alpha:\beta:\gamma:\delta:\varepsilon = 4:4:2:1:1$ as in the fifth embodiment. Alternatively, $\alpha, \beta, \gamma, \delta, \varepsilon$ may be values that satisfy $\alpha:\beta:\gamma:\delta:\varepsilon = 1:1:1:0:0$, $1:1:0:0:0$, $0:1:1:0:0$ or $1:0:1:0:0$ as in the first through fourth embodiments, instead.

In addition, with regard to the evaluation value D(i,j) thus calculated, if D(i,j) < 0 is true, the similarity judging unit 21 judges that the vertical similarity is pronounced, if D(i,j) > 0 is true, it judges that the horizontal similarity is pronounced and if D(i,j) = 0 is true, it judges that roughly equal similarity degrees manifest along the two directions.

As explained above, in the sixth embodiment, the first through fifth similarity degrees along the vertical direction and the horizontal direction are calculated, the direction manifesting a pronounced similarity is judged for each type of similarity degree and the direction along which the interpolation target vacancy manifests pronounced similarity is ascertained through a weighted majority operation performed on the results of the judgment thus made.

As a result, as in the fifth embodiment, the occurrence of color artifacts in various types of images including natural images as well as images with a high spatial frequency such as black-and-white Nyquist stripes can be reduced through the sixth embodiment implemented by ensuring that $\alpha{:}\beta{:}\gamma{:}\delta{:}\epsilon$ = 4:4:2:1:1 with respect to expression 11. In short, the sixth embodiment achieves an improvement in the interpolation processing accuracy with a high degree of reliability.

While an example in which five types of similarity degrees (the first through fifth similarity degrees) are calculated is explained in reference to the sixth embodiment, any number of different types of similarity degrees may be calculated in the interpolation processing method through which the direction along which the interpolation target vacancy manifests pronounced similarity is judged through a weighted majority operation, as long as at least two types of similarity degrees among the first through fifth similarity degrees are calculated.

For instance, combinations of similarity degrees that should be calculated in the interpolation processing achieved by determining the direction along which the interpolation target vacancy manifests pronounced similarity through a weighted majority operation include "the first similarity degrees and the second similarity degrees (as in the second embodiment)", "the second similarity degrees and the third similarity degrees (as in the third embodiment)", "the first similarity degrees and the third similarity degrees (as in the fourth embodiment) " and "the first similarity degrees, the second similarity degrees and the third similarity degrees (as in the first embodiment)".

It is to be noted that the color artifact reduction effects achieved through these combinations of similarity degrees correspond to the color artifact reduction effects achieved in the first through fourth embodiments.

(Seventh Embodiment)

FIG. 14 is a functional block diagram of the electronic still camera corresponding to the seventh through tenth embodiments.

In FIG. 14, the same reference numbers are assigned to components having functions identical to those in the functional block diagram in FIG. 1, to preclude the necessity for an explanation of their structures.

It is to be noted that the structural difference between FIG. 14 and FIG. 1 is that an interpolation processing unit 30, a similarity degree calculation unit 31 and an interpolation quantity calculation unit 32 are provided in FIG. 14 in place of the interpolation processing unit 19, the similarity degree calculation unit 20, the similarity judging unit 21 and the interpolation quantity calculation unit 22 in FIG. 1.

In addition, the electronic still camera in FIG. 14 engages in an operation similar to that performed by the electronic still camera in FIG. 1, except for the operation corresponding to FIG. 3, S4 (the step in which the interpolation processing is implemented).

FIG. 15 is a flowchart of the interpolation processing operation achieved in the seventh embodiment.

Since the seventh embodiment is characterized by the interpolation processing method adopted therein and the other aspects of the operation are similar to those in the first embodiment, the following explanation of the operation achieved in the seventh embodiment given in reference to FIGS. 14 and 15 will focus on the interpolation processing operation.

First, the interpolation processing unit 30 selects an interpolation target vacancy as in the first embodiment (FIG. 15, S1) and reads out the color information RB(i,j) at the interpolation target vacancy and the color information G(i,j-1), G(i,j+1), G(i-1,j) and G(i+1,j) at the lattice points adjacent to the interpolation target vacancy from the image buffer memory 15 (FIG. 15, S2).

It is to be noted that the color information RB(i,j) at the interpolation target vacancy and the color information G(i,j-1), G(i,j+1), G(i-1,j) and G(i+1,j) at the lattice points adjacent to the interpolation target vacancy thus read out from the image buffer memory 15 are provided to the similarity degree calculation unit 31.

The similarity degree calculation unit 31 calculates a value Q indicating the characteristics of the image around the interpolation target vacancy (hereafter referred to as the "partial image characteristic value Q") through the following expression by using the color information G(i,j-1), G(i,j+1), G(i-1,j) and G(i+1,j) at the lattice points thus provided (FIG. 15, S3).

$$Q = Q1 - \theta \times Q2 \qquad \text{expression 12}$$

Q1 and Q 2 in expression 12 satisfies

$$Q1=|(G(i,j-1)+G(i,j+1)) - (G(i-1,j)+G(i+1,j))| \qquad \text{expression 13}$$

$$Q2=(C1(i,j)+C2(i,j)) \qquad \text{expression 14,}$$

with θ representing a predetermined constant.

C1(i,j) and C2(i,j) in the expression 14 satisfy;

$$C1(i,j)=Ct^{(3)}(i,j)$$

$$+t1^{\cdot}Ct^{(3)}(i\text{-}1,j\text{-}1)$$

$$+t2^{\cdot}Ct^{(3)}(i\text{-}1,j\text{+}1)$$

$$+t3^{\cdot}Ct^{(3)}(i\text{+}1,j\text{-}1)$$

$$+t4^{\cdot}Ct^{(3)}(i\text{+}1,j\text{+}1) \qquad \text{expression 15}$$

$$C2(i,j)=Cy^{(3)}(i,j)$$

$$+y1^{\cdot}Cy^{(3)}(i\text{-}1,j\text{-}1)$$

$$+y2^{\cdot}Cy^{(3)}(i\text{-}1,j\text{+}1)$$

$$+y3{\cdot}Cy^{(3)}(i\text{+}1,j\text{-}1)$$

$$+y4^{\cdot}Cy^{(3)}(i\text{+}1,j\text{+}1) \qquad \text{expression 16}$$

$Ct^{(3)}(i,j)$ in expression 15 satisfies;

$$Ct^{(3)}(i,j)=|G(i,j\text{-}1)\text{-}G(i,j\text{+}1)| \qquad \text{expression 17}$$

(identical to expression t3), with t1, t2, t3 and t4 each representing a predetermined constant (they may all be "0").
$Cy^{(3)}(i,j)$ in expression 16 satisfies;

$$Cy^{(3)}(i,j)=|G(i\text{-}1,j)\text{-}G(i\text{+}1,j)| \qquad \text{expression 18}$$

(identical to expression y3) , with y1, y2, y3 and y4 each representing a predetermined constant (they may all be "0").
Namely, when the difference (Q1) between "G(i,j-1) + G(i,j+1)" and "G(i-1,j) + G(i+1,j)" is large, the partial image characteristic value Q indicates that there is a large discrepancy between the sum of the values indicated by the color information at the lattice points adjacent to the interpolation target vacancy along the vertical direction and the sum of the values indicated by the color information at the lattice points adjacent to the interpolation target vacancy along the horizontal direction.
In addition, if the sum (Q2) of C1(i,j) and C2(i,j) is small, the partial image characteristics value Q indicates that the inclination of the color information along the vertical direction and the inclination of the color information along the horizontal direction around the interpolation target vacancy are both slight.
When the partial image characteristic value Q has been calculated through the expression above, the similarity degree calculation unit 31 makes a decision as to whether or not "Q ≦ Qth " is true with regard to that partial image characteristic value Q (FIG. 15, S4).
It is to be noted that Qth represents a predetermined threshold value, and if the partial image characteristic value Q exceeds the threshold value Qth (if Q 1 is large and Q 2 is small) , the likelihood of the image around the interpolation target vacancy being black-and-white Nyquist stripes is high.
If "Q ≦ Qth " is true, the similarity degree calculation unit 31 calculates the vertical similarity degree Ct(i,j) and the horizontal similarity degree Cy(i,j) through the following expressions by using the color information G(i,j-1), G(i,j+1), G(i-1,j) and G(i+1,j) at the lattice points which has already been read out (FIG. 15, S5).

$$Ct(i,j)=C1(i,j) \qquad \text{expression 19}$$

$$Cy(i,j)=C2(i,j) \qquad \text{expression 20,}$$

with C1(i,j) and C2(i,j) representing values calculated through expressions 15 ~ 18 explained earlier.

If, on the other hand, "Q $\leqq$ Qth" is not true, (if "Q > Qth"), the similarity degree calculation unit 31 calculates the vertical similarity degree Ct(i,j) and the horizontal similarity degree Cy(i,j) through the following expressions by using the color information RB(i,j) at the interpolation target vacancy and the color information G(i,j-1), G(i,j+1), G(i-1,j) and G(i+1,j) at the lattice points which have already been read out (FIG. 15, S6)

$$Ct(i,j)=D1(i,j) \qquad \text{expression 21}$$

$$Cy(i,j)=D2(i,j) \qquad \text{expression 22}$$

D1(i,j) in expression 21 satisfies

$$D1(i,j)=Ct^{(1-4)}(i,j)$$

$$+u1 \cdot Ct^{(1-4)}(i-1,j-1)$$

$$+u2 \cdot Ct^{(1-4)}(i-1,j+1)$$

$$+u3 \cdot Ct^{(1-4)}(i+1,j-1)$$

$$+u4 \cdot Ct^{(1-4)}(i+1,j+1) \qquad \text{expression 23}$$

and D2(i,j) in expression 22 satisfies

$$D2(i,j)=Cy^{(1-4)}(i,j)$$

$$+v1 \cdot Cy^{(1-4)}(i-1,j-1)$$

$$+v2 \cdot Cy^{(1-4)}(i-1,j+1)$$

$$+v3 \cdot Cy^{(1-4)}(i+1,j-1)$$

$$+v4 \cdot Cy^{(1-4)}(i+1,j+1) \qquad \text{expression 24}$$

$Ct^{(1-4)}(i,j)$ in expression 23 satisfies either;

$$Ct^{(1-4)}(i,j)=t|RB(i,j)-G(i,j-1)|$$

$$+(1-t)|RB(i,j)-G(i,j+1)| \qquad \text{expression 25a}$$

or

$$Ct^{(1-4)}(i,j)=|t \cdot G(i,j-1)$$

$$+(1-t) \cdot G(i,j+1)-RB(i,j)| \qquad \text{expression 25b,}$$

with u1, u2, u3, u4 and t each representing a predetermined constant.

$Cy^{(1-4)}(i,j)$ in expression 24 satisfies either;

$$Cy^{(1-4)}(i,j)=y|RB(i,j)-G(i-1,j)|$$

$$+(1-y)|RB(i,j)-G(i+1,j)| \qquad \text{expression 26a}$$

or

$$Cy^{(1-4)}(i,j)=|y^{.}G(i-1,j)$$

$$+(1-y)^{.}G(i+1,j)-RB(i,j)| \qquad \text{expression 26b}$$

with v1, v2, v3, v4 and y each representing a predetermined constant.

In other words, the similarity degree calculation unit 31 is capable of making a decision as to whether or not the color information $RB(i,j)$ at the interpolation target vacancy is to be used when calculating the vertical similarity degree $Ct(i,j)$ and the horizontal similarity degree $Cy(i,j)$, based upon the level of the partial image characteristic value Q.

It is to be noted that the similarity degree calculation unit 31 provides the interpolation quantity calculation unit 32 with the vertical similarity degree $Ct(i,j)$ and the horizontal similarity degree $Cy(i,j)$ calculated through this process.

The interpolation quantity calculation unit 32, which has been provided with the vertical similarity degree $Ct(i,j)$ and the horizontal similarity degree $Cy(i,j)$, calculates the interpolation quantity $G'(i,j)$ for the interpolation target vacancy by using the color information $G(i,j-1)$, $G(i,j+1)$, $G(i-1,j)$ and $G(i+1,j)$ at the lattice points that has already been provided via the interpolation processing unit 30 as follows;

$$G'(i,j)=\{(G(i,j-1)+G(i,j+1))^{.}(1+f(x))$$

$$+(G(i-1,j)+G(i+1,j))^{.}(1-f(x))\}/4 \qquad \text{expression 27,}$$

with

$$x=(Cy(i,j)-Ct(i,j))$$

$$/\{(Cy(i,j)+Ct(i,j))^{.}T1+T0\} \qquad \text{expression 28,}$$

and

$$f(x) = x \text{ when } -1 \leqq x \leqq 1$$

$$f(x) = 1 \text{ when } x > 1 \text{ and}$$

$$f(x) = -1 \text{ when } x < -1.$$

In expression 28, T1 represents a constant satisfying "$0 \leqq T1 \leqq 1$", and it is assumed that when each set of color information indicates a numerical value (eight bits) between 0 and 255, T0 is a constant within a range between "0 and 100". In addition, T0 and T1 never assume the value "0" at the same time. For instance, possible combinations (t1, t0) of T1 and T0 include (0.3, 0), (0.5, 10), (0.7, 0), (0.3, 40), (0.5, 40) and (0.7, 40).

As described above, the interpolation quantity calculation unit 32 uses the value of x obtained through expression 28 as the value for evaluating the similarity manifesting at the interpolation target vacancy and calculates the interpolation quantity for the interpolation target vacancy in correspondence to the evaluation value. When "$x > 0$" is true, the vertical similarity is more pronounced than the horizontal similarity, whereas when "x < 0" is true, the horizontal similarity is more pronounced than the vertical similarity.

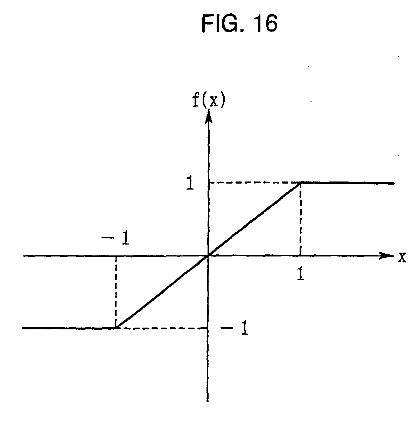

It is to be noted that the f(x) is rendered in the graph presented in FIG. 16.

Expression 27 is equivalent to;

$$G'(i,j) = (G(i,j-1) + G(i,j+1))/2$$

when "x >1" is true since "f(x) = 1" in such a case, whereas it is equivalent to

$$G'(i,j) = (G(i-1,j) + G(i+1,j))/2$$

if "x < -1" is true since "f(x) = -1" in such a case.

In other words, the interpolation quantity calculation unit 32 makes a decision as to whether or not the interpolation target vacancy manifests pronounced vertical similarity by determining whether not "x > 1" is true (FIG. 15, S7), and makes a decision as to whether or not the interpolation target vacancy manifests pronounced horizontal similarity by determining whether or not "x < -1" is true (FIG. 15, S8).

In addition, if the interpolation target vacancy manifests pronounced vertical similarity, the interpolation quantity calculation unit 32 calculates the average of the values indicated by the color information at the two lattice points adjacent along the vertical direction as the interpolation quantity for the interpolation target vacancy (FIG. 15, S9), whereas if the interpolation target vacancy manifests pronounced horizontal similarity, the interpolation quantity calculation unit 32 calculates the average of the values indicated by the color information at two lattice points adjacent along the horizontal direction as the interpolation quantity for the interpolation target vacancy (FIG. 15, S10).

When "-1 ≦ x ≦ 1" is true, expression 27 is equivalent to;

$$G'(i,j)=\{(G(i,j-1)+G(i,j+1))/2\}\dot{\,}\{(1+x)/2\}$$

$$+\{(G(i-1,j)+G(i+1,j))/2\}\dot{\,}\{(1-x)/2\}$$

In the above expression, "(G(i,j-1) + G(i,j+1))/2" represents the average of the values indicated by the color information at the two lattice points adjacent along the vertical direction and "(1 + x)/2" is equivalent to the weighting coefficient corresponding to the vertical similarity degree.

In addition, "(G(i-1,j) + G(i+1,j))/2 represents the average of the values indicated by the color information at the two lattice points adjacent along the horizontal direction and "(1 - x)/2" is equivalent to the weighting coefficient corresponding to the horizontal similarity degree.

In other words, if it is decided that neither direction manifests pronounced similarity, the interpolation quantity calculation unit 32 calculates the interpolation quantity for the interpolation target vacancy by performing weighted addition of the average of the values indicated by the color information at the two lattice points adjacent to the interpolation target vacancy along the vertical direction and the average of the values indicated by the color information at the two lattice points adjacent to the interpolation target vacancy along the horizontal direction, based upon the evaluation value used to evaluate the similarity degrees along the individual directions (FIG. 15, S11).

In addition, the interpolation processing unit 30 makes a decision as to whether or not the interpolation processing has been completed for all the vacancies (FIG. 15, S12). It is to be noted that the processing described above (the processing performed in FIG. 15, S1 and subsequent steps) is repeated until it is confirmed that the interpolation processing for all the vacancies has been completed through such decision-making.

As explained above, through the seventh embodiment, the color information at the interpolation target vacancy is reflected with a high degree of reliability when calculating the vertical similarity degree and the horizontal similarity degree in a specific situation in which the image around the interpolation target vacancy is, for instance, a black-and-white Nyquist stripes (an image with the values indicated by the color information at two lattice points adjacent to the interpolation target vacancy along the vertical direction extremely close to each other, the values indicated by the color information at the two lattice points adjacent to the interpolation target vacancy along the horizontal direction extremely close to each other and a great different manifesting between the value indicated by the color information at a lattice point adjacent to the interpolation target vacancy to the interpolation target vacancy along the vertical direction and value indicated by the color information at a lattice point adjacent along the horizontal direction).

As a result, the similarity degrees can be calculated with accuracy through the seventh embodiment even for an image which tends to be erroneously judged to manifest roughly equal similarity degrees along the two directions in the interpolation processing in the prior art (an image which actually manifests pronounced similarity along one of the directions).

In addition, if the image around the interpolation target vacancy is of a type that allows calculation of similarity degrees without requiring the use of the color information at the interpolation target vacancy, the similarity degrees can be calculated simply by using the color information from the lattice points adjacent to the interpolation target vacancy in the seventh embodiment.

In short, in the seventh embodiment, in which the similarity degrees can be calculated with accuracy in correspondence to the characteristics of the image around the interpolation target vacancy, an improvement in the interpolation processing accuracy is achieved with a high degree of reliability.

Now, the method adopted to identify the characteristics of the image is explained. According to the present invention, image characteristics are ascertained in order to identify an "area manifesting an unusually drastic change", and in the explanation given above, an area over which "Q > Qth" is true is equivalent to an "area manifesting an unusually drastic change". Since various methods may be adopted to ascertain such image characteristics, some of them are explained below.

In expression 13 mentioned earlier, Q 1 represents a value equivalent to (twice) the absolute value of the difference between the average of the values indicated by the color information at the two lattice points adjacent to the interpolation target vacancy along the vertical direction and the average of the values indicated by the color information at the two lattice points adjacent to the interpolation target vacancy along the horizontal direction. Thus, an area manifesting a large Q 1 is highly likely to be an image of black-and-white Nyquist stripes, and accordingly, it is possible to identify an "area manifesting an unusually drastic change" based upon Q 1 alone.

Namely, by making a decision as to whether or not "Q 1 > Q1th; Qlth is a constant" is true instead of making a decision as to whether or not "Q > Qth" is true, an "area manifesting an unusually drastic change" can be identified.

In addition, while an area over which Q 1 is large and Q 2 is small is identified by making a decision as to whether or not "Q > Qth" is true in the seventh embodiment, this identification may be made by making a decision as to whether or not "Q1 > Q1th and Q2 < Q2th; Qlth and Q2th are constants" is true instead of making a decision as to whether or not "Q > Qth" is true.

It is to be noted that the decision-making with respect to "Q = Q1 - $\theta$.Q2 > Qth" is similar to the decision-making with respect to "Q1 > Q1th and Q2 < Q2th".

As described earlier, when the sum (Q 2) of C1(i,j) and C2(i,j) is small, the inclination of the color information along the vertical direction and the inclination of the color information along the horizontal direction around the interpolation target vacancy are both slight. In such a case, the area to undergo the interpolation processing is highly likely to be either a completely flat image area with no change at all or part of black-and-white Nyquist stripes.

It is to be noted that the results of interpolation processing implemented on a completely flat image area do not change much regardless of whether the interpolation processing is implemented by averaging the values of the color information at the lattice points adjacent along the vertical direction or the interpolation processing is implemented by averaging the values of the color information at the lattice points adjacent along the horizontal direction.

Thus, no significant problem is caused even when "an area manifesting an unusually drastic change" that includes a completely flat portion is identified by determining that both C1(i,j) and C2(i,j) are small.

In other words, the effect of the interpolation processing is substantially sustained by making a decision as to whether or not "C1(i,j) < C1th and C2(i,j) < C2th : C1th and C2th are constants" is true instead of making a decision as to whether or not "Q > Qth" is true.

In addition, since "Q2 = C1(i,j) + C2(i,j)", a decision may be made as to whether or not "C2 < Q2th2; Q2th2 is a constant" is true, instead of making a decision as to whether or not "Q > Qth" is true .

As described above, various methods may be adopted to identify image characteristics, and any mathematical expressions may be used as long as "area manifesting an unusually drastic change" can be identified.

It is to be noted that while f (x) is rendered as shown in FIG. 16 in the seventh embodiment, f(x) may be any other function as long as the average of the values indicated by the color information at the two lattice points adjacent along the direction manifesting a pronounced similarity is used as the interpolation quantity for the interpolation target vacancy when either the vertical direction or the horizontal direction manifests a pronounced similarity.

In addition, while the value of f(x) is calculated during the calculation of the interpolation quantity, pre-calculated values of f(x) may be stored at a look-up table provided inside the interpolation quantity calculation unit 32, for instance, so that a value of f(x) is obtained by referencing the look-up table in correspondence to the vertical similarity degree Ct(i,j) or the horizontal similarity degree Cy(i,j) manifesting at the interpolation target vacancy.

Furthermore, in order to avoid performing division when calculating x, x may be calculated through multiplication by first calculating the value corresponding to the denominator and then replacing the value with a value corresponding to "1/denominator" in reference to the look-up table. Alternatively, the absolute value of the numerator and the denominator may be logarithm converted by referencing the table or the like and then their difference may be taken to be compared against a specific value (in this case, the signs should be separately ascertained).

Moreover, while the direction manifesting a pronounced similarity is judged based upon the value of x in the seventh embodiment, the vertical direction may be judged to manifest pronounced similarity when the vertical similarity degree Ct(i,j) indicates a value equal to or lower than a threshold value Th and the horizontal similarity degree Cy(i,j) exceeds the threshold value Th, for instance, and the horizontal direction may be judged to manifest pronounced similarity when the horizontal similarity degree Cy(i,j) indicates a value equal to or lower than the threshold value Th and the vertical similarity degree Ct(i,j) exceeds the threshold value.

In addition, while the interpolation quantity G'(i,j) for the interpolation target vacancy is calculated using the weighting coefficients set in correspondence to the various types of similarity degrees when the vertical similarity degree Ct(i,j) and the horizontal similarity degree Cy(i,j) are close to each other in the seventh embodiment, the interpolation quantity G'(i,j) for the interpolation target vacancy may be instead calculated through

$$G'(i,j) = \{G(i,j-1) + G(i,j+1) + G(i-1,j) + G(i+1,j)\}/4$$

or

$$G'(i,j) = median\{G(i,j-1), G(i,j+1), G(i-1,j), G(i+1,j)\}.$$

In the expression above, "median {}" represents a function used to calculate the median of a plurality of elements, and it is assumed that if there are an even number of elements, the average of the two elements at the center is calculated.

(Eighth embodiment)

FIG. 17 is a flowchart of the interpolation processing operation achieved in the eighth embodiment.

The following is an explanation of the interpolation processing in the eighth embodiment, given in reference to FIG. 17.

It is assumed that a "mode selector switch" is provided at the casing of the electronic still camera in the eighth embodiment to enable the operator to select either a "black-and-white image photographing mode" or a "color image photographing mode". For instance, when photographing a subject which may be regarded to be achromatic, such as a white board with black letters written on it, the operator selects the "black-and-white image photographing mode" through the "mode selector switch" and presses the shutter release button. In addition, information indicating state of the mode selector switch (hereafter referred to as the "mode information") is transmitted to the control unit 10 via the interface unit 18 in the eighth embodiment.

In the eighth embodiment, upon recognizing that the shutter release button has been pressed, the control unit 10 provides the "mode information" to the interpolation processing unit 30 in the image processing unit 17 and issues an instruction for an execution of interpolation processing.

In response to the instruction issued by the control unit 10 for the interpolation processing execution, the interpolation processing unit 30 makes a decision as to whether or not the "black-and-white image photographing mode" has been selected based upon the "mode information" (FIG. 17, S1).

If the interpolation processing unit 30 ascertains that the "black-and-white image photographing mode" has been selected through this decision-making, it repeatedly implements the processing in FIG. 17, S2 ~ S6. If, on the other hand, it is decided that "black-and-white image photographing mode" has not been selected, it repeatedly implements the processing in FIG. 17, S7 ~ S11.

First, the processing implemented when the interpolation processing unit 30 ascertains that the "black-and-white image photographing mode" has been selected is explained.

The interpolation processing unit 30 selects an interpolation target vacancy (FIG. 17, S2), reads out the color information RB(i,j) at the interpolation target vacancy and the color information G(i,j-1), G(i,j+1), G(i-1,j) and G(i+1,j) at the lattice points adjacent to the interpolation target vacancy from the image buffer memory 15 (FIG. 17, S3) and provides the color information to the similarity degree calculation unit 31, as in the first embodiment.

Using the color information thus provided, the similarity degree calculation unit 31 calculates the vertical similarity degree Ct(i,j) and the horizontal similarity degree Cy(i,j) through the following expressions.
Ct(i,j)=D1(i,j) ··· same as expression 21,
Cy(i,j)=D2(i,j) ··· same as expression 22, with D1(i,j) and D2(i,j) representing values calculated as in the seventh embodiment (through expressions 23 ~ 26).

Namely, the similarity degree calculation unit 31 calculates the vertical similarity degree Ct(i,j) and the horizontal similarity degree Cy(i,j) by using the color information RB(i,j) at the interpolation target vacancy and the color information G(i,j-1), G(i,j+1), G(i-1,j) and G(i+1,j) at the lattice points adjacent to the interpolation target vacancy (FIG. 17, S4).

It is to be noted that the similarity degree calculation unit 31 provides the vertical similarity degree Ct(i,j) and the horizontal similarity degree Cy(i,j) thus calculated to the interpolation quantity calculation unit 32.

The interpolation quantity calculation unit 32, which has been provided with the vertical similarity degree Ct (i,j) and the horizontal similarity degree Cy(i,j), calculates an interpolation quantity as in the seventh embodiment (FIG. 17, S5 : corresponds to FIG. 15, S7 ~ S11).

After the interpolation quantity is calculated by the interpolation quantity calculation unit 32, the interpolation processing unit 30 makes a decision as to whether or not the interpolation processing has been completed for all the vacancies (FIG. 17, S6). It is to be noted that the processing described above (the processing performed in FIG. 17, S2 and subsequent steps) is repeated until it is ascertained that the interpolation processing for all the vacancies has been completed through this decision-making.

Next, the processing performed when it is decided that the "black-and-white image photographing mode" has not been selected (the "color image photographing mode" has been selected) is explained.

The interpolation processing unit 30 selects an interpolation target vacancy (FIG. 17, S7), as in FIG. 17, S2, reads out the color information G(i,j-1), G(i,j+1), G(i-1,j) and G(i+1,j) at the lattice points adjacent to the interpolation target vacancy from the image buffer memory 15 (FIG. 17, S8) and provides the color information to the similarity degree calculation unit 31.

Using the color information thus provided, the similarity degree calculation unit 31 calculates the vertical similarity degree Ct(i,j) and the horizontal similarity degree Cy(i,j) through the following expressions.

Ct(i,j) = C1(i,j) ··· same as expression 19,
Cy(i,j) = C2(i,j) ··· same as expression 20, with C1(i,j) and C2(i,j) representing values calculated as in the seventh embodiment (through expressions 15 ~ 18).

Namely, the similarity degree calculation unit 31 calculates the vertical similarity degree Ct(i,j) and the horizontal similarity degree Cy(i,j) by using the color information G(i,j-1), G(i,j+1), G(i-1,j) and G(i+1,j) at the lattice points adjacent to the interpolation target vacancy (FIG. 17, S9).

It is to be noted that the similarity degree calculation unit 31 provides the vertical similarity degree Ct(i,j) and the horizontal similarity degree Cy(i,j) thus calculated to the interpolation quantity calculation unit 32.

The interpolation quantity calculation unit 32 which has been provided with the vertical similarity degree Ct(i, j) and the horizontal similarity degree Cy(i,j), calculates an interpolation quantity as in the seventh embodiment (FIG. 17, S9 : corresponds to FIG. 15, S7 ~ S11).

After the interpolation quantity is calculated by the interpolation quantity calculation unit 32, the interpolation processing unit 30 makes a decision as to whether or not the interpolation processing has been completed for all the vacancies (FIG. 17, S6). It is to be noted that the processing described above (the processing performed in FIG. 17, S7 and subsequent steps) is repeated until it is ascertained that the interpolation processing for all the vacancies has been completed through this decision-making.

As explained above, in the eighth embodiment, the color information at the vacancy can be reflected with a high degree of reliability in the calculation of the vertical similarity degree and the horizontal similarity degree as long as the image undergoing the interpolation processing is regarded as achromatic.

Thus, since the similarity degrees of images which are regarded as achromatic can be calculated with accuracy, the interpolation processing accuracy is improved with a high degree of reliability.

(Ninth Embodiment)

FIG. 18 is a flowchart of the interpolation processing operation achieved in the ninth embodiment.

The following is an explanation of the interpolation processing operation in the ninth embodiment, given in reference to FIG. 18.

The interpolation processing unit 30 selects an interpolation target vacancy (FIG. 17, S1), reads out the color information RB(i,j) at the interpolation target vacancy and the color information G(i,j-1), G(i,j+1), G(i-1,j) and G(i+1,j) at the lattice points adjacent to the interpolation target vacancy from the image buffer memory 15 (FIG. 17, S2) and provides the color information to the similarity degree calculation unit 31, as in the first embodiment.

The similarity degree calculation unit 31 calculates a partial image characteristic value Q as in the seventh embodiment (through expressions 12 ~ 14) by using the color information G(i,j-1), G(i,j+1), G(i-1,j) and G(i+1,j) at the lattice points thus provided (FIG. 17, S3).

In addition, using C1(i,j) and C2(i,j) calculated through expressions 15 ~ 18 and D1(i,j) and D2(i,j) calculated through expressions 23 ~ 26, the similarity degree calculation unit 31 calculates the vertical similarity degree Ct(i,j) and the horizontal similarity degree Cy(i,j) through the following expressions in correspondence to the partial image characteristic value Q that has been calculated.

When "Q $\leqq$ Qth " is true,

$$Ct(i,j)=A_2{}^{\cdot}C1(i,j)+(1-A_2){}^{\cdot}D1(i,j)$$

$$Cy(i,j)=B_2{}^{\cdot}C2(i,j)+(1-B_2){}^{\cdot}D2(i,j),$$

when "Q > Qth " is true,

$$Ct(i,j)=A_1{}^{\cdot}C1(i,j)+(1-A_1){}^{\cdot}D1(i,j)$$

$$Cy(i,j)=B_1{}^{\cdot}C2(i,j)+(1-B_1){}^{\cdot}D2(i,j),$$

with Qth representing a preset threshold value and $A_1$, $A_2$, $B_1$ and $B_2$ satisfying $0 \leqq A_1 < A_2 \leqq 1$ and $0 \leqq B_1 < B_2 \leqq 1$.

Namely, when "Q $\leqq$ Qth " is true, the similarity degree calculation unit 31 calculates the vertical similarity degree Ct(i,j) and the horizontal similarity degree Cy(i,j) by setting the weighting coefficients for C1(i,j) and C2(i,j) larger than the weighting coefficients used when "Q > Qth " is true (FIG. 17, S5).

In addition, when "Q > Qth " is true, the similarity degree calculation unit 31 calculates the vertical similarity degree Ct(i,j) and the horizontal similarity degree Cy(i,j) by setting the weighting coefficients for D1(i,j) and D2(i,j) larger than the weighting coefficients used when "Q $\leqq$ Qth " is true (FIG. 17, S6) and provides the results to the interpolation quantity calculation unit 32.

D1(i,j) and D2(i,j) are similarity components calculated by using the color information RB(i,j) at the interpolation target vacancy and the color information G(i,j-1), G(i,j+1), G(i-1,j) and G(i+1,j) at the lattice points. Consequently, the weight of the color information RB(i,j) at the interpolation target vacancy on the vertical similarity degree Ct(i,j) and the horizontal similarity degree Cy(i,j) is larger when "Q > Qth" is true compared to when "Q $\leqq$ Qth" is true.

The interpolation quantity calculation unit 32, which has been provided with the vertical similarity degree Ct (i,j) and the horizontal similarity Cy(i,j), calculates an interpolation quantity as in the seventh embodiment (FIG. 17, S7 : corresponds to FIG. 14, S7 ~ S11).

After the interpolation quantity is calculated by the interpolation quantity calculation unit 32, the interpolation processing unit 30 makes a decision as to whether or not the interpolation processing has been completed for all the vacancies (FIG. 17, S8). It is to be noted that the processing described above (the processing performed in FIG. 17, S1 and subsequent steps) is repeated until it is ascertained that the interpolation processing for all the vacancies has been completed through this decision-making.

As explained above, in the ninth embodiment, the weight of the color information at the interpolation target vacancy on the vertical similarity degree and the horizontal similarity degree can be adjusted in correspondence to the partial image characteristic value Q.

It goes without saying that the condition used to identify the characteristics of an image is not limited to Q and any of the various other conditions may be used, as explained in the seventh embodiment.

Thus, the ninth embodiment, in which the similarity degrees can be calculated accurately in correspondence to the characteristics of the image around the interpolation target vacancy, improves the interpolation processing accuracy with a high degree of reliability.

(Tenth Embodiment)

FIG. 19 is a flowchart of the interpolation processing operation achieved in the tenth embodiment.

The following is an explanation of the interpolation processing the tenth embodiment, given in reference to FIG. 19.

It is assumed that a "mode selector switch" is provided at the casing of the electronic still camera in the tenth embodiment to enable the operator to select either a "black-and-white image photographing mode" or a "color image photographing mode", as in the eighth embodiment. In addition, information indicating the state of the mode selector switch is transmitted to the control unit 10 via the interface unit 18.

In the tenth embodiment, upon recognizing that the shutter release button has been pressed, the control unit 10 provides the "mode information" to the interpolation processing unit 19 in the image processing unit 17 and issues an instruction for the execution of interpolation processing.

In response to the instruction issued by the control unit 10 for an interpolation processing execution, the interpolation processing unit 30 makes a decision as to whether not the "black-and-white image photographing mode" has been selected based upon the "mode information (FIG. 19, S1). It is to be noted that the results of this decision-making are provided to the similarity degree calculation unit 31.

Based upon the results of the decision-making, the similarity degree calculation unit 31 sets the weighting coefficients to be used to calculate the vertical similarity degree Ct(i,j) and the horizontal similarity degree Cy(i,j) as detailed below.

It is to be noted that in the tenth embodiment, the weighting coefficient used in conjunction with C1(i,j) to calculate the vertical similarity degree Ct(i,j) is referred to as A with the weighting coefficient for D1(i,j) referred to as (1-A). In addition, the weighting coefficient used in conjunction with C2(i,j) to calculate the horizontal similarity degree Cy(i,j) is referred to as B with the weighting coefficient for D2(i,j) referred to as (1-B).

When the "black-and-white image photographing mode" has been selected, the similarity degree calculation unit 31 sets

A = A1

B = B1, whereas if the "black-and-white image photographing mode" has not been selected (when the color image photographing mode" has been selected), the similarity degree calculation unit 31 sets A and B to;

A = A2

B = B2 , with $0 \leqq A1 < A2 \leqq 1$ and $0 \leqq B1 < B2 \leqq 1$ .

Namely, when the "black-and-white image photographing mode" has been selected, the similarity degree calculation unit 20 sets the weighting coefficients for D1(i,j) and D2(i,j) to larger values (compared to those set when the "color image photographing mode" has been selected) (FIG. 19, S2).

If, on the other hand, the "color image photographing mode" has been selected, the similarity degree calculation unit 20 sets the weighting coefficients for C1(i,j) and C2(i,j) to larger values (compared to those set to when the "black-and-white image photographing mode" has been selected) (FIG. 19 , S3).

After the weighting coefficients to be used to calculate the vertical similarity degree Ct(i,j) and the horizontal similarity degree Cy(i,j) are set in this manner, the interpolation processing unit 30 selects an interpolation target vacancy (FIG. 19, S4), reads out the color information RB(i,j) at the interpolation target vacancy and the color information G(i,j-1), G(i,j+1), G(i-1,j) and G(i+1,j) at the lattice points adjacent to the interpolation target vacancy (FIG. 19, S5) and provides the color information to the similarity degree calculation unit 31, as in the first embodiment.

The similarity degree calculation unit 31 calculates C1(i,j) E1(i,j), C2(i,j) and E2(i,j) by using the color information thus provided, as in the seventh embodiment (expressions 15 ~ 18, expressions 23 ~ 26).

In addition, the similarity degree calculation unit 31 calculates the vertical similarity degree Ct(i,j) by performing weighted addition of C1(i,j) and E1(i,j) using the weighting coefficient A explained above and calculates the horizontal similarity degree Cy(i,j) by performing weighted addition of C2(i,j) and E2(i,j) using the weighting coefficient B (FIG. 19, S6).

Namely the similarity degree calculation unit 31 calculates the vertical similarity degree Ct(i,j) and the horizontal similarity degree Cy(i,j) through the following expressions

$$Ct(i,j) = A^{\cdot} C1(i,j) + (1-A)^{\cdot} E1(i,j)$$

$$Cy(i,j) = B^{\cdot} C2(i,j) + (1-B)^{\cdot} E2(i,j)$$

It is to be noted that the similarity degree calculation unit 31 provides the interpolation quantity calculation unit 32 with the vertical similarity degree Ct(i,j) and the horizontal similarity degree Cy(i,j) thus calculated.

D1(i,j) and D2(i,j) are calculated using the color information RB(i,j) at the interpolation target vacancy and the color information G(i,j-1), G(i,j+1), G(i-1,j) and G(i+1,j) at the lattice points. Thus, the weight of the color information RB(i,j) at the interpolation target vacancy on the vertical similarity degree Ct(i,j) and the horizontal similarity degree Cy(i,j) is larger when the "black-and-white image photographing mode" has been selected (when the values A and B are small) compared to when the "color image photographing mode" has been selected (when the values A and B are large).

The interpolation quantity calculation unit 32, which has been provided with the vertical similarity degree Ct(i,j) and the horizontal similarity degree Cy(i,j) calculates the interpolation quantity as in the seventh embodiment (FIG. 19, S7 : corresponds to FIG. S7~ S11). After the interpolation quantity is calculated by the interpolation quantity calculation unit 32, the interpolation processing unit 30 makes a decision as to whether or not the interpolation processing has been completed for all the vacancies (FIG. 19, S8). It is to be noted that the processing (the processing performed in FIG. 19, S4 and subsequent steps) is repeated until it is ascertained that the interpolation processing for all of the vacancies has been completed through this decision-making.

As explained above, in the tenth embodiment, the weight of the color information RB(i,j) at the interpolation target vacancy on the vertical similarity degree Ct(i,j) and the horizontal similarity degree Cy(i,j) can be increased when performing interpolation processing on an image which can be regarded as achromatic.

Thus, the tenth embodiment, which achieves accurate calculation of the similarity degrees in images which can be regarded as achromatic, improves the interpolation processing accuracy with a high degree of reliability.

(Eleventh Embodiment)

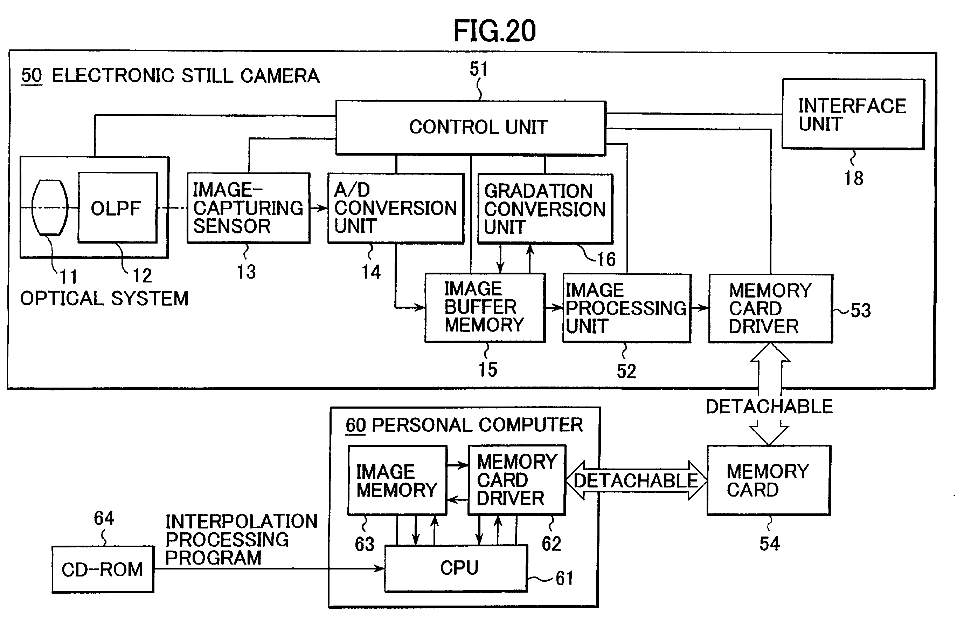

FIG. 20 is a functional block diagram of the eleventh embodiment.

It is to be noted that in the eleventh embodiment, interpolation processing is implemented on a personal computer by utilizing a "recording medium having an interpolation processing program recorded therein".

In FIG. 20, the same reference numbers are assigned to components having functions identical to those in FIG. 1 and FIG. 14, to preclude the necessity for repeated explanation thereof.

It is to be noted that the electronic still camera 50 in FIG. 20 structurally differs from those shown in FIGS. 1 and 14 in that a control unit 51 and an image processing unit 52 are provided in place of the control unit 10 and the image processing unit 17 and that a memory card driver 53, which is connected to the outputs of the control unit 51 and the image processing unit 52 is provided.

In addition, a personal computer 60 in FIG. 20 is provided with a CPU 61, a memory card driver 62 and an image memory 63.

The CPU 61 is connected to the memory card driver 62 and the image memory 63. The output of the memory card driver 62 is connected to the CPU 61 and the image memory 63, the output of the CPU 61 is connected to the memory card driver 62 and the image memory 63 and the output of the image memory 63 is connected to the memory card driver 62 and the CPU 61.

It is to be noted that an interpolation program recorded in a CD-ROM 64 is a pre-installed in the CPU 61.

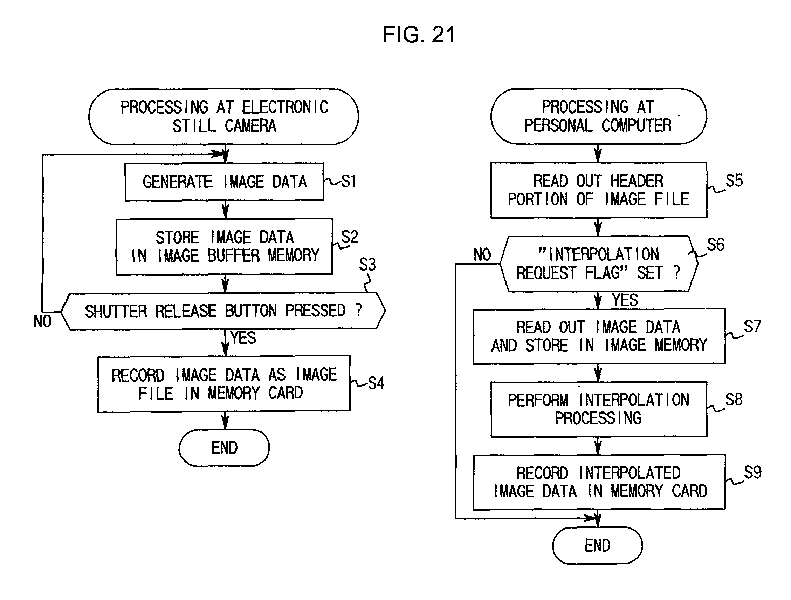

FIG. 21 is a flowchart of the operation achieved in the eleventh embodiment.

The following is an explanation of the operation in the eleventh embodiment, given in reference to FIGS. 20 and 21.

First, the operation of the electronic still camera 50 is explained.

As in the previous embodiments, the image-capturing sensor 13 in the electronic camera 50 generates a signal charge. In addition, the image-capturing sensor 13 generates an image signal by scanning the signal charge that has been generated and provides the image signal to the A/D conversion unit 14.

The A/D conversion unit 14 performs A/D conversion on the image signal thus provided and generates image data (FIG. 21, S1). The image data thus generated are temporarily stored in the image buffer memory 15 (FIG. 21, S2).

It is to be noted that a gradation conversion (logarithm conversion, T conversion and the like) may be implemented on the image data stored in the image buffer memory 15 by the gradation conversion unit 16.

The processing (image data generation and storage) described above is repeatedly implemented in conformance to timing control executed by the control unit 51.

The control unit 51 also makes a decision via the interface unit 18 as to whether or not the shutter release button (not shown) provided at the casing of the electronic still camera 50 has been pressed (FIG. 21, S3).

If the control unit 51 ascertains that the shutter release button has not been pressed through this decision-making, it repeatedly issues an instruction for implementing the processing to generate image data (FIG. 21, S1) and store the image data (FIG. 21 S2) through the timing control mentioned above.

If, on the other hand, it is ascertained that the shutter release button has been pressed, the control unit 51 issues an instruction to the image processing unit 52 and the memory card driver 53 to record the image data stored at the image buffer memory 15 into the memory card 54 (FIG. 21, S4).

The image processing unit 52 performs an adjustment to eliminate problems (e.g., the dark level) inherent to the image-capturing sensor 13 on the image data stored at the image buffer memory 15 (no interpolation processing is performed at this point) and provides the adjusted image data to the memory card driver 53.

the memory card driver 53 records the image data in the memory card 54 in an image file format, and also sets up an "interpolation request flag" (a flag indicating that there are image data to be interpolated) provided at the header portion of the image file.

If a "mode selector switch" that allows selection of either the "black-and-white image photographing mode" or the "color image photographing mode" is provided at the casing of the electronic still camera 50, the control unit 51 obtains "mode information" indicating the state of the mode selector switch" at the point in time at which the shutter release button has been pressed via the interface unit 18.

In addition, the control unit 51 stores the "mode information" thus obtained at the header portion of the image file via the memory card driver 53.

Next, the operation of the personal computer 60 is explained.

When the memory card 54, in which the image file has been recorded, is loaded into the computer 60, the CPU 61 reads out the header portion of the image file via the memory card driver 62 (FIG. 21, S5).

Upon reading out the header portion of the image file in this manner, the CPU 61 makes a decision as to whether or not the "interpolation request flag" is set (FIG. 21, S6).

Only when it is ascertained through this decision-making that the "interpolation request flag" is set, the CPU 61 reads out the image data via the memory card driver 62 and stores them in the image memory 63 (FIG. 21, S7).

In addition, the CPU 61 performs interpolation processing on the image data stored in the image memory 63 (FIG. 21, S8).

It is to be noted that since the interpolation processing implemented by the CPU 61 is identical to the interpolation processing performed by the image processing unit 17 in FIGS. 1 and 14 in the individual embodiments explained earlier, its explanation is omitted.

When executing interpolation processing similar to that achieved in the eighth embodiment or the tenth embodiment, the CPU 61 reads out the "mode information" from the header portion of the image file to make a decision as to whether or not the "black-and-white image photographing mode" has been selected.

When the interpolation processing is completed, the CPU 61 records the image data having undergone the interpolation processing back into the memory card 54 via the memory card driver 62 (FIG. 21, S9). It is to be noted that the operator may be allowed to make a choice as to whether or not the image data having undergone the interpolation processing should be recorded in the memory card 54 by operating an input device (e.g., a keyboard) of the personal computer 60.

In other words, interpolation processing similar to that achieved in the individual embodiments explained earlier can be executed with a high degree of reliability on the personal computer 60 in the eleventh embodiment.

The eleventh embodiment, in which similarity degrees can be calculated as in the previous embodiments, improves the interpolation processing accuracy with a high degree of reliability.

It is to be noted that while image data to undergo the interpolation processing are obtained by the personal computer 60 via the memory card 54 in the eleventh embodiment, the image data to undergo the interpolation processing may be obtained through any other method.

For instance, when adopting the present invention in a personal computer provided with a means for communication, the interpolation processing may be executed on image data provided via the means for communication.

## Claims

**1.** An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of the vacancies, comprising:

a means for similarity degree calculation that calculates similarity degrees along a plurality of directions for each interpolation target vacancy to undergo said interpolation processing by using color information corresponding to three colors, which are the first color component through the third color component;
a means for similarity judgment that makes a judgment with respect to a direction manifesting pronounced similarity for said interpolation target vacancy based upon said similarity degrees along the plurality of directions calculated by said means for similarity degree calculation; and
a means for interpolation quantity calculation that calculates said interpolation quantity for said interpolation target vacancy in conformance to results of said judgment made by said means for similarity judgment.

**2.** An interpolation processing apparatus according to claim 1, wherein:
said means for similarity degree calculation calculates two types of similarity components along each of the plurality of directions, which are a "similarity component obtained by using color information corresponding to the first color component and color information corresponding to the second color component" and a "similarity component obtained by using color information corresponding to the first color component and color information corresponding to the third color component", based upon color information corresponding to the first through third color components output from said interpolation target vacancy and lattice points and vacancies near said interpolation target vacancy, and then calculates said similarity degrees based upon said two types of similarity components.

3. An interpolation processing apparatus according to claim 1, wherein:

said means for similarity degree calculation
calculates at least three types of similarity components along each of the plurality of directions, including

(a) two types of similarity components, which are a "similarity component obtained by using color information corresponding to the first color component and color information corresponding to the second color component" and a "similarity component obtained by using color information corresponding to the first color component and color information corresponding to the third color component" and
(b) at least one type of similarity component among a "similarity component obtained by using color information corresponding to the first color component alone", a "similarity component obtained by using color information corresponding to the second color component alone" and "a "similarity component obtained by using color information corresponding to the third color component alone",

based upon color information corresponding to the first through third color components output from said interpolation target vacancy and lattice points and vacancies near said interpolation target vacancy, and then calculates said similarity degrees based upon said at least three types of similarity components.

4. An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, comprising:

a means for similarity degree calculation that calculates similarity degrees along a plurality of directions for each interpolation target vacancy to undergo said interpolation processing;
a means for similarity judgment that makes a judgment with respect to a direction manifesting pronounced similarity for said interpolation target vacancy based upon said similarity degrees along the plurality of directions calculated by said means for similarity degree calculation; and
a means for interpolation quantity calculation that calculates an interpolation quantity for said interpolation target vacancy in conformance to results of the judgment made by said means for similarity judgment, wherein:

said means for similarity degree calculation
calculates at least two types of similarity components along each of the plurality of directions including

(a) a "similarity component obtained by using color information at a vacancy that outputs color information corresponding to a color component different from a color component of said interpolation target vacancy and color information corresponding to the first color component" and
(b) at least one type of similarity component among a "similarity component obtained by using color information corresponding to the first color component alone", a "similarity component obtained by using color information corresponding to the second color component alone" and a "similarity component obtained by using color information corresponding to the third color component alone",

based upon color information corresponding to the first through third color components output from said interpolation target vacancy and lattice points and vacancies near said interpolation target vacancy, and then
calculates similarity degrees based upon said at least two types of similarity components.

5. An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, comprising:

a means for similarity degree calculation that calculates similarity degrees along a plurality of directions for each interpolation target vacancy to undergo said interpolation processing;

a means for similarity judgment that makes a judgment with respect to a direction manifesting pronounced similarity for said interpolation target vacancy based upon said similarity degrees along the plurality of directions calculated by said means for similarity degree calculation; and

a means for interpolation quantity calculation that calculates an interpolation quantity for said interpolation target vacancy in conformance to results of the judgment made by said means for similarity judgment, wherein:

said means for similarity degree calculation

calculates at least two types of similarity components along each of the plurality of directions including

(a) a "similarity component obtained by using color information output from said interpolation target vacancy and color information corresponding to the first color component"

(b) at least one type of similarity component among a "similarity component obtained by using color information corresponding to the first color component alone", a "similarity component obtained by using color information corresponding to the second color component alone" and a "similarity component obtained by using color information corresponding to the third color component alone",

based upon color information corresponding to the first through third color components output from said interpolation target vacancy and lattice points and vacancies near said interpolation target vacancy, and then

calculates similarity degrees based upon said at least two types of similarity components; and

said "similarity component obtained by using color information from said interpolation target vacancy and color information corresponding to the first color component" is calculated through "$a1|G1 - A2| + a2|G3 - A2|$" in which G1 and G3 represent color information at two lattice points set on a single straight line with said interpolation target vacancy located in between, A2 represents the color information at said interpolation target vacancy and a1 and a2 each represent a constant with at least either a1 or a2 not equal to 0.

6. An interpolation processing apparatus according to any one of claims 2 through 5, wherein:
said means for similarity degree calculation calculates said similarity degrees for said interpolation target vacancy along the plurality of directions by combining a plurality of types of similarity components obtained along each of the plurality of directions through weighted addition of similarity components performed along each direction.

7. An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, comprising:

a means for similarity degree calculation that calculates at least two types of similarity degrees among a "similarity degree obtained by using color information corresponding to the first color component and color information corresponding to the second color component", a "similarity degree obtained by using color information corresponding to the first color component and color information corresponding to the third color component", a "similarity degree obtained by using color information corresponding to the first color component alone", a "similarity degree obtained by using color information corresponding to the second color component alone" and a "similarity degree obtained by using color information corresponding to the third color component alone" as similarity degrees along a plurality of directions manifesting at each interpolation target vacancy, based upon color information corresponding to the first through third color components output from said interpolation to undergo said interpolation processing and lattice points and vacancies near said interpolation target vacancy;

a means for similarity judgment that makes a judgment with respect to a direction manifesting pronounced similarity relative to said interpolation target vacancy by comparing, along each direction, similarity degrees of a single type among a plurality of types of similarity degrees along the plurality of directions calculated for said interpolation target vacancy by said means for similarity degree calculation, determining a direction manifesting pronounced similarity for each type of similarity degree and ascertaining a direction being in a majority of directions manifesting pronounced similarity; and

a means for interpolation calculation that calculates an interpolation quantity for said interpolation target vacancy in conformance to results of the judgment made by said means for similarity judgment.

**8.** An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, comprising:

a means for similarity degree calculation that calculates at least one type of similarity component among two types of similarity components, which are a "similarity component obtained by using color information from the interpolation target vacancy and color information corresponding to the first color component" and a "similarity component obtained by using color information corresponding to the first color component alone" as similarity components along a plurality of directions for said interpolation target vacancy based upon color information output from said interpolation target vacancy undergoing said interpolation processing and lattice points and vacancies near said interpolation target vacancy, and calculates similarity degrees along a plurality of directions for said interpolation target vacancy based upon said at least one type of similarity component;

a means for similarity judgment that makes a judgment with respect to a direction manifesting pronounced similarity for said interpolation target vacancy based upon said similarity degrees along the plurality of directions calculated by said means for similarity degree calculation; and

a means for interpolation quantity calculation that calculates an interpolation quantity for said interpolation target vacancy in conformance to results of the judgment made by said means for similarity judgment, wherein:

said means for similarity degree calculation extracts characteristics of an image over an area surrounding said interpolation target vacancy and calculates one type of similarity component selected in conformance to the characteristics among said two types of similarity components as said similarity degree, or calculates said similarity degree by calculating said two types of similarity components and performing weighted addition of the calculated two types of similarity components while adjusting a weighting ratio in correspondence to said characteristics.

**9.** An interpolation processing apparatus that performs interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, comprising:

a means for similarity degree calculation that calculates at least one type of similarity component among two types of similarity components, which are a "similarity component obtained by using color information from the interpolation target vacancy and color information corresponding to the first color component" and a "similarity component obtained by using color information corresponding to the first color component alone" as similarity components along a plurality of directions for said interpolation target vacancy based upon color information output from said interpolation target vacancy undergoing said interpolation processing and lattice points and vacancies near said interpolation target vacancy, and calculates similarity degrees along a plurality of directions for said interpolation target vacancy based upon said at least one type of similarity component;

a means for similarity judgment that makes a judgment with respect to a direction manifesting pronounced similarity for said interpolation target vacancy based upon said similarity degrees along the plurality of directions calculated by said means for similarity degree calculation;

a means for interpolation quantity calculation that calculates an interpolation quantity for said interpolation target vacancy in conformance to results of the judgment made by said means for similarity judgment; and

a means for interface that receives a first instruction indicating which of said two types of similarity components is to be calculated or a second instruction indicating a weighting rate to be used when performing weighted addition of said two types of similarity components, wherein:

said means for similarity degree calculation calculates one type of similarity component as indicated by said first instruction as said similarity degree when said first instruction has been received at said means for interface, and calculates said similarity degrees through weighted addition of said two types of similarity components implemented in response to said second instruction when said second instruction has been received at said means for interface.

**10.** An interpolation processing apparatus according to claim 8, wherein:

said means for similarity degree calculation calculates said "similarity degrees obtained by using color information from said interpolation target vacancy and color information corresponding to the first color component" when the characteristics of the image in the area around said interpolation target vacancy indicate that sets of color information from a plurality of lattice points set along a first direction among two directions intersecting at a right angle at said interpolation target vacancy are highly similar, that sets of color information from a plurality of lattice points set along a second direction among the two directions are highly similar and that the color information from lattice points set along the first direction is greatly different from the color information from lattice points set along the second direction.

**11.** An interpolation processing apparatus according to any one of claims 1 through 10, wherein:

said means for similarity degree calculation calculates values each containing a similarity component manifested at vacancies located near said interpolation target vacancy, as said similarity degrees of said interpolation target vacancy.

**12.** An interpolation processing apparatus according to any one of claims 1 through 6 and claims 8 through 11, wherein:

said means for similarity judgment makes a decision as to whether or not a difference between similarity degrees along individual directions exceeds a specific threshold value and judges that roughly equal similarity degrees manifest along the directions if the difference does not exceed said threshold value.

**13.** An interpolation processing apparatus according to any one of claims 1 through 12, wherein:

when said means for similarity judgment judges that one of the plurality of directions manifests pronounced similarity, said means for interpolation quantity calculation calculates an average of values indicated by color information from two lattice points set along the direction manifesting pronounced similarity as the interpolation quantity, whereas when said means for similarity judgment judges that similarity degrees manifested along the plurality of directions are close to each other, said means for interpolation quantity calculation ascertains an interpolation quantity through another method without calculating an average of values indicated by color information from two lattice points set along one of the plurality of directions.

**14.** A recording medium having recorded therein an interpolation processing program for enabling a computer to execute interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, said interpolation processing program comprising:

a similarity degree calculation step in which similarity degrees along a plurality of directions are calculated for each interpolation target vacancy to undergo said interpolation processing by using color information corresponding to three colors, which are the first color component through the third color component;
a similarity judgment step in which a judgment is made with respect to a direction manifesting pronounced similarity for said interpolation target vacancy based upon said similarity degrees along the plurality of directions calculated in said similarity degree calculation step; and
an interpolation quantity calculation step in which an interpolation quantity for said interpolation target vacancy is calculated in conformance to results of the judgment made in said similarity judgment step.

**15.** A recording medium having recorded therein an interpolation processing program for enabling a computer to execute interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, said interpolation processing program comprising:

a similarity degree calculation step in which similarity degrees along a plurality of directions are calculated for each interpolation target vacancy to undergo said interpolation processing;

a similarity judgment step in which a judgment is made with respect to a direction manifesting pronounced similarity for said interpolation target vacancy based upon said similarity degrees along the plurality of directions calculated by said similarity degree calculation step; and

an interpolation quantity calculation step in which an interpolation quantity for said interpolation target vacancy is calculated in conformance to results of the judgment made in said similarity judgment step, wherein:

in said similarity degree calculation step, at least two types of similarity components are calculated along the plurality of directions including

(a) a "similarity component obtained by using color information at a vacancy that outputs color information corresponding to a color component different from the color component of said interpolation target vacancy and color information corresponding to the first color component" and

(b) at least one type of similarity component among a "similarity component obtained by using color information corresponding to the first color component alone", a "similarity component obtained by using color information corresponding to the second color component alone" and a "similarity component obtained by using color information corresponding to the third color component alone",

based upon color information corresponding to the first through third color components output from said interpolation target vacancy and lattice points and vacancies near said interpolation target vacancy, and then

said similarity degrees are calculated based upon said at least two types of similarity components.

16. A recording medium having recorded therein an interpolation processing program for enabling a computer to execute interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, said interpolation processing program comprising:

a similarity degree calculation step in which similarity degrees along a plurality of directions are calculated for each interpolation target vacancy to undergo said interpolation processing;

a similarity judgment step in which a judgment is made with respect to a direction manifesting pronounced similarity for said interpolation target vacancy based upon said similarity degrees along the plurality of directions calculated by said similarity degree calculation step; and

an interpolation quantity calculation step in which an interpolation quantity for said interpolation target vacancy is calculated in conformance to results of the judgment made in said similarity judgment step, wherein:

in said similarity degree calculation step at least two types of similarity components are calculated along the plurality of directions including

(a) a "similarity component obtained by using color information output from said interpolation target vacancy and color information corresponding to the first color component"

(b) at least one type of similarity component among a "similarity component obtained by using color information corresponding to the first color component alone", a "similarity component obtained by using color information corresponding to the second color component alone" and a "similarity component obtained by using color information corresponding to the third color component alone",

based upon color information corresponding to the first through third color components output from said interpolation target vacancy and lattice points and vacancies near said interpolation target vacancy, and then

the similarity degrees are calculated based upon said at least two types of similarity components; and

said "similarity component obtained by using color information from said interpolation target vacancy and color information corresponding to the first color component" calculated through "a1|G1 - A2| + a2|G3 - A2|" in which G1 and G3 represent color information at two lattice points set on a single straight line with said interpolation target vacancy located in between, A2 represents color information at said interpolation target vacancy and al and a2 each represent a constant with at least either al or a2 not equal to 0.

**17.** A recording medium having recorded therein an interpolation processing program for enabling a computer to execute interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, said interpolation processing program comprising:

a similarity degree calculation step in which at least two types of similarity degrees among a "similarity degree obtained by using color information corresponding to the first color component and color information corresponding to the second color component", a "similarity degree obtained by using color information corresponding to the first color component and color information corresponding to the third color component", a "similarity degree obtained by using color information corresponding to the first color component alone", a "similarity degree obtained by using color information corresponding to the second color component alone" and a "similarity degree obtained by using color information corresponding to the third color component alone" are calculated as similarity degrees along a plurality of directions manifesting at each interpolation target vacancy based upon color information corresponding to the first through third color components output from said interpolation target vacancy to undergo said interpolation processing and lattice points and vacancies near said interpolation target vacancy;
a similarity judgment step in which a judgment is made with respect to a direction manifesting pronounced similarity relative to said interpolation target vacancy by comparing, along each direction, similarity degrees of a single type among a plurality of types of similarity degrees calculated along the plurality of directions for said interpolation target vacancy in said similarity degree calculation step, determining a direction manifesting pronounced similarity for each type of similarity degree and ascertaining a direction being in a majority of directions manifesting pronounced similarity; and
an interpolation quantity calculation step in which an interpolation quantity for said interpolation target vacancy is calculated in conformance to results of judgment made in said similarity judgment step.

**18.** A recording medium having recorded therein an interpolation processing program for enabling a computer to execute interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, said interpolation processing program comprising:

a similarity degree calculation step in which at least one type of similarity components among two types of similarity components, which are a "similarity component obtained by using color information from an interpolation target vacancy and color information corresponding to the first color component" and a "similarity component obtained by using color information corresponding to the first color component alone" is calculated as similarity components along a plurality of directions for said interpolation target vacancy based upon color information output from said interpolation target vacancy undergoing said interpolation processing and lattice points and vacancies set near said interpolation target vacancy, and similarity degrees along a plurality of directions for said interpolation target vacancy are calculated based upon said at least one type of similarity components;
a similarity judgment step in which a judgment is made with respect to a direction manifesting pronounced similarity for said interpolation target vacancy is judged based upon said similarity degrees along the plurality of directions calculated in said similarity degree calculation step; and
an interpolation quantity calculation step in which an interpolation quantity for said interpolation target vacancy is calculated in conformance to results of the judgment made in said similarity judgment step, wherein:
in said similarity degree calculation step, characteristics of an image over an area surrounding said interpolation target vacancy is extracted, and one type of similarity component selected in conformance to the characteristics among said two types of similarity components is calculated as said similarity degrees, or said similarity degrees are calculated by calculating two types of similarity degrees and performing weighted addition of said two types of similarity components while adjusting a weighting ratio in correspondence to said characteristics.

19. A recording medium having recorded therein an interpolation processing program for enabling a computer to execute interpolation processing on an image generated by an image-capturing sensor constituted by two-dimensionally arraying a plurality of lattice points each of which outputs color information corresponding to a first color component achieving a highest spatial frequency and a plurality of vacancies each of which outputs color information corresponding to a second color component or a third color component with a lower spatial frequency than the first color component instead of outputting color information corresponding to the first color component, to determine an interpolation quantity equivalent to color information corresponding to the first color component for each of said vacancies, said interpolation processing program comprising:

a similarity degree calculation step in which at least one type of similarity components among two types of similarity components, which are a "similarity component obtained by using color information from the interpolation target vacancy and color information corresponding to the first color component" and a "similarity component obtained by using color information corresponding to the first color component alone" is calculated as similarity components along a plurality of directions for said interpolation target vacancy based upon color information output from said interpolation target vacancy undergoing said interpolation processing and lattice points and vacancies set near said interpolation target vacancy, and similarity degrees along a plurality of directions for said interpolation target vacancy are calculated based upon said at least one type of similarity components;

an interface step in which a first instruction indicating which of said two types of similarity components is to be calculated is received or a second instruction indicating a weighting rate to be used when performing weighted addition of said two types of similarity components is received, wherein:

in said similarity degree calculation step, one type of similarity component is calculated as indicated by said first instruction as said similarity degrees when said first instruction has been received in said interface step, and said similarity degrees are calculated through weighted addition of said two types of similarity components implemented in response to said second instruction when said second instruction has been received in said interface step.

# FIG.1

INTERFACE UNIT ~18

10

CONTROL UNIT

GRADATION CONVERSION UNIT ~16

OLPF

IMAGE-CAPTURING SENSOR

A/D CONVERSION UNIT

IMAGE BUFFER MEMORY

12

13

14

15

11
OPTICAL SYSTEM

17 IMAGE PROCESSING UNIT

19 INTERPOLATION PROCESSING UNIT

SIMILARITY DEGREE CALCULATION UNIT ~20

SIMILARITY JUDGING UNIT ~21

INTERPOLATION QUANTITY CALCULATION UNIT ~22

EP 1 109 411 A1

FIG. 2

EP 1 109 411 A1

| | X=1 | X=2 | X=3 | X=4 | X=5 | X=6 | X=7 | | X=X_max |
|---|---|---|---|---|---|---|---|---|---|
| Y=1 | $G(1,1)$ | $G'(2,1)$ | $G(3,1)$ | $G'(4,1)$ | $G(5,1)$ | $G'(6,1)$ | $G(7,1)$ | ··· | $G'(X\_max,1)$ |
| Y=2 | $G'(1,2)$ | $G(2,2)$ | $G'(3,2)$ | $G(4,2)$ | $G'(5,2)$ | $G(6,2)$ | $G'(7,2)$ | · | · |
| Y=3 | $G(1,3)$ | $G'(2,3)$ | $G(3,3)$ | $G'(4,3)$ | $G(5,3)$ | $G'(6,3)$ | $G(7,3)$ | · | · |
| Y=4 | $G'(1,4)$ | $G(2,4)$ | $G'(3,4)$ | $G(4,4)$ | $G'(5,4)$ | $G(6,4)$ | $G'(7,4)$ | · | · |
| Y=5 | $G(1,5)$ | $G'(2,5)$ | $G(3,5)$ | $G'(4,5)$ | $G(5,5)$ | $G'(6,5)$ | $G(7,5)$ | · | · |
| | · | · | · | · | · | · | · | · | · |
| Y=Y_max | $G'(1,Y\_max)$ | · | · | · | · | · | · | · | $G'(X\_max,Y\_max)$ |

# FIG. 3

```
        ┌─────────────┐
        │    START    │
        └──────┬──────┘
               │
        ┌──────▼────────────────┐
   ┌───▶│ GENERATE  IMAGE  DATA │───S1
   │    └──────┬────────────────┘
   │           │
   │    ┌──────▼──────────────────┐
   │    │ STORE  IMAGE  DATA  IN  IMAGE │───S2
   │    │      BUFFER  MEMORY      │
   │    └──────┬──────────────────┘
   │           │
   │ NO ┌──────▼──────────────────────────┐
   └────┤ SHUTTER RELEASE BUTTON PRESSED ? │───S3
        └──────┬──────────────────────────┘
               │ YES
        ┌──────▼──────────────────────────┐
        │ IMPLEMENT  INTERPOLATION  PROCESSING │───S4
        └──────┬──────────────────────────┘
               │
        ┌──────▼──────────────────────────┐
        │ STORE  INTERPOLATED  IMAGE  DATA │───S5
        │      IN  IMAGE  BUFFER  MEMORY   │
        └──────┬──────────────────────────┘
               │
        ┌──────▼──────┐
        │     END     │
        └─────────────┘
```

# FIG. 4

```
        ┌─────────────────────────────────┐
        │    INTERPOLATION PROCESSING     │
        └─────────────────────────────────┘
                        │
  ┌──────────────────→  ▼
  │     ┌──────────────────────────────────────┐
  │     │  SELECT INTERPOLATION TARGET VACANCY  │─S1
  │     └──────────────────────────────────────┘
  │                     │
  │                     ▼
  │     ┌──────────────────────────────────────┐
  │     │  READ OUT COLOR INFORMATION NECESSARY │─S2
  │     │   FOR SIMILARITY DEGREE CALCULATION   │
  │     └──────────────────────────────────────┘
  │                     │
  │                     ▼
  │     ┌──────────────────────────────────────┐
  │     │ CALCULATE VERTICAL SIMILARITY DEGREE Ct(i, j) │─S3
  │     │   AND HORIZONTAL SIMILARITY DEGREE Cy(i, j)    │
  │     └──────────────────────────────────────┘
  │                     │
  │                     ▼
  │     ┌──────────────────────────────────────┐
  │     │   JUDGE DIRECTION MANIFESTING        │─S4
  │     │      PRONOUNCED SIMILARITY           │
  │     └──────────────────────────────────────┘
  │                     │
  │                     ▼
  │     ┌──────────────────────────────────────┐
  │     │   CALCULATE INTERPOLATION QUANTITY   │
  │     │   FOR INTERPOLATION TARGET VACANCY   │
  │     │ BY USING COLOR INFORMATION AT LATTICE│─S5
  │     │    POINTS ADJACENT ALONG DIRECTION   │
  │     │ JUDGED TO MANIFEST PRONOUNCED SIMILARITY │
  │     └──────────────────────────────────────┘
  │                     │
  │                     ▼
  │   NO  ╱─────────────────────────────╲
  └──────   INTERPOLATION PROCESSING      ╲─S6
          ╲  COMPLETED FOR ALL VACANCIES ? ╱
           ╲─────────────────────────────╱
                        │ YES
                        ▼
                ┌───────────────┐
                │      END      │
                └───────────────┘
```

CALCULATE VERTICAL SIMILARITY DEGREE $Ct(i, j)$ AND HORIZONTAL SIMILARITY DEGREE $Cy(i, j)$

## FIG. 5B

## FIG. 5A

|     | i-1 | i | i+1 |
|-----|-----|-----|-----|
| j-1 |     | G |     |
| j   | G | R B | G |
| j+1 |     | G |     |

FIRST SIMILARITY
COMPONENTS

|     | i-2 | i-1 | i | i+1 | i+2 |
|-----|-----|-----|-----|-----|-----|
| j-2 |     |     | R B |     |     |
| j-1 |     |     | G |     |     |
| j   | R B | G | R B | G | R B |
| j+1 |     |     | G |     |     |
| j+2 |     |     | R B |     |     |

FIRST SIMILARITY COMPONENTS

## FIG. 5C

|     | i-1 | i | i+1 |
|-----|-----|-----|-----|
| j-1 | B R | G | B R |
| j   | G |     | G |
| j+1 | B R | G | B R |

SECOND SIMILARITY
COMPONENTS

## FIG. 5D

|     | i-1 | i | i+1 |
|-----|-----|-----|-----|
| j-1 |     | G |     |
| j   | G |     | G |
| j+1 |     | G |     |

THIRD SIMILARITY
COMPONENTS

## FIG. 5E

|     | i-1 | i | i+1 |
|-----|-----|-----|-----|
| j-1 | B R |     | B R |
| j   |     |     |     |
| j+1 | B R |     | B R |

FOURTH SIMILARITY
COMPONENTS

## FIG. 5F

|     | i-2 | i-1 | i | i+1 | i+2 |
|-----|-----|-----|-----|-----|-----|
| j-2 |     |     | R B |     |     |
| j-1 |     |     |     |     |     |
| j   | R B |     | R B |     | R B |
| j+1 |     |     |     |     |     |
| j+2 |     |     | R B |     |     |

FIFTH SIMILARITY
COMPONENTS

## FIG. 6A

BLACK-AND-WHITE NYQUIST STRIPES

## FIG. 6B

BLACK-AND-WHITE SIMENS' STAR

# FIG.7

COLOR ARTIFACT REDUCTION EFFECT
ACHIEVED WITH DIFFERENT-COLOR
SIMILARITY COMPONENTS
LARGE

COLOR ARTIFACT REDUCTION EFFECT
ACHIEVED WITH SAME-COLOR
SIMILARITY COMPONENTS
LARGE

FIRST SIMILARITY
COMPONENTS

SECOND SIMILARITY
COMPONENTS

THIRD SIMILARITY
COMPONENTS

FOURTH SIMILARITY
COMPONENTS

FIFTH SIMILARITY
COMPONENTS

FIG. 8A

FIRST SIMILARITY COMPONENTS

FIG. 8B

SECOND SIMILARITY COMPONENTS

54

FIG. 9A

THIRD SIMILARITY COMPONENTS

FIG. 9B

FOURTH SIMILARITY COMPONENTS

## FIG. 10

FIFTH SIMILARITY COMPONENTS

# FIG.11A

| (200,200,200) | (10,10,10) | (200,200,200) | (10,10,10) | (200,200,200) |
|---|---|---|---|---|
| (200,200,200) | (10,10,10) | (200,200,200) | (10,10,10) | (200,200,200) |
| (200,200,200) | (10,10,10) | (200,200,200) | (10,10,10) | (200,200,200) |
| (200,200,200) | (10,10,10) | (200,200,200) | (10,10,10) | (200,200,200) |
| (200,200,200) | (10,10,10) | (200,200,200) | (10,10,10) | (200,200,200) |

COLOR INFORMATION VALUES (R,G,B) IN ORIGINAL IMAGE

# FIG.11B

|  | i-2 | i-1 | i | i+1 | i+2 |
|---|---|---|---|---|---|
| j-2 | RB | G | RB | G | RB |
| j-1 | G | BR | G | BR | G |
| j | RB | G | RB | G | RB |
| j+1 | G | BR | G | BR | G |
| j+2 | RB | G | RB | G | RB |

=

|  | i-2 | i-1 | i | i+1 | i+2 |
|---|---|---|---|---|---|
| j-2 | 200 | 10 | 200 | 10 | 200 |
| j-1 | 200 | 10 | 200 | 10 | 200 |
| j | 200 | 10 | 200 | 10 | 200 |
| j+1 | 200 | 10 | 200 | 10 | 200 |
| j+2 | 200 | 10 | 200 | 10 | 200 |

COLOR INFORMATION VALUES
STORED IN IMAGE BUFFER MEMORY

# FIG.11C

|  | VERTICAL DIRECTION | HORIZONTAL DIRECTION | DIRECTION MANIFESTING PRONOUNCED SIMILARITY |
|---|---|---|---|
| FIRST SIMILARITY COMPONENTS | 0 | 190 | VERTICAL DIRECTION |
| SECOND SIMILARITY COMPONENTS | 0 | 190 | VERTICAL DIRECTION |
| THIRD SIMILARITY COMPONENTS | 0 | 0 | NOT KNOWN |
| FOURTH SIMILARITY COMPONENTS | 0 | 0 | NOT KNOWN |
| FIFTH SIMILARITY COMPONENTS | 0 | 0 | NOT KNOWN |

RESULTS OF CALCULATION OF VARIOUS
SIMILARITY COMPONENTS

## FIG.12A

| (0,120,120) | (0,200,200) | (0,110,110) | (0,10,10) | (0,100,100) |
|---|---|---|---|---|
| (0,120,120) | (0,200,200) | (0,110,110) | (0,10,10) | (0,100,100) |
| (0,120,120) | (0,200,200) | (0,110,110) | (0,10,10) | (0,100,100) |
| (0,120,120) | (0,200,200) | (0,110,110) | (0,10,10) | (0,100,100) |
| (0,120,120) | (0,200,200) | (0,110,110) | (0,10,10) | (0,100,100) |

COLOR INFORMATION VALUES (R,G,B) IN ORIGINAL IMAGE

## FIG.12B

|  | i-2 | i-1 | i | i+1 | i+2 |
|---|---|---|---|---|---|
| j-2 | RB | G | RB | G | RB |
| j-1 | G | BR | G | BR | G |
| j | RB | G | RB | G | RB |
| j+1 | G | BR | G | BR | G |
| j+2 | RB | G | RB | G | RB |

=

|  | i-2 | i-1 | i | i+1 | i+2 |
|---|---|---|---|---|---|
| j-2 | 0 | 200 | 0 | 10 | 0 |
| j-1 | 120 | 200 | 110 | 10 | 100 |
| j | 0 | 200 | 0 | 10 | 0 |
| j+1 | 120 | 200 | 110 | 10 | 100 |
| j+2 | 0 | 200 | 0 | 10 | 0 |

COLOR INFORMATION VALUES
STORED IN IMAGE BUFFER MEMORY

## FIG.12C

| | VERTICAL DIRECTION | HORIZONTAL DIRECTION | DIRECTION MANIFESTING PRONOUNCED SIMILARITY |
|---|---|---|---|
| FIRST SIMILARITY COMPONENTS | 110 | 105 | HORIZONTAL DIRECTION |
| SECOND SIMILARITY COMPONENTS | 0 | 95 | VERTICAL DIRECTION |
| THIRD SIMILARITY COMPONENTS | 0 | 190 | VERTICAL DIRECTION |
| FOURTH SIMILARITY COMPONENTS | 0 | 190 | VERTICAL DIRECTION |
| FIFTH SIMILARITY COMPONENTS | 0 | 0 | NOT KNOWN |

RESULTS OF CALCULATION OF VARIOUS
SIMILARITY COMPONENTS

# FIG. 13

```
        ┌─────────────────────────────────────┐
        │      INTERPOLATION PROCESSING       │
        └─────────────────────────────────────┘
                          │
    ┌─────────────────────▼─────────────────────┐
    │ ┌───────────────────────────────────────┐ │
    │ │ SELECT INTERPOLATION TARGET VACANCY   │ │──S1
    │ └───────────────────────────────────────┘ │
    │                     │                      │
    │ ┌───────────────────────────────────────┐ │
    │ │ READ OUT COLOR INFORMATION NECESSARY  │ │──S2
    │ │ FOR SIMILARITY DEGREE CALCULATION     │ │
    │ └───────────────────────────────────────┘ │
    │                     │                      │
    │ ┌───────────────────────────────────────┐ │
    │ │ CALCULATE PLURALITY OF TYPES OF       │ │──S101
    │ │ SIMILARITY DEGREES                    │ │
    │ └───────────────────────────────────────┘ │
    │                     │                      │
    │ ┌───────────────────────────────────────┐ │
    │ │ JUDGE DIRECTION MANIFESTING           │ │──S102
    │ │ PRONOUNCED SIMILARITY FOR EACH        │ │
    │ │ TYPE OF SIMILARITIES                  │ │
    │ └───────────────────────────────────────┘ │
    │                     │                      │
    │ ┌───────────────────────────────────────┐ │
    │ │ JUDGE DIRECTION MANIFESTING PRONOUNCED│ │──S104
    │ │ SIMILARITY THROUGH WEIGHTED MAJORITY  │ │
    │ │ OPERATION OF JUDGEMENT RESULTS WITH   │ │
    │ │ REGARD TO DIRECTIONS MANIFESTING      │ │
    │ │ PRONOUNCED SIMILARITY FOR INDIVIDUAL  │ │
    │ │ TYPES OF SIMILARITY DEGREES           │ │
    │ └───────────────────────────────────────┘ │
    │                     │                      │
    │ ┌───────────────────────────────────────┐ │
    │ │ CALCULATE INTERPOLATION QUANTITY      │ │──S5
    │ │ FOR INTERPOLATION TARGET VACANCY      │ │
    │ │ BY USING COLOR INFORMATION AT LATTICE │ │
    │ │ POINTS ADJACENT ALONG DIRECTION JUDGED│ │
    │ │ TO MANIFEST PRONOUNCED SIMILARITY     │ │
    │ └───────────────────────────────────────┘ │
    │                     │                      │
    │         ┌───────────────────────┐          │
    │    NO   │ INTERPOLATION         │──S6       │
    └─────────│ PROCESSING COMPLETED  │          │
              │ FOR ALL VACANCIES ?   │
              └───────────────────────┘
                          │ YES
                   ┌──────────────┐
                   │     END      │
                   └──────────────┘
```

# FIG.14

INTERFACE UNIT ~18

10

CONTROL UNIT

GRADATION CONVERSION UNIT ~16

17 IMAGE PROCESSING UNIT

OLPF

12

11 OPTICAL SYSTEM

IMAGE-CAPTURING SENSOR

13

A/D CONVERSION UNIT

14

IMAGE BUFFER MEMORY

15

30 INTERPOLATION PROCESSING UNIT

SIMILARITY DEGREE CALCULATION UNIT ~31

INTERPOLATION QUANTITY CALCULATION UNIT ~32

EP 1 109 411 A1

## FIG. 15

```
        ┌─────────────────────────────────┐
        │     INTERPOLATION PROCESSING     │
        └─────────────────────────────────┘
                        │
                        ▼
        ┌─────────────────────────────────┐  S1
        │  SELECT INTERPOLATION TARGET VACANCY │
        └─────────────────────────────────┘
                        │
                        ▼
```

SELECT INTERPOLATION TARGET VACANCY  ~S1

READ OUT COLOR INFORMATION AT INTERPOLATION TARGET VACANCY AND COLOR INFORMATION AT LATTICE POINTS ADJACENT TO INTERPOLATION TARGET VACANCY  ~S2

CALCULATE PARTIAL IMAGE CHARACTERISTICS VALUE Q  ~S3

S4 ~ $Q \leqq Qth?$  —NO→

YES

S5
CALCULATE VERTICAL SIMILARITY DEGREE AND HORIZONTAL SIMILARITY DEGREE USING COLOR INFORMATION AT LATTICE POINTS ALONE

S6
CALCULATE VERTICAL SIMILARITY DEGREE AND HORIZONTAL SIMILARITY DEGREE USING COLOR INFORMATION AT INTERPOLATION TARGET VACANCY AND COLOR INFORMATION AT LATTICE POINTS

S7 ~ SIMILARITY ALONG VERTICAL DIRECTION PRONOUNCED?  —NO→

YES

S8
SIMILARITY ALONG HORIZONTAL DIRECTION PRONOUNCED?  —NO→

YES

S9
CALCULATE AVERAGE OF VALUES INDICATED BY COLOR INFORMATION AT TWO LATTICE POINTS ADJACENT ALONG VERTICAL DIRECTION AS INTERPOLATION QUANTITY

S10
CALCULATE AVERAGE OF VALUES INDICATED BY COLOR INFORMATION AT TWO LATTICE POINTS ADJACENT ALONG HORIZONTAL DIRECTION AS INTERPOLATION QUANTITY

S11
CALCULATE INTERPOLATION QUANTITY THROUGH WEIGHTED ADDITION PERFORMED IN CORRESPONDENCE TO SIMILARITY DEGREES

NO/ INTERPOLATION PROCESSING COMPLETED FOR ALL VACANCIES?  ~S12

INTERPOLATION QUANTITY CALCULATION PROCESSING

YES

END

FIG. 16

EP 1 109 411 A1

## FIG. 17

## FIG. 18

```
        ( INTERPOLATION PROCESSING )
                      │
                      ▼
           ┌─────────────────────┐
           │  SELECT INTERPOLATION│  ~S1
           │   TARGET VACANCY     │
           └─────────────────────┘
                      │
                      ▼
           ┌─────────────────────┐
           │ READ OUT COLOR       │
           │ INFORMATION          │
           │ AT INTERPOLATION     │  ~S2
           │ TARGET VACANCY AND   │
           │ COLOR INFORMATION    │
           │ AT LATTICE POINTS    │
           │ ADJACENT TO          │
           │ INTERPOLATION TARGET │
           │ VACANCY              │
           └─────────────────────┘
                      │
                      ▼
           ┌─────────────────────┐
           │ CALCULATE PARTIAL    │  ~S3
           │ IMAGE CHARACTERISTICS│
           │ VALUE Q              │
           └─────────────────────┘
                      │
                      ▼
              < Q ≦ Qth ? >  ~S4     NO
                      │                │
                   YES│                │
                      ▼                ▼
    ┌─────────────────────┐   ┌─────────────────────┐
    │ CALCULATE VERTICAL  │S5 │ CALCULATE VERTICAL  │S6
    │ SIMILARITY DEGREE   │   │ SIMILARITY DEGREE   │
    │ AND HORIZONTAL      │   │ AND HORIZONTAL      │
    │ SIMILARITY DEGREE   │   │ SIMILARITY DEGREE   │
    │ BY SETTING WEIHTING │   │ BY SETTING WEIHTING │
    │ COEFFICIENTS FOR    │   │ COEFFICIENTS FOR    │
    │ C1(i, j) AND C2(i,j)│   │ D1(i, j) AND D2(i,j)│
    │ AT LARGE VALUES     │   │ AT LARGE VALUES     │
    └─────────────────────┘   └─────────────────────┘
                      │                │
                      ▼◄───────────────┘
    ┌─────────────────────────────────────┐
    │ CALCULATE INTERPOLATION QUANTITY     │ ~S7
    └─────────────────────────────────────┘
                      │
                      ▼
         < INTERPOLATION PROCESSING      > S8
    NO   < COMPLETED FOR ALL VACANCIES?  >
                      │
                   YES│
                      ▼
                  ( END )
```

## FIG. 19

```
        INTERPOLATION PROCESSING
                    │
                    ▼                    S1
        ┌───────────────────────────┐
        │   BLACK-AND-WHITE IMAGE    │  NO
        │ PHOTOGRAPHING MODE SELECTED ?├──────────┐
        └───────────────────────────┘            │
          YES │          S2                       │  S3
              ▼                                    ▼
    ┌─────────────────────┐          ┌─────────────────────┐
    │ SET WEIGHTING COEFFICIENTS│    │ SET WEIGHTING COEFFICIENTS│
    │  FOR D1(i, j) AND D2(i, j)│    │  FOR C1(i, j) AND C2(i, j)│
    │     AT LARGE VALUES  │          │     AT LARGE VALUES  │
    └─────────────────────┘          └─────────────────────┘
              │                                    │
              └──────────────►◄───────────────────┘
                              │
                              ▼
              ┌─────────────────────────┐  S4
              │   SELECT INTERPOLATION   │
              │     TARGET VACANCY       │
              └─────────────────────────┘
                              │
                              ▼
              ┌─────────────────────────┐
              │  READ OUT COLOR INFORMATION │
              │    AT INTERPOLATION TARGET  │
              │ VACANCY AND COLOR INFORMATION├── S5
              │  AT LATTICE POINTS ADJACENT TO│
              │   INTERPOLATION TARGET VACANCY│
              └─────────────────────────┘
                              │
                              ▼
              ┌─────────────────────────┐
              │    CALCULATE VERTICAL    │
              │   SIMILARITY DEGREE      │── S6
              │    AND HORIZONTAL        │
              │   SIMILARITY DEGREE      │
              └─────────────────────────┘
                              │
                              ▼
    ┌──────────────────────────────────────────┐
    │     CALCULATE INTERPOLATION QUANTITY      │── S7
    └──────────────────────────────────────────┘
                              │
                              ▼                  S8
    NO  ┌─────────────────────────────────┐
    ◄───│   INTERPOLATION PROCESSING       │
        │  COMPLETED FOR ALL VACANCIES?    │
        └─────────────────────────────────┘
                      │ YES
                      ▼
                    END
```

# FIG.20

EP 1 109 411 A1

# FIG. 21

**PROCESSING AT ELECTRONIC STILL CAMERA**

- GENERATE IMAGE DATA — S1
- STORE IMAGE DATA IN IMAGE BUFFER MEMORY — S2
- SHUTTER RELEASE BUTTON PRESSED ? — S3 (NO / YES)
- RECORD IMAGE DATA AS IMAGE FILE IN MEMORY CARD — S4
- END

**PROCESSING AT PERSONAL COMPUTER**

- READ OUT HEADER PORTION OF IMAGE FILE — S5
- "INTERPOLATION REQUEST FLAG" SET ? — S6 (NO / YES)
- READ OUT IMAGE DATA AND STORE IN IMAGE MEMORY — S7
- PERFORM INTERPOLATION PROCESSING — S8
- RECORD INTERPOLATED IMAGE DATA IN MEMORY CARD — S9
- END

EP 1 109 411 A1

## FIG. 22A

STRUCTURE OF IMAGE-CAPTURING SENSOR

| G | R | G | R | G | R | G | R | G | R |
|---|---|---|---|---|---|---|---|---|---|
| B | G | B | G | B | G | B | G | B | G |
| G | R | G | R | G | R | G | R | G | R |
| B | G | B | G | B | G | B | G | B | G |
| G | R | G | R | G | R | G | R | G | R |
| B | G | B | G | B | G | B | G | B | G |
| G | R | G | R | G | R | G | R | G | R |
| B | G | B | G | B | G | B | G | B | G |
| G | R | G | R | G | R | G | R | G | R |

## FIG. 22B

| G |   | G |   | G |   | G |   | G |   |
|---|---|---|---|---|---|---|---|---|---|
|   | G |   | G |   | G |   | G |   | G |
| G |   | G |   | G |   | G |   | G |   |
|   | G |   | G |   | G |   | G |   | G |
| G |   | G |   | G |   | G |   | G |   |
|   | G |   | G |   | G |   | G |   | G |
| G |   | G |   | G |   | G |   | G |   |
|   | G |   | G |   | G |   | G |   | G |
| G |   | G |   | G |   | G |   | G |   |

## INTERNATIONAL SEARCH REPORT

| International application No. |
| --- |
| PCT/JP99/02887 |

**A. CLASSIFICATION OF SUBJECT MATTER**
Int.Cl$^6$ H04N9/07

According to International Patent Classification (IPC) or to both national classification and IPC

**B. FIELDS SEARCHED**

Minimum documentation searched (classification system followed by classification symbols)
Int.Cl$^6$ H04N9/07

Documentation searched other than minimum documentation to the extent that such documents are included in the fields searched
Jitsuyo Shinan Koho 1922–1996 Toroku Jitsuyo Shinan Koho 1994–1999
Kokai Jitsuyo Shinan Koho 1971–1999 Jitsuyo Shinan Toroku Koho 1996–1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP, 07-236147, A (Sanyo Electric Co., Ltd.),<br>5 September, 1995 (05. 09. 95)<br>& US, 5552827, A | 1, 13<br>14<br>2-12, 15-19 |
| Y<br>A | JP, 07-059098, A (Eastman Kodak Co.),<br>3 March, 1995 (03. 03. 95)<br>& US, 5382976, A & EP, 632663, A3 | 14<br>1-13, 15-19 |
| EX<br>EA | JP, 11-177994, A (Sony Corp.),<br>2 July, 1999 (02. 07. 99) (Family: none) | 1, 12<br>2-11, 13-19 |
| PA | JP, 10-294948, A (NEC Corp.),<br>4 November, 1998 (04. 11. 98) (Family: none) | 1-19 |
| A | JP, 10-108209, A (Matsushita Electric Industrial Co., Ltd.),<br>24 April, 1998 (24. 04. 98) (Family: none) | 1-19 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 23 August, 1999 (23. 08. 99) | 7 September, 1999 (07. 09. 99) |

| Name and mailing address of the ISA/<br>Japanese Patent Office | Authorized officer |
| --- | --- |
| Facsimile No. | Telephone No. |

Form PCT/ISA/210 (second sheet) (July 1992)